(19) Europäisches Patentamt
European Patent Office
Office européen des brevets

(11) **EP 4 368 046 A1**

(12) **EUROPEAN PATENT APPLICATION**
published in accordance with Art. 153(4) EPC

(43) Date of publication:
**15.05.2024 Bulletin 2024/20**

(21) Application number: **21949385.5**

(22) Date of filing: **09.07.2021**

(51) International Patent Classification (IPC):
***A24F 40/465*** *(2020.01)* ***A24F 40/53*** *(2020.01)*

(52) Cooperative Patent Classification (CPC):
**A24F 40/465; A24F 40/53**

(86) International application number:
**PCT/JP2021/026033**

(87) International publication number:
**WO 2023/281753 (12.01.2023 Gazette 2023/02)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Japan Tobacco, Inc.**
**Tokyo, 105-6927 (JP)**

(72) Inventors:
- **MIZUGUCHI Kazuma**
  **Tokyo 130-8603 (JP)**
- **FUJITA Hajime**
  **Tokyo 130-8603 (JP)**

(74) Representative: **Hoffmann Eitle**
**Patent- und Rechtsanwälte PartmbB**
**Arabellastraße 30**
**81925 München (DE)**

# (54) POWER SUPPLY UNIT FOR AEROSOL GENERATION DEVICE

(57) This power supply unit 100U comprises: a coil 106 for producing an eddy current in a susceptor 110, which heats an aerosol source 112, by using electric power supplied from a power supply 102; a conversion circuit 132 connected between the coil 106 and the power supply 102, the conversion circuit 132 converting a direct current supplied from the power supply 102 to a pulsating current; an induction heating circuit to which the pulsating current converted by the conversion circuit 132 is supplied and in which the coil 106 is included; a first detection circuit that is capable of detecting information corresponding to the induction current produced using the coil 106; a second detection circuit that is capable of detecting the impedance of the induction heating circuit; and a control unit 118 configured to be capable of controlling the supply of electric power from the power supply 102 to the coil 106 on the basis of the output of the first detection circuit and the output of the second detection circuit.

FIG. 2

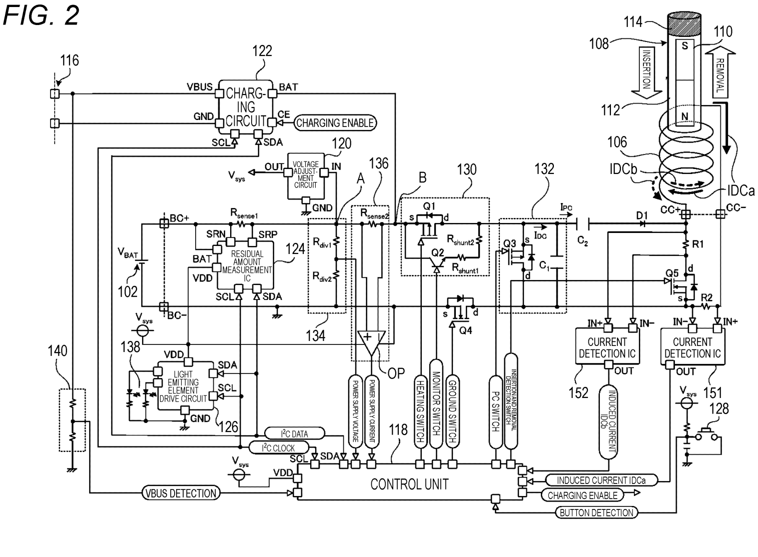


EP 4 368 046 A1

## Description

### TECHNICAL FIELD

The present invention relates to a power supply unit of an aerosol generating device.

### BACKGROUND ART

Conventionally, a device that generates, using an inductor disposed close to an aerosol forming substrate having a susceptor, aerosol from the aerosol forming substrate by heating the susceptor by induction heating has been known (Patent Literatures 1 to 3).

### CITATION LIST

### PATENT LITERATURE

Patent Literature 1: Japanese Patent No. 6623175
Patent Literature 2: Japanese Patent No. 6077145
Patent Literature 3: Japanese Patent No. 6653260

### SUMMARY OF INVENTION

### TECHNICAL PROBLEM

An object of the present invention is to provide an aerosol generating device capable of performing an accurate process corresponding to a state of an aerosol generating article.

### SOLUTION TO PROBLEM

A power supply unit of an aerosol generating device according to an aspect of the present invention includes: a power supply; a coil configured to generate an eddy current to a susceptor configured to heat an aerosol source using power supplied from the power supply; a current conversion circuit connected between the coil and the power supply and configured to convert a direct current supplied from the power supply into a pulsating current or an alternating current; an induction heating circuit to which the pulsating current or the alternating current converted by the current conversion circuit is supplied and which includes the coil; a first detection circuit configured to detect information corresponding to an induced current generated in the coil; a second detection circuit configured to detect an impedance of the induction heating circuit; and a controller configured to control supply of power from the power supply to the coil based on an output of the first detection circuit and an output of the second detection circuit.

### ADVANTAGEOUS EFFECTS OF INVENTION

According to the present invention, it is possible to provide an aerosol generating device capable of performing an accurate process corresponding to a state of an aerosol generating article.

### BRIEF DESCRIPTION OF DRAWINGS

[Fig. 1] Fig. 1 is a schematic diagram illustrating a schematic configuration of an aerosol generating device 100 including a power supply unit 100U according to an embodiment of the present invention.
[Fig. 2] Fig 2 is a diagram illustrating a detailed configuration example of a circuit 104 illustrated in Fig. 1.
[Fig. 3] Fig. 3 is a diagram illustrating an example of waveforms of voltages and currents when a pulsating current supplied to a coil 106 is generated by a conversion circuit 132.
[Fig. 4] Fig. 4 is a schematic diagram for illustrating a principle of detecting a susceptor 110 based on an impedance and a principle of acquiring a temperature of the susceptor 110 based on the impedance.
[Fig. 5] Fig. 5 is a schematic diagram for illustrating induced currents generated in the coil 106 illustrated in Fig. 1.

[Fig. 6] Fig. 6 is a schematic diagram for illustrating operation modes of the power supply unit 100U.
[Fig. 7] Fig. 7 is a diagram illustrating a preferred example of electronic elements added to the circuit 104 illustrated in Fig. 2.
[Fig. 8] Fig. 8 is a diagram illustrating a first modification of the circuit 104 illustrated in Fig. 2.
[Fig. 9] Fig. 9 is a diagram illustrating a second modification of the circuit 104 illustrated in Fig. 2.
[Fig. 10] Fig. 10 is a diagram illustrating a third modification of the circuit 104 illustrated in Fig. 2.
[Fig. 11] Fig. 11 is a diagram illustrating a fourth modification of the circuit 104 illustrated in Fig. 2.
[Fig. 12] Fig. 12 is a diagram illustrating a fifth modification of the circuit 104 illustrated in Fig. 2.
[Fig. 13] Fig. 13 is a flowchart for illustrating an exemplary process 10 executed by a control unit 118 in a SLEEP mode.
[Fig. 14] Fig. 14 is a flowchart for illustrating an exemplary process 20 executed by the control unit 118 in a CHARGE mode.
[Fig. 15] Fig. 15 is a schematic diagram for illustrating the usable number.
[Fig. 16] Fig. 16 is a flowchart for illustrating an exemplary process (main process 30) mainly executed by the control unit 118 in an ACTIVE mode.
[Fig. 17] Fig. 17 is a flowchart for illustrating a sub process 40 and a sub process 50 which are started in step S33 in the main process 30 in the ACTIVE mode.
[Fig. 18] Fig. 18 is a flowchart for illustrating an exemplary process (main process 60) mainly executed by the control unit 118 in a PRE-HEAT mode.
[Fig. 19] Fig. 19 is a flowchart for illustrating an exemplary process 70 executed by the control unit 118 in an INTERVAL mode.
[Fig. 20] Fig. 20 is a flowchart for illustrating a main process 80 executed by the control unit 118 in a HEAT mode.
[Fig. 21] Fig. 21 is a flowchart for illustrating sub processes (sub process 90 and sub process 100S) executed in the main process 60 in the PRE-HEAT mode, the exemplary process 70 in the INTERVAL mode, and the main process 80 in the HEAT mode.
[Fig. 22] Fig. 22 is a flowchart for illustrating a main process 200 in a continuous use determination process in the ACTIVE mode.
[Fig. 23] Fig. 23 is a flowchart for illustrating a sub process 300 executed in the main process 200 of the continuous use determination process illustrated in Fig. 22.
[Fig. 24] Fig. 24 is a flowchart for illustrating a main process 400 in the continuous use determination process in the ACTIVE mode.

DESCRIPTION OF EMBODIMENTS

<Overall Configuration of Aerosol Generating Device>

Fig. 1 is a schematic diagram illustrating a schematic configuration of an aerosol generating device 100 including a power supply unit 100U according to an embodiment of the present invention. It should be noted that Fig. 1 does not illustrate strict arrangements, shapes, dimensions, positional relations, and the like of components.

The aerosol generating device 100 includes the power supply unit 100U and an aerosol forming substrate 108 configured to be at least partially accommodated in the power supply unit 100U.

The power supply unit 100U includes a housing 101, a power supply 102, a circuit 104, a coil 106, and a charging power supply connector 116. The power supply 102 is a chargeable secondary battery, an electric double-layer capacitor, or the like, and is preferably a lithium ion secondary battery. The circuit 104 is electrically connected to the power supply 102. The circuit 104 is configured to supply power to the components of the power supply unit 100U using the power supply 102. A specific configuration of the circuit 104 will be described later. The charging power supply connector 116 is an interface for connecting the power supply unit 100U to a charging power supply (not illustrated) for charging of the power supply 102. The charging power supply connector 116 may be a receptacle for wired charging, a power receiving coil for wireless charging, or a combination thereof. The charging power supply connected to the charging power supply connector 116 is a secondary battery built in an accommodation body (not illustrated) that accommodates the power supply unit 100U, an outlet or a mobile battery connected via a charging cable, or the like. The housing 101 has, for example, a columnar or flat outer shape, and an opening 101A is formed in a part thereof. The coil 106 has, for example, a spirally wound shape, and is embedded in the housing 101 so as to surround a part or a whole of the opening 101A. The coil 106 is electrically connected to the circuit 104, and is used for heating a susceptor 110 by induction heating as to be described later.

The aerosol forming substrate 108 includes the susceptor 110 made of a magnetic material, an aerosol source 112, and a filter 114. The aerosol forming substrate 108 is an elongated columnar article as an example. In the example of Fig. 1, the susceptor 110 is disposed inside the aerosol forming substrate 108 from one end in a longitudinal direction of the aerosol forming substrate 108 to a center thereof in the longitudinal direction. In addition, the filter 114 is disposed at the other end of the aerosol forming substrate 108 in the longitudinal direction. That is, in the aerosol forming substrate 108, the susceptor 110 is eccentrically provided on one end side in the longitudinal direction. In the present embodiment, an N pole of the susceptor 110 is disposed to face a side opposite to a filter 114 side. In other words, in the aerosol forming substrate 108, the N pole of the susceptor 110, an S pole of the susceptor 110, and the filter 114 are arranged in this order in the longitudinal direction.

The aerosol source 112 contains a volatile compound capable of generating an aerosol when heated. The aerosol source 112 may be a solid, a liquid, or may include both of a solid and a liquid. The aerosol source 112 may include, for example, a liquid such as polyhydric alcohol (for example, glycerin or propylene glycol) or water, or a mixed liquid thereof. The aerosol source 112 may contain nicotine. The aerosol source 112 may also contain a cigarette material formed by aggregating particulate cigarette. Alternatively, the aerosol source 112 may contain a non-cigarette-containing material. The aerosol source 112 is disposed close to the susceptor 110, and is provided to surround the susceptor 110, for example.

In the aerosol generating device 100, a state illustrated in Fig. 1 in which the aerosol forming substrate 108 is inserted into the opening 101A from a state in which an end portion on a susceptor 110 side of the aerosol forming substrate 108 faces the opening 101A of the housing 101 is referred to as a normal use state. An insertion direction of the aerosol forming substrate 108 with respect to the opening 101A for obtaining the normal use state is referred to as a forward direction. In addition, in the aerosol generating device 100, it is physically possible to insert the aerosol forming substrate 108 into the opening 101A in a direction opposite to that of the normal use state. That is, the aerosol forming substrate 108 can be inserted into the opening 101A from a state in which an end portion on the filter 114 side of the aerosol forming substrate 108 faces the opening 101A of the housing 101, and the insertion direction of the aerosol forming substrate 108 with respect to the opening 101A in this case is referred to as a backward direction. It is also possible to implement the power supply unit 100U and the aerosol forming substrate 108 such that the aerosol forming substrate 108 cannot be inserted into the opening 101A in a state other than the normal use state, but in this case, the cost increases. Hereinafter, a state in which the aerosol forming substrate 108 is inserted into the opening 101A of the housing 101 is also referred to as an inserted state. In addition, a state in which the aerosol forming substrate 108 is not inserted into the opening 101A of the housing 101 is also referred to as a removed state.

In a state illustrated in Fig. 1 in which the aerosol forming substrate 108 is inserted into the opening 101A in the forward direction, most (preferably all) of the susceptor 110 included in the aerosol forming substrate 108 is surrounded by the coil 106. When power is supplied to the coil 106 in the state illustrated in Fig. 1, an eddy current is generated in the susceptor 110, and the aerosol source 112 close to the susceptor 110 is heated to generate an aerosol. It should be noted that in a state in which the aerosol forming substrate 108 is inserted into the opening 101A in the backward direction, a volume of the susceptor 110 surrounded by the coil 106 (in other words, a length of the aerosol forming substrate 108 in the longitudinal direction) is smaller than in the state in which the aerosol forming substrate 108 is inserted into the opening 101A in the forward direction.

<Circuit Configuration of Power Supply Unit>

Fig 2 is a diagram illustrating a detailed configuration example of the circuit 104 illustrated in Fig. 1. The term "switch" to be described below refers to a semiconductor switching element such as a bipolar transistor and a metal-oxide-semiconductor field effect transistor (MOSFET). One end and the other end of the switch each mean a terminal through which a current flows. In a case of a bipolar transistor, a collector terminal and an emitter terminal constitute the one end and the other end, and in a case of a MOSFET, a drain terminal and a source terminal constitute the one end and the other end. A contactor or a relay may be used as the switch.

The circuit 104 includes the control unit 118 configured to control the components in the power supply unit 100U. The control unit 118 is implemented by, for example, a micro controller unit (MCU) mainly including a processor such as a central processing unit (CPU). The circuit 104 includes a power supply connector (positive-electrode-side power supply connector BC+ and negative-electrode-side power supply connector BC-) electrically connected to the power supply 102, and a coil connector (positive-electrode-side coil connector CC+ and negative-electrode-side coil connector CC-) electrically connected to the coil 106.

One end of a resistor $R_{sense1}$ having a fixed electric resistance value is connected to the positive-electrode-side power supply connector BC+ connected to a positive electrode terminal of the power supply 102. One end of a resistor $R_{sense2}$ having a fixed electric resistance value is connected to the other end of the resistor $R_{sense1}$. One end of a parallel circuit 130 is connected to the other end of the resistor $R_{sense2}$. One end of a capacitor $C_2$ is connected to the other end of the parallel circuit 130. One end of the resistor $R_{sense1}$ may be connected to the negative-electrode-side power supply connector BC-. In this case, the one end of the resistor $R_{sense2}$ is connected to the other end of the resistor $R_{sense1}$ or the positive-electrode-side power supply connector BC+. In addition, the one end of the resistor $R_{sense2}$ may be connected to the negative-electrode-side power supply connector BC-. In this case, the other end of the resistor $R_{sense1}$ is connected to the one end of the parallel circuit 130.

The parallel circuit 130 includes a path (hereinafter, also referred to as a "first circuit") including a switch Q1 implemented by a P-channel MOSFET, and a path (hereinafter, also referred to as a "second circuit") including a switch Q2 implemented by a npn bipolar transistor. The second circuit is a series circuit in which the switch Q2, a resistor $R_{shunt1}$ having a fixed electric resistance value, and a resistor $R_{shunt2}$ having a fixed electric resistance value are connected in series. An emitter terminal of the switch Q2 is connected to one end of the resistor $R_{shunt1}$. One end of the resistor $R_{shunt2}$ is connected to the other end of the resistor $R_{shunt1}$. A collector terminal of the switch Q2 is connected to a source terminal of the switch Q1, and the other end of the resistor $R_{shunt2}$ is connected to a drain terminal of the switch Q1. The switch Q1 and the switch Q2 are controlled to be on or off by the control unit 118. One of the resistor $R_{shunt1}$ and the resistor $R_{shunt2}$ may be omitted.

An anode of a diode D1 is connected to the other end of the capacitor $C_2$. The positive-electrode-side coil connector CC+ connected to one end of the coil 106 is connected to a cathode of the diode D1. One end of a resistor R2 having a fixed electric resistance value is connected to the negative-electrode-side coil connector CC- connected to the other end of the coil 106. A drain terminal of a switch Q4 implemented by an N-channel MOSFET is connected to the other end of the resistor R2. A source terminal of the switch Q4 and the negative-electrode-side power supply connector BC- connected to a negative electrode terminal of the power supply 102 are connected to the ground. The switch Q4 is controlled to be on or off by the control unit 118. The control unit 118 controls ON/OFF of the switch Q4 by applying a ground switch signal (high or low) to a gate terminal of the switch Q4. Specifically, when a ground detection switch signal is high, the switch Q4 is in an ON state, and when the ground switch signal is low, the switch Q4 is in an OFF state. The switch Q4 is controlled to be in the ON state at least in operation modes other than an ERROR mode, a SLEEP mode, and a CHARGE mode to be described later.

One end of a series circuit of a resistor $R_{div1}$ and a resistor $R_{div2}$ each having a fixed electric resistance value is connected to a node A connecting the resistor $R_{sense1}$ and the resistor $R_{sense2}$. The other end of the series circuit is connected to the ground. A node connecting the resistor $R_{div1}$ and the resistor $R_{div2}$ is connected to the control unit 118. The series circuit constitutes a voltage detection circuit 134 that detects a voltage (also referred to as a power supply voltage) of the power supply 102. Specifically, an analog signal obtained by dividing an output voltage of the power supply 102 by the resistor $R_{div1}$ and the resistor $R_{div2}$ is supplied to the control unit 118 by the voltage detection circuit 134.

A non-inverting input terminal of an operational amplifier OP is connected to the one end of the resistor $R_{sense2}$, and an inverting input terminal of the operational amplifier OP is connected to the other end of the resistor $R_{sense2}$. An output terminal of the operational amplifier OP is connected to the control unit 118. The resistor $R_{sense2}$ and the operational amplifier OP constitute a current detection circuit 136 that detects a current (also referred to as a power supply current) flowing from the power supply 102 to the coil 106. The operational amplifier OP may be provided in the control unit 118.

A source terminal of a switch Q3 implemented by a P-channel MOSFET and one end of a capacitor $C_1$ is connected to a line connecting the other end of the parallel circuit 130 and the one end of the capacitor $C_2$ in order from a parallel circuit 130 side. A drain terminal of the switch Q3 and the other end of the capacitor $C_1$ are respectively connected to a line connecting the drain terminal of the switch Q4 and the other end of the resistor R2. The drain terminal of the switch Q3 and the other end of the capacitor $C_1$ may be respectively connected to the ground. The switch Q3 is controlled to be on or off by the control unit 118. The switch Q3 and the capacitor $C_1$ constitute a conversion circuit 132 that converts a direct current (direct current $I_{DC}$) supplied from the power supply 102 into a pulsating current (pulsating current $I_{PC}$).

One end of a resistor R1 having a fixed electric resistance value is connected to a node connecting the cathode of the diode D1 and the positive-electrode-side coil connector CC+. A drain terminal of a switch Q5 implemented by an N-channel MOSFET is connected to the other end of the resistor R1. A source terminal of the switch Q5 is connected to the other end of the resistor R2. The switch Q5 is controlled to be on or off by the control unit 118. The control unit 118 controls ON/OFF of the switch Q5 by applying an insertion and removal detection switch signal (high or low) to a gate terminal of the switch Q5. Specifically, when the insertion and removal detection switch signal is high, the switch Q5 is in an ON state, and when the insertion and removal detection switch signal is low, the switch Q5 is in an OFF state.

The circuit 104 further includes a current detection IC 152 that detects an induced current to be described later flowing through the resistor R1, and a current detection IC 151 that detects an induced current to be described later flowing through the resistor R2. Details of the current detection ICs 151 and 152 will be described later.

The circuit 104 further includes a residual amount measurement integrated circuit (hereinafter, integrated circuit is referred to as an IC) 124. The residual amount measurement IC 124 detects a current flowing through the resistor $R_{sense1}$ when the power supply 102 is charged or discharged, and derives, based on a detected current value, battery information such as a remaining capacity of the power supply 102, a state of charge (SOC) indicating a charging state, and a state of health (SOH) indicating a sound state. A power supply voltage detection terminal BAT of the residual amount measurement IC 124 is connected to a node connecting the positive-electrode-side power supply connector BC+ and the resistor $R_{sense1}$. The residual amount measurement IC 124 can detect the voltage of the power supply 102 using the power supply voltage detection terminal BAT. The residual amount measurement IC 124 is configured to communicate with the control unit 118 through serial communication. By transmitting an $I^2C$ data signal from a communication terminal SDA of the control unit 118 to a communication terminal SDA of the residual amount measurement IC 124, the control unit 118 can acquire battery information and the like stored in the residual amount measurement IC 124 at a timing of transmitting an $I^2C$ clock signal from a communication terminal SCL of the control unit 118 to a communication terminal SCL of the residual amount measurement IC 124. A protocol used for the serial communication between the control unit 118 and the residual amount measurement IC 124 is not limited to an $I^2C$, and a SPI or a UART may be used.

The circuit 104 further includes a charging circuit 122. A charging terminal BAT of the charging circuit 122 is connected to a node B that connects the resistor $R_{sense2}$ and the parallel circuit 130. The charging circuit 122 is an IC that adjusts, in response to a charging enable signal received at a charging enable terminal CE from the control unit 118, a voltage (potential difference between input terminal VBUS and ground terminal GND) supplied from a charging power supply (not illustrated) connected via the charging power supply connector 116 to a voltage suitable for charging the power supply 102. The voltage adjusted by the charging circuit 122 is supplied from the charging terminal BAT of the charging circuit 122. An adjusted current may be supplied from the charging terminal BAT of the charging circuit 122. In a case where the charging power supply connected to the charging power supply connector 116 is the secondary battery built in the accommodation body (not illustrated) that accommodates the power supply unit 100U, the charging circuit 122 may be implemented to be built in the accommodation body instead of the power supply unit 100U.

The circuit 104 further includes a voltage divider circuit 140 including two resistors connected to a node connecting the input terminal VBUS of the charging circuit 122 and a positive electrode side of the charging power supply connector 116. It is preferable that one of end portions of the voltage divider circuit 140 that is not connected to the above-described node is connected to the ground. An output of the voltage divider circuit 140 is connected to the control unit 118. When the charging power supply is connected to the charging power supply connector 116, a VBUS detection signal is input to the control unit 118 via the voltage divider circuit 140. When the charging power supply is connected, the VBUS detection signal becomes a value obtained by dividing a voltage supplied from the charging power supply by the voltage divider circuit 140, and thus the VBUS detection signal becomes a high level. When the charging power supply is not connected, no voltage is supplied to the voltage divider circuit 140, and thus the VBUS detection signal becomes a low level. When the VBUS detection signal becomes a high level, the control unit 118 inputs a charging enable signal of a high level to the charging enable terminal CE of the charging circuit 122 to cause the charging circuit 122 to start charging control of the power supply 102. The charging enable terminal CE has a positive logic, but may have a negative logic. Similarly to the residual amount measurement IC 124, the charging circuit 122 is configured to communicate with the control unit 118 through serial communication. Even in a case where the charging circuit 122 is built in the accommodation body that accommodates the power supply unit 100U, the control unit 118 and the residual amount measurement IC 124 are preferably configured to communicate with the charging circuit 122 through serial communication.

The circuit 104 further includes a voltage adjustment circuit 120. An input terminal IN of the voltage adjustment circuit 120 is connected to the node A. The voltage adjustment circuit 120 is implemented to adjust a voltage $V_{BAT}$ (for example, 3.2 volts to 4.2 volts) of the power supply 102 input to the input terminal IN to generate a system voltage $V_{sys}$ (for example, 3 volts) supplied to the components in the circuit 104 or the power supply unit 100U. As an example, the voltage adjustment circuit 120 is a linear regulator such as a low dropout regulator (LDO). The system voltage $V_{sys}$ generated by the voltage adjustment circuit 120 is supplied to a circuit or the like including the control unit 118, the residual amount measurement IC 124, the operational amplifier OP, the current detection IC 151, the current detection IC 152, a light emitting element drive circuit 126 to be described later, and a button 128 to be described later, as an operating voltage for those.

The circuit 104 further includes a light emitting element 138 such as a light emitting diode (LED), and the light emitting element drive circuit 126 for driving the light emitting element 138. The light emitting element 138 can be used to provide to (notify) the user of various types of information such as a residual amount of the power supply 102 and a state of the power supply unit 100U such as occurrence of an error. The light emitting element drive circuit 126 may store information related to various light emitting modes of the light emitting element 138. Similarly to the residual amount measurement IC 124, the light emitting element drive circuit 126 is configured to communicate with the control unit 118 through serial communication. The control unit 118 transmits an $I^2C$ data signal from the communication terminal SDA thereof to a communication terminal SDA of the light emitting element drive circuit 126 to specify a desired light emitting mode, thereby controlling the light emitting element drive circuit 126 to cause the light emitting element 138 to emit light in a desired mode. A protocol used for the serial communication between the control unit 118 and the light emitting element drive circuit 126 is not limited to the $I^2C$, and a SPI or a UART may be used. The circuit 104 may have mounted thereon at least one of a speaker and a vibrator controlled by the control unit 118 instead of or in addition to the light emitting element 138. The light emitting element 138, the speaker, and the vibrator are used as a notification unit for executing various notifications to the user of the aerosol generating device 100.

The circuit 104 further includes a circuit including the button 128 and a series circuit of a resistor and a capacitor. The system voltage $V_{sys}$ is supplied to one end of the series circuit, and the other end of the series circuit is connected to the ground. The button 128 is connected between the ground and a node connecting the resistor and the capacitor in the series circuit. A button operation detection terminal of the control unit 118 is connected to the node. When the user presses the button 128, the button operation detection terminal of the control unit 118 is connected to the ground via the button 128, whereby a button detection signal of a low level is transmitted to the button operation detection terminal. As a result, the control unit 118 can determine that the button 128 has been pressed, and can execute various processes (for example, a process of notifying the residual amount of the power supply 102 and a process of starting aerosol generation) corresponding to an operation.

<Heating Control and Monitor Control by Control Unit>

The first circuit including the switch Q1 in the parallel circuit 130 is used to heat the susceptor 110. The control unit 118 controls ON/OFF of the switch Q1 by applying a heating switch signal (high or low) to a gate terminal of the switch Q1. Specifically, when the heating switch signal is low, the switch Q1 is in an ON state, and when the heating switch signal is high, the switch Q1 is in an OFF state.

The second circuit including the switch Q2 in the parallel circuit 130 is used to acquire a value related to an electric resistance value or a temperature of the susceptor 110. The value related to the electric resistance value or the temperature is, for example, an impedance or a temperature. The control unit 118 controls ON/OFF of the switch Q2 by applying a monitor switch signal (high or low) to a base terminal of the switch Q2. Specifically, when the monitor switch signal is low, the switch Q2 is in an ON state, and when the monitor switch signal is high, the switch Q2 is in an OFF state.

The control unit 118 switches between the ON state of the switch Q1 and the ON state of the switch Q2 in a state in which the switch Q4 is set to the ON state and the switch Q5 is set to the OFF state, thereby switching between heating control of generating an aerosol by inductively heating the susceptor 110 and monitor control of acquiring the value related to the electric resistance value or the temperature of the susceptor 110.

During the heating control, the control unit 118 sets the switch Q1 to the ON state and the switch Q2 to the OFF state to control ON/OFF of the switch Q3. Accordingly, a high frequency having large power (also referred to as heating power) required to generate an aerosol from the aerosol source 112 can be supplied from the power supply 102 to the coil 106. During the monitor control, the control unit 118 sets the switch Q1 to the OFF state and the switch Q2 to the ON state to control ON/OFF of the switch Q3. In this case, a current flows from the power supply 102 to the second circuit having a sufficiently larger electric resistance value than that of the first circuit. Therefore, during the monitor control, a high frequency having small power (also referred to as non-heating power) required to acquire the value related to the electric resistance value or the temperature of the susceptor 110 can be supplied from the power supply 102 to the coil 106. The value related to the electric resistance value or the temperature of the susceptor 110 that can be acquired by the monitor control is used to control the power supplied to the coil 106 during the heating control.

The switching between the ON state of the switch Q1 and the ON state of the switch Q2 can be executed at any timing. For example, the control unit 118 may switch the ON state of the switch Q1 and the ON state of the switch Q2 at any timing while inhaling by the user is performed.

The control unit 118 controls ON/OFF of the switch Q3 by applying a pulsating current (PC) switch signal (high or low) to a gate terminal of the switch Q3 included in the conversion circuit 132. Specifically, when the PC switch signal is low, the switch Q3 is in an ON state, and when the PC switch signal is high, the switch Q3 is in an OFF state. In Fig. 2, the conversion circuit 132 is disposed between the parallel circuit 130 and the coil 106. As another example, the conversion circuit 132 may be disposed between the parallel circuit 130 and the power supply 102. The pulsating current generated by the conversion circuit 132 is supplied to an induction heating circuit including the capacitor $C_2$, the coil connector, and the coil 106. The induction heating circuit includes the susceptor 110 in the inserted state, and does not include the susceptor 110 in the removed state.

Fig. 3 is a diagram illustrating an example of waveforms of voltages and currents when a pulsating current supplied to the coil 106 is generated by the conversion circuit 132. A voltage $V_1$ illustrated in Fig. 3 indicates a waveform of a voltage applied to the gate terminal of the switch Q1 or the base terminal of the switch Q2. A voltage $V_2$ illustrated in Fig. 3 indicates a waveform of a voltage applied to the gate terminal of the switch Q3. The direct current $I_{DC}$ illustrated in Fig. 3 indicates a direct current $I_{DC}$ generated by switching of the switch Q3. The pulsating current $I_{PC}$ illustrated in Fig. 3 indicates a pulsating current $I_{PC}$ flowing to the coil 106. In Fig. 3, the horizontal axis represents a time t. It should be noted that in order to simplify the description, the voltage applied to the gate terminal of the switch Q1 and the voltage applied to the base terminal of the switch Q2 are represented as the voltage $V_1$ in one graph.

When the voltage $V_1$ becomes low at a time $t_1$, the switch Q1 or the switch Q2 is in the ON state. When the voltage $V_2$ is high, the switch Q3 is in the OFF state, the direct current $I_{DC}$ output from the parallel circuit 130 flows to the capacitor $C_1$, and electric charges are accumulated in the capacitor $C_1$. As a power storage amount of the capacitor $C_1$ increases, the pulsating current $I_{PC}$ starts to increase. When the voltage $V_2$ is switched to low at a time $t_2$, the switch Q3 is in the ON state. In this case, a flow of the direct current $I_{DC}$ stops, and discharging of the electric charges accumulated in the capacitor $C_1$ is started. As the power storage amount of the capacitor $C_1$ decreases, the pulsating current $I_{PC}$ starts to decrease. After a time $t_3$, the same operation is repeated. As a result of the above-mentioned operation, as illustrated in Fig. 3, the pulsating current $I_{PC}$ is generated and flows to the coil 106. The pulsating current is a current whose current value oscillates in a predetermined cycle in a range of 0 amperes or more.

As can be understood from Fig. 3, a frequency f of the pulsating current $I_{PC}$ is controlled by a switching cycle T of the switch Q3 (that is, a cycle of the PC switch signal). In a case where the switch Q1 is in the ON state, the efficiency of an energy supply to the susceptor 110 increases as the frequency f approaches a resonance frequency $f_0$ of a heating RLC series circuit including the susceptor 110, the coil 106, and the capacitor $C_2$.

When the pulsating current generated as described above flows through the coil 106, an alternating magnetic field is generated around the coil 106. The generated alternating magnetic field induces an eddy current in the susceptor 110. A Joule heat (hysteresis loss) is generated between the eddy current and the electric resistance value of the susceptor 110, and the susceptor 110 is heated. As a result, the aerosol source 112 around the susceptor 110 is heated to generate an aerosol.

The voltage detection circuit 134 and the current detection circuit 136 in the circuit 104 are used to measure an impedance Z of a circuit (monitoring RLC series circuit to be described below) on a coil 106 side of the node B. The control unit 118 acquires a voltage value from the voltage detection circuit 134, acquires a current value from the current detection circuit 136, and calculates the impedance Z based on the voltage value and the current value. More specifically, the control unit 118 calculates the impedance Z by dividing an average value or an effective value of acquired voltage values by an average value or an effective value of acquired current values.

In the inserted state, when the switch Q1 is in the OFF state and the switch Q2 is in the ON state, the circuit including the resistor $R_{shunt1}$ and the resistor $R_{shunt2}$ and the susceptor 110, the coil 106, and the capacitor $C_2$ form a monitoring RLC series circuit. In the removed state, when the switch Q1 is in the OFF state and the switch Q2 is in the ON state, the circuit including the resistor $R_{shunt1}$ and the resistor $R_{shunt2}$, the coil 106, and the capacitor $C_2$ form a monitoring RLC series circuit. The monitoring RLC series circuits include the above-described induction heating circuit.

The impedance Z of the monitoring RLC series circuit can be obtained as described above. By subtracting a resistance value of the circuit including the resistance values of the resistor $R_{shunt1}$ and the resistor $R_{shunt2}$ from the obtained impedance Z, in the inserted state, an impedance $Z_x$ (substantially the same as the electric resistance value of the susceptor 110) of the induction heating circuit including the capacitor $C_2$, the coil connector, the coil 106, and the susceptor 110 can be calculated. In addition, in the removed state, an impedance $Z_x$ of the induction heating circuit including the capacitor $C_2$, the coil connector, and the coil 106 and not including the susceptor 110 can be calculated. By checking a magnitude of the impedance $Z_x$, it is possible to distinguish between the inserted state and the removed state, that is, to detect the susceptor 110. Further, in a case where the electric resistance value of the susceptor 110 has temperature dependence, the temperature of the susceptor 110 can be estimated based on the calculated impedance $Z_x$.

<Specific Examples of Susceptor Detection and Susceptor Temperature Acquisition>

Fig. 4 is a schematic diagram for illustrating a principle of detecting the susceptor 110 based on an impedance and a principle of acquiring the temperature of the susceptor 110 based on the impedance.

An equivalent circuit EC1 illustrated in Fig. 4 is an equivalent circuit of the monitoring RLC series circuit in the removed state. "L" illustrated in Fig. 4 indicates a value of the inductance of the monitoring RLC series circuit. "L" is strictly a value obtained by combining inductance components of a plurality of elements included in the monitoring RLC series circuit, and may be equal to a value of an inductance of the coil 106.

"$C_2$" illustrated in Fig. 4 indicates a value of a capacitance of the monitoring RLC series circuit. "Cz" is strictly a value obtained by combining capacitance components of the plurality of elements included in the monitoring RLC series circuit, and may be equal to a value of a capacitance of the capacitor $C_2$.

"$R_{circuit}$" illustrated in Fig. 4 indicates resistance values of elements except the susceptor 110 in the monitoring RLC series circuit. "$R_{circuit}$" is a value obtained by combining resistance components of the plurality of elements included in the monitoring RLC series circuit.

The values of "L", "$C_2$", and "$R_{circuit}$" can be acquired from a specification sheet of electronic elements in advance or measured experimentally in advance and stored in advance in a memory (not illustrated) of the control unit 118 or a memory IC (not illustrated) provided outside the control unit 118. An impedance $Z_0$ of the monitoring RLC series circuit in the equivalent circuit EC1 can be calculated by the following equation.

[Math. 1]

$$Z_0 = \sqrt{R_{circuit}^2 + \left(\omega L - \frac{1}{\omega C_2}\right)^2}$$

Here, ω represents an angular frequency of pulsating current power supplied to the monitoring RLC series circuit. The angular frequency is obtained by calculation of $\omega = 2\pi f$ using the frequency f illustrated in Fig. 3.

An equivalent circuit EC2 illustrated in Fig. 4 is an equivalent circuit of the monitoring RLC series circuit in the inserted state. A difference in the equivalent circuit EC2 from the equivalent circuit EC1 is that a resistance component ($R_{susceptor}$) due to the susceptor 110 included in the aerosol forming substrate 108 exists. An impedance $Z_1$ of the monitoring RLC series circuit in the equivalent circuit EC2 can be calculated by the following equation.

[Math. 2]

$$Z_1 = \sqrt{\left(R_{circuit} + R_{susceptor}\right)^2 + \left(\omega L - \frac{1}{\omega C_2}\right)^2}$$

As described above, the impedance of the monitoring RLC series circuit in the inserted state is larger than the impedance of the monitoring RLC series circuit in the removed state. The impedance $Z_0$ in the removed state and the impedance $Z_1$ in the inserted state are experimentally obtained in advance, and a threshold value set therebetween is stored in advance in the memory (not illustrated) of the control unit 118 or the memory IC (not illustrated) provided outside the control unit 118. As a result, the control unit 118 can determine whether the state is the inserted state, that is, detect the susceptor 110, based on whether the measured impedance Z is larger than the threshold value. Detecting the susceptor 110 can be regarded as detecting the aerosol forming substrate 108.

As described above, the control unit 118 can calculate the impedance Z of the monitoring RLC series circuit as follows based on an effective value $V_{RMS}$ of the voltages and an effective value $I_{RMS}$ of the currents measured by the voltage detection circuit 134 and the current detection circuit 136, respectively.

[Math. 3]

$$Z = \frac{V_{RMS}}{I_{RMS}}$$

When the above-mentioned equation of the impedance $Z_1$ is solved for the $R_{susceptor}$, the following equation is derived.

[Math. 4]

$$Z_1^2 = R_{susceptor}^2 + 2R_{susceptor} \cdot R_{circuit} + R_{circuit}^2 + \left(\omega L - \frac{1}{\omega C}\right)^2$$

$$R_{susceptor}^2 + 2R_{circuit} \cdot R_{susceptor} + R_{circuit}^2 + \left(\omega L - \frac{1}{\omega C}\right)^2 - Z_1^2 = 0$$

$$R_{susceptor} = \frac{-2R_{circuit} \pm \sqrt{4R_{circuit}^2 - 4\left(R_{circuit}^2 + \left(\omega L - \frac{1}{\omega C}\right)^2 - Z_1^2\right)}}{2}$$

$$= \pm\sqrt{Z_1^2 - \left(\omega L - \frac{1}{\omega C}\right)^2} - R_{circuit}$$

Here, when a negative resistance value is excluded and the impedance $Z_1$ is replaced with the impedance Z, the following equation is obtained.

[Math. 5]

$$R_{susceptor} = \sqrt{Z^2 - \left(\omega L - \frac{1}{\omega C}\right)^2} - R_{circuit}$$

Accordingly, by experimentally obtaining a relation between the $R_{susceptor}$ and the temperature of the susceptor 110 in advance and storing the relation in advance in the memory (not illustrated) of the control unit 118, in the inserted state, the temperature of the susceptor 110 can be acquired based on the $R_{susceptor}$ calculated from the impedance Z of the monitoring RLC series circuit by Math. 5.

Equivalent circuits EC3 and EC4 illustrated in Fig. 4 represent equivalent circuits of the monitoring RLC series circuit in a case where the pulsating current power is supplied to the monitoring RLC series circuit at the resonance frequency $f_0$ of the monitoring RLC series circuit (in a case where a switching frequency of the switch Q3 is the resonance frequency $f_0$). The equivalent circuit EC3 represents an equivalent circuit in the removed state. The equivalent circuit EC4 represents an equivalent circuit in the inserted state. The resonance frequency $f_0$ of the monitoring RLC series circuit can be derived as follows.

[Math. 6]

$$f_0 = \frac{1}{2\pi\sqrt{LC_2}}$$

In a case where the pulsating current power is supplied to the monitoring RLC series circuit at the resonance frequency $f_0$, the following relation is satisfied. Therefore, regarding the impedance of the monitoring RLC series circuit shown in Math. 1 and Math. 2, the inductance components and the capacitance components of the monitoring RLC series circuit can be ignored.

[Math. 7]

$$\omega L = \frac{1}{\omega C_2}$$

Accordingly, the impedance $Z_0$ and the impedance $Z_1$ in the case where the switching frequency of the switch Q3 is the resonance frequency $f_0$ are as follows.

[Math. 8]

$$Z_0 = R_{circuit}$$
$$Z_1 = R_{circuit} + R_{susceptor}$$

In the case where the switching frequency of the switch Q3 is the resonance frequency $f_0$, the value $R_{susceptor}$ of the resistance component due to the susceptor 110 in the inserted state can be calculated by the following equation

[Math. 9]

$$R_{susceptor} = Z - R_{circuit}$$

As described above, it is advantageous in terms of ease of calculation to use the resonance frequency $f_0$ of the monitoring RLC series circuit in one or both of a case of detecting the susceptor 110 and a case of obtaining the temperature of the susceptor 110 based on the impedance. Of course, it is also advantageous to use the resonance frequency $f_0$ of the monitoring RLC series circuit in supplying power stored by the power supply 102 to the susceptor 110 with high efficiency and at high speed.

In the circuit 104, the current detection circuit 136 is disposed in a path between the power supply 102 and the coil 106 at a position closer to the coil 106 than a branch point (node A) from the path to the voltage adjustment circuit 120. According to this configuration, the current detection circuit 136 can accurately measure a value of a current supplied to the coil 106 not including a current supplied to the voltage adjustment circuit 120. Accordingly, the electric resistance value and the temperature of the susceptor 110 can be accurately measured or estimated.

The current detection circuit 136 may be disposed in the path between the power supply 102 and the coil 106 at a position closer to the coil 106 than a branch point (node B) from the path to the charging circuit 122. According to this configuration, it is possible to prevent a current supplied from the charging circuit 122 from flowing through the resistor $R_{sense2}$ in the current detection circuit 136 while the power supply 102 is being charged (switches Q1 and Q2 are in the OFF state). Accordingly, it is possible to reduce a possibility that the resistor $R_{sense2}$ fails. In addition, since it is possible to prevent a current from flowing through the operational amplifier OP of the current detection circuit 136 while the power supply 102 is being charged, it is possible to avoid power consumption.

The residual amount measurement IC 124 can measure the voltage of the power supply 102 and the current flowing from the power supply 102 to the coil 106. Therefore, the impedance Z of the monitoring RLC series circuit can be derived based on the voltage and the current measured by the residual amount measurement IC 124. Generally, the residual amount measurement IC 124 is configured to update data at a cycle of one second. Therefore, when the impedance Z is to be calculated using a voltage value and a current value measured by the residual amount measurement IC 124, the impedance Z is calculated in the cycle of one second at the maximum. Accordingly, the temperature of the susceptor 110 is estimated in the cycle of one second at the maximum. Such a cycle can not be said to be sufficiently short to appropriately control heating of the susceptor 110. Therefore, it is desirable not to use the voltage value and the current value measured by the residual amount measurement IC 124 for measurement of the impedance Z. That is, it is preferable that the residual amount measurement IC 124 is not used as the voltage detection circuit 134 and the current detection circuit 136 described above. Therefore, the residual amount measurement IC 124 is not essential in the circuit 104. However, by using the residual amount measurement IC 124, a state of the power supply 102 can be accurately grasped.

<Detection of Induced Current>

The aerosol forming substrate 108 including the susceptor 110 is inserted in an inner side of the coil 106. Even in a power non-supply state in which neither the heating control nor the monitor control is executed and the power is not supplied to the coil 106 from the power supply 102 (for example, the switches Q1 and Q2 are each in the OFF state), an induced current is generated in the coil 106 in a process in which the susceptor 110 approaches the coil 106 (a process of transitioning from the removed state to the inserted state) and a process in which the susceptor 110 separates from the coil 106 (a process of transitioning from the inserted state to the removed state). The induced current will be described with reference to Fig. 5.

Fig. 5 is a schematic diagram for illustrating induced currents generated in the coil 106 illustrated in Fig. 1. A state ST1 indicates a state in which the aerosol forming substrate 108 is inserted into the opening 101A in the forward direction (at the time of forward direction insertion). A state ST2 indicates a state in which the aerosol forming substrate 108 inserted into the opening 101A in the forward direction is removed from the opening 101A (at the time of forward direction removal). A state ST3 indicates a state in which the aerosol forming substrate 108 is inserted into the opening 101A in the backward direction (at the time of backward direction insertion). A state ST4 indicates a state in which the aerosol forming substrate 108 inserted into the opening 101A in the backward direction is removed from the opening 101A (at the time of backward direction removal).

As shown in the state ST1, at the time of forward direction insertion, an induced current IDC1 flowing through the coil 106 from a coil connector CC- side toward a coil connector CC+ side is generated. As shown in the state ST2, at the time of forward direction removal, an induced current IDC2 flowing through the coil 106 in a direction opposite to that of the induced current IDC1 is generated.

As shown in the state ST3, at the time of backward direction insertion, an induced current IDC3 flowing through the coil 106 from the coil connector CC+ side toward the coil connector CC- side is generated. As shown in the state ST4, at the time of backward direction removal, an induced current IDC4 flowing through the coil 106 in a direction opposite to that of the induced current IDC3 is generated. Since the susceptor 110 is eccentrically provided on one end side in the longitudinal direction in the aerosol forming substrate 108, a volume of the susceptor 110 passing through the inner side of the coil 106 is smaller in the state ST3 than that in the state ST1. Therefore, a current value (absolute value) of the induced current IDC3 generated in the state ST3 is smaller than a current value (absolute value) of the induced current IDC1 generated in the state ST1. Similarly, in the state ST4, a volume of the susceptor 110 passing through the inner side of the coil 106 is smaller than that in the state ST2. Therefore, a current value (absolute value) of the induced current IDC4 generated in the state ST4 is smaller than a current value (absolute value) of the induced current IDC2 generated in the state ST2.

Therefore, by detecting the induced currents IDC1, IDC2, IDC3, and IDC4 at a predetermined timing, it is possible to determine whether the aerosol forming substrate 108 is inserted into the opening 101A (detect insertion), determine whether the insertion direction of the aerosol forming substrate 108 inserted into the opening 101A is the forward direction or the backward direction (detect insertion direction), or determine whether the aerosol forming substrate 108 is removed from the opening 101A (detect removal). Hereinafter, the induced current IDC2 and the induced current IDC3 flowing in the same direction are collectively referred to as an induced current IDCa, and the induced current IDC1 and the induced current IDC4 flowing in the same direction are collectively referred to as an induced current IDCb.

In the circuit 104, the induced current IDCa (induced current IDC2 or induced current IDC3) can be detected by the current detection IC 151. In addition, the induced current IDCb (induced current IDC1 or induced current IDC4) can be detected by the current detection IC 152. An induced current that can be generated in the coil 106 can be detected by the current detection ICs 151 and 152 when the switches Q4 and Q5 are each in the ON state in a state in which the power is not supplied from the power supply 102 to the coil 106 (the switches Q1 and Q2 being in the OFF state).

The current detection IC 151 is implemented by, for example, a unidirectional current sense amplifier. The current detection IC 151 includes, as a detector that detects a voltage applied to both ends of the resistor R2, an operational amplifier that amplifies the voltage between both ends of the resistor R2, and a current value of a current flowing through the resistor R2 is output as a measured value based on an output of the operational amplifier. A non-inverting input terminal IN+ of the operational amplifier included in the current detection IC 151 is connected to a terminal on the coil connector CC- side (one end) of the resistor R2. An inverting input terminal IN- of the operational amplifier included in the current detection IC 151 is connected to the other end of the resistor R2. Accordingly, in a case where the induced current IDCa is generated in the coil 106 in the above-mentioned power non-supply state, a current value of a predetermined magnitude based on the induced current IDCa is output from an output terminal OUT of the current detection IC 151. It should be noted that when the current detection IC 151 is implemented as the unidirectional current sense amplifier, the current detection IC 151 cannot detect a current flowing in a direction opposite to that of the induced current IDCa.

The current detection IC 152 is implemented by, for example, a unidirectional current sense amplifier. The current detection IC 152 includes, as a detector that detects a voltage applied to both ends of the resistor R1, an operational amplifier that amplifies the voltage between both ends of the resistor R1, and a current value of a current flowing through the resistor R1 is output as a measured value based on an output of the operational amplifier. A non-inverting input terminal IN+ of the operational amplifier included in the current detection IC 152 is connected to a terminal on the coil connector CC+ side (one end) of the resistor R1. An inverting input terminal IN- of the operational amplifier included in the current detection IC 152 is connected to the other end of the resistor R1. Accordingly, in a case where the induced current IDCb is generated in the coil 106 in the above-mentioned power non-supply state, a current value of a predetermined magnitude based on the induced current IDCb is output from an output terminal OUT of the current detection IC 152. It should be noted that when the current detection IC 152 is implemented as the unidirectional current sense amplifier, the current detection IC 152 cannot detect a current flowing in a direction opposite to that of the induced current IDCb.

<Operation Mode of Power Supply Unit 100U>

Fig. 6 is a schematic diagram for illustrating operation modes of the power supply unit 100U. As illustrated in Fig. 6, the operation modes of the power supply unit 100U include seven modes of the SLEEP mode, the CHARGE mode, an ACTIVE mode, a PRE-HEAT mode, an INTERVAL mode, a HEAT mode, and the ERROR mode.

The SLEEP mode is a mode in which the control unit 118 can execute only a process with low power consumption, such as detection of an operation of the button 128 and management of the power supply 102, to save power.

The ACTIVE mode is a mode in which most of functions excluding supply of power from the power supply 102 to the coil 106 are enabled, and is a mode in which the power consumption is larger than that in the SLEEP mode. When a predetermined operation of the button 128 is detected in a state in which the power supply unit 100U is operated in the SLEEP mode, the control unit 118 switches the operation mode to the ACTIVE mode. When the predetermined operation of the button 128 is detected or a non-operation time of the button 128 reaches a predetermined time in a state in which the power supply unit 100U is operated in the ACTIVE mode, the control unit 118 switches the operation mode to the SLEEP mode.

In the ACTIVE mode, the control unit 118 controls switches of the circuit 104 so as to achieve a circuit state in which an induced current that can be generated in the coil 106 can be detected (hereinafter, referred to as an induced current detection state). Specifically, the control unit 118 controls the switches Q1 and Q2 to be in the OFF state and the switches Q4 and Q5 to be in the ON state. In the induced current detection state, in a case where it is determined that the induced current IDC1 is generated in the coil 106 based on outputs of the current detection ICs 151 and 152, the control unit 118 determines that the aerosol forming substrate 108 is inserted into the opening 101A in the forward direction, and switches the operation mode to the PRE-HEAT mode. In a case where it is determined that the induced current IDC3 is generated in the coil 106 based on the outputs of the current detection ICs 151 and 152, the control unit 118 determines that the aerosol forming substrate 108 is inserted into the opening 101A in the backward direction, and activates the notification unit implemented by the light emitting element 138 and the like to notify the user that the insertion direction of the aerosol forming substrate 108 is backward.

The PRE-HEAT mode is a mode in which the control unit 118 executes the heating control, the monitor control, a temperature acquisition process of the susceptor 110, and the like to heat the susceptor 110 included in the aerosol forming substrate 108 inserted into the opening 101A to a first target temperature or heat the susceptor 110 for a predetermined time. In the PRE-HEAT mode, the control unit 118 sets the switch Q4 to the ON state and the switch Q5 to the OFF state, and controls ON/OFF of the switches Q1, Q2, and Q3 to execute the heating control, the monitor control, and the temperature acquisition process of the susceptor 110. In a state in which the power supply unit 100U is operated in the PRE-HEAT mode, when the temperature of the susceptor 110 reaches the first target temperature, or when the predetermined time elapses, the control unit 118 switches the operation mode to the INTERVAL mode.

The INTERVAL mode is a mode of waiting for the temperature of the susceptor 110 to decrease to a certain level. In the INTERVAL mode, for example, the control unit 118 temporarily stops the heating control, executes the monitor control and the temperature acquisition process of the susceptor 110, and waits until the temperature of the susceptor 110 decreases to a second target temperature lower than the first target temperature. When the temperature of the susceptor 110 decreases to the second target temperature, the control unit 118 switches the operation mode to the HEAT mode.

The HEAT mode is a mode in which the control unit 118 executes the heating control, the monitor control, and the temperature acquisition process of the susceptor 110 to control the temperature of the susceptor 110 included in the aerosol forming substrate 108 inserted into the opening 101A to a predetermined target temperature. When a predetermined heating completion condition is satisfied, the control unit 118 completes the HEAT mode and switches the operation mode to the ACTIVE mode. The heating completion condition is a condition including that a predetermined time has elapsed from a start of the HEAT mode or the number of times of inhaling by the user has reached a predetermined value. The PRE-HEAT mode and the HEAT mode are operation modes in which power is supplied from the power supply 102 to the coil 106 in order to generate a desired aerosol from the aerosol forming substrate 108.

Immediately after the operation mode is switched from the HEAT mode to the ACTIVE mode, the control unit 118 execute a continuous use determination process illustrated in Fig. 6. The continuous use determination process is a process of determining whether the user has an intention of continuously using a new aerosol forming substrate 108 (hereinafter, referred to as continuous use). In a case where it is determined that the user has the intention of continuous use and that power required for consumption of the aerosol source 112 of the new aerosol forming substrate 108 can be supplied from the power supply 102 (a residual amount of power is sufficient), the control unit 118 switches the operation mode from the ACTIVE mode to the PRE-HEAT mode, and in other cases, the control unit 118 switches the operation mode from the ACTIVE mode to the SLEEP mode. The continuous use determination process is not essential and may be omitted.

The CHARGE mode is a mode of executing the charging control of the power supply 102 by power supplied from the charging power supply connected to the charging power supply connector 116. When the charging power supply is connected to the charging power supply connector 116 in a state in which the power supply unit 100U is operated in a mode other than the CHARGE mode and the ERROR mode among the seven modes, the control unit 118 switches the operation mode to the CHARGE mode. When charging of the power supply 102 is completed or the charging power supply connector 116 and the charging power supply are disconnected in a state in which the power supply unit 100U is operated in the CHARGE mode, the control unit 118 switches the operation mode to the ACTIVE mode.

The ERROR mode is a mode in which, in a case where an abnormality (error) such as overdischarge or overcharge of the power supply 102 or overheating of the susceptor 110 occurs in each of the other six operation modes, safety of the circuit 104 is ensured (for example, all switches are controlled to be in the OFF state) and the user is notified by the notification unit. In a case of transition to the ERROR mode, it is necessary to reset the power supply unit 100U or repair or discard the power supply unit 100U.

<Process of Determining State of Aerosol Forming Substrate 108>

In the induced current detection state, the control unit 118 can determine which of the states ST1 to ST4 illustrated in Fig. 5 the state is based on the outputs of the current detection IC 151 and the current detection IC 152.

(Determination of State ST1)

In the induced current detection state, in a case where a current value equal to or greater than a predetermined value is output from the current detection IC 152 out of the current detection IC 151 and the current detection IC 152, and the current value is equal to or greater than a current threshold value, the control unit 118 determines that the aerosol forming substrate 108 (susceptor 110) approaches the opening 101A (coil 106) in the forward direction, and thus the induced current IDC1 is generated in the coil 106, that is, the state is the state ST1.

(Determination of State ST2)

In the induced current detection state, in a case where a current value equal to or greater than the predetermined value is output from the current detection IC 151 out of the current detection IC 151 and the current detection IC 152, and the current value is equal to or greater than the current threshold value, the control unit 118 determines that the aerosol forming substrate 108 (susceptor 110) inserted in the forward direction moves away from the opening 101A (coil 106), and thus the induced current IDC2 is generated in the coil 106, that is, the state is the state ST2.

(Determination of State ST3)

In the induced current detection state, in a case where a current value equal to or greater than the predetermined value is output from the current detection IC 151 out of the current detection IC 151 and the current detection IC 152, and the current value is less than the current threshold value, the control unit 118 determines that the aerosol forming substrate 108 (susceptor 110) approaches the opening 101A (coil 106) in the backward direction, and thus the induced current IDC3 is generated in the coil 106, that is, the state is the state ST3.

(Determination of State ST4)

In the induced current detection state, in a case where a current value equal to or greater than a predetermined value is output from the current detection IC 152 out of the current detection IC 151 and the current detection IC 152, and the current value is less than the current threshold value, the control unit 118 determines that the aerosol forming substrate 108 (susceptor 110) inserted in the backward direction moves away from the opening 101A (coil 106), and thus the induced current IDC4 is generated in the coil 106, that is, the state is the state ST4.

In the induced current detection state, even when an induced current is generated in the coil 106, the induced current is prevented from flowing to the capacitor $C_2$ and the conversion circuit 132 since the diode D1 is present. Therefore, the induced current does not affect the conversion circuit 132, and the durability of the power supply unit 100U can be improved. On the other hand, during the heating control, the pulsating current from the conversion circuit 132 passes through the diode D1, but the pulsating current is not unnecessarily rectified by the diode D1. Therefore, during the heating control, the aerosol source 112 can be appropriately heated by supplying appropriate power from the power supply 102 to the coil 106.

In the configuration of the circuit 104 illustrated in Fig. 2, when the heating control is executed, a current different from the induced current and larger than the induced current flows through the resistor R2. Therefore, it is preferable that the large current is not detected by the current detection IC 151. Fig. 7 is a diagram illustrating a preferred example of electronic components added to the circuit 104 illustrated in Fig. 2. As illustrated in Fig. 7, it is preferable that a load switch 170 and a varistor 171 are added to the circuit 104.

The load switch 170 outputs the system voltage $V_{sys}$ input to the input terminal IN from an output terminal OUT when a high or low ON signal is input to a control terminal ON from the control unit 118. The load switch 170 does not output the system voltage $V_{sys}$ input to the input terminal IN from the output terminal OUT in a case where an OFF signal is input to the control terminal ON from the control unit 118. The output terminal OUT of the load switch 170 is connected to a power supply terminal VDD of the current detection IC 151. The varistor 171 is connected to the ground and a line connecting the output terminal OUT of the current detection IC 151 and the control unit 118.

In the induced current detection state, the control unit 118 inputs the ON signal to the load switch 170 to supply power to the current detection IC 151. In a mode (the PRE-HEAT mode, the INTERVAL mode, and the HEAT mode) in which at least one of the heating control and the monitor control is executed, the control unit 118 stops the power supply to the current detection IC 151 and stops the output of the current detection IC 151 by inputting the OFF signal to the load switch 170. Accordingly, even in a case where the current different from the induced current and larger than the induced current flows through the resistor R2, it is possible to prevent the large signal from being input to the control unit 118.

In addition, in the mode (the PRE-HEAT mode, the INTERVAL mode, and the HEAT mode) in which at least one of the heating control and the monitor control is executed, even when the load switch 170 is fixed to the ON state due to some reason, the output of the current detection IC 151 is limited to a low value by the varistor 171 serving as a protection element. Therefore, even in the case where the current different from the induced current and larger than the induced current flows through the resistor R2, it is possible to prevent the large signal from being input to the control unit 118.

By providing either the load switch 170 or the varistor 171 in the circuit 104 illustrated in Fig. 2, an effect of preventing a large signal from being input from the current detection IC 151 to the control unit 118 can be obtained. In addition, a Zener diode may be used instead of the varistor 171.

<First Modification of Circuit 104>

Fig. 8 is a diagram illustrating a first modification of the circuit 104 illustrated in Fig. 2. The circuit 104 illustrated in Fig. 8 is the same as that illustrated in Fig. 2 except that the resistor R1, the current detection IC 152, and the current detection IC 151 are omitted, the position of the resistor R2 is changed, and a current detection IC 153 is added.

In the circuit 104 illustrated in Fig. 8, the drain terminal of the switch Q5 is connected to the coil connector CC+, and the source terminal of the switch Q5 is connected to one end of the resistor R2. The other end of the resistor R2 is connected to the coil connector CC-.

The current detection IC 153 is implemented by, for example, a bidirectional current sense amplifier. The current detection IC 153 includes, as a detector that detects a voltage applied to both ends of the resistor R2, an operational amplifier that amplifies the voltage between both ends of the resistor R2, and a current value of a current flowing through the resistor R2 is output as a measured value based on an output of the operational amplifier.

In the circuit 104 illustrated in Fig. 8, when the switches Q1, Q2, and Q4 are in the OFF state and the switch Q5 is in the ON state, an induced current detection state is formed. The current detection IC 153 in the present embodiment outputs a positive current value in a case where an inverting input terminal IN- has a higher potential than that of a non-inverting input terminal IN+, and outputs a negative current value in a case where the inverting input terminal IN- has a lower potential than that of the non-inverting input terminal IN+. In the induced current detection state, in the case where the induced current IDCa is generated in the coil 106, a negative current value of a predetermined magnitude based on the induced current IDCa is output from the current detection IC 153, and in the case where the induced current IDCb is generated in the coil 106, a positive current value of a predetermined magnitude based on the induced current IDCb is output from the current detection IC 153.

Therefore, in the induced current detection state, the control unit 118 can determine which of the states ST1 to ST4 illustrated in Fig. 5 the state is based on an output of the current detection IC 153 as to be described below.

(Determination of State ST1)

In the induced current detection state, in a case where a positive current value whose absolute value is equal to or greater than a predetermined value is output from the current detection IC 153, and the absolute value is equal to or greater than a current threshold value, the control unit 118 determines that the aerosol forming substrate 108 (susceptor 110) approaches the opening 101A (coil 106) in the forward direction, and thus the induced current IDC1 is generated in the coil 106, that is, the state is the state ST1.

(Determination of State ST2)

In the induced current detection state, in a case where a negative current value whose absolute value is equal to or greater than a predetermined value is output from the current detection IC 153, and the absolute value is equal to or greater than the current threshold value, the control unit 118 determines that the aerosol forming substrate 108 (susceptor 110) inserted in the forward direction moves away from the opening 101A (coil 106), and thus the induced current IDC2 is generated in the coil 106, that is, the state is the state ST2.

(Determination of State ST3)

In the induced current detection state, in a case where a negative current value whose absolute value is equal to or greater than the predetermined value is output from the current detection IC 153, and the absolute value is less than the current threshold value, the control unit 118 determines that the aerosol forming substrate 108 (susceptor 110) approaches the opening 101A (coil 106) in the backward direction, and thus the induced current IDC3 is generated in the coil 106, that is, the state is the state ST3.

(Determination of State ST4)

In the induced current detection state, in a case where a positive current value whose absolute value is equal to or greater than the predetermined value is output from the current detection IC 153, and the current value is less than the current threshold value, the control unit 118 determines that the aerosol forming substrate 108 (susceptor 110) inserted in the backward direction moves away from the opening 101A (coil 106), and thus the induced current IDC4 is generated in the coil 106, that is, the state is the state ST4.

<Second Modification of Circuit 104>

Fig. 9 is a diagram illustrating a second modification of the circuit 104 illustrated in Fig. 2. The circuit 104 illustrated in Fig. 9 is the same as that illustrated in Fig. 8 except that the current detection IC 153 is changed to an operational amplifier 161, and a rail splitter circuit 160 including a resistor 591, a resistor 592, a capacitor 593, and a capacitor 594 is added.

The rail splitter circuit 160 has an input terminal T1 to which the system voltage $V_{sys}$ generated by the voltage adjustment circuit 120 is input, and two output terminals T2 and T3. The rail splitter circuit 160 generates two potentials (a positive potential of ($V_{sys}/2$) and a negative potential of ($-V_{sys}/2$)) having the same absolute value and different positive and negative values from the input system voltage $V_{sys}$. The positive potential ($V_{sys}/2$) output from the output terminal T3 of the rail splitter circuit 160 is input to a positive power supply terminal of the operational amplifier 161, and the negative potential ($-V_{sys}/2$) output from the output terminal T2 of the rail splitter circuit 160 is input to a negative power supply terminal of the operational amplifier 161.

A non-inverting input terminal of the operational amplifier 161 is connected to a terminal (one end) on a switch Q5 side of the resistor R2. An inverting input terminal of the operational amplifier 161 is connected to the other end of the resistor R2. The operational amplifier 161 amplifies the voltage between both ends of the resistor R2 and outputs the amplified voltage. As described above, since the negative potential is input to the negative power supply terminal of the operational amplifier 161, the operational amplifier 161 can output not only a positive voltage value but also a negative voltage value.

In the circuit 104 illustrated in Fig. 9, when the switches Q1, Q2, and Q4 are in the OFF state and the switch Q5 is in the ON state, an induced current detection state is formed. In the induced current detection state, in the case where the induced current IDCa is generated in the coil 106, a negative voltage value of a predetermined magnitude based on the induced current IDCa is output from the operational amplifier 161, and in the case where the induced current IDCb is generated in the coil 106, a positive voltage value of a predetermined magnitude based on the induced current IDCb is output from the operational amplifier 161.

Therefore, in the induced current detection state, the control unit 118 can determine which of the states ST1 to ST4 illustrated in Fig. 5 the state is based on an output of the operational amplifier 161 as to be described below.

(Determination of State ST1)

In the induced current detection state, in a case where a positive voltage value whose absolute value is equal to or greater than a predetermined value is output from the operational amplifier 161, and the absolute value is equal to or greater than a voltage threshold value, the control unit 118 determines that the aerosol forming substrate 108 (susceptor 110) approaches the opening 101A (coil 106) in the forward direction, and thus the induced current IDC1 is generated in the coil 106, that is, the state is the state ST1.

(Determination of State ST2)

In the induced current detection state, in a case where a negative voltage value whose absolute value is equal to or greater than a predetermined value is output from the operational amplifier 161, and the absolute value is equal to or greater than the voltage threshold value, the control unit 118 determines that the aerosol forming substrate 108 (susceptor 110) inserted in the forward direction moves away from the opening 101A (coil 106), and thus the induced current IDC2 is generated in the coil 106, that is, the state is the state ST2.

(Determination of State ST3)

In the induced current detection state, in a case where a negative voltage value whose absolute value is equal to or greater than the predetermined value is output from the operational amplifier 161, and the absolute value is less than the voltage threshold value, the control unit 118 determines that the aerosol forming substrate 108 (susceptor 110) approaches the opening 101A (coil 106) in the backward direction, and thus the induced current IDC3 is generated in the coil 106, that is, the state is the state ST3.

(Determination of State ST4)

In the induced current detection state, in a case where a positive voltage value whose absolute value is equal to or greater than the predetermined value is output from the operational amplifier 161, and the absolute value is less than the voltage threshold value, the control unit 118 determines that the aerosol forming substrate 108 (susceptor 110) inserted in the backward direction moves away from the opening 101A (coil 106), and thus the induced current IDC4 is generated in the coil 106, that is, the state is the state ST4.

<Third Modification of Circuit 104>

Fig. 10 is a diagram illustrating a third modification of the circuit 104 illustrated in Fig. 2. The circuit 104 illustrated in Fig. 10 is the same as that illustrated in Fig. 2 except that the conversion circuit 132 is changed to an inverter 162 that converts a direct current into an alternating current, the resistor R1, the current detection IC 152, and the current detection IC 151 are omitted, and a resistor R3, a resistor R4, a current detection IC 154, and a current detection IC 155 are added.

The inverter 162 includes switches Q5 and Q7 implemented by P-channel MOSFETs, switches Q6 and Q8 implemented by N-channel MOSFETs, a gate driver 162b that controls gate voltages of the switches Q5 to Q8, a processor (Logic) 162c that controls the gate driver 162b, and an LDO 162a that supplies power to the gate driver 162b and the processor 162c. A positive-electrode-side input terminal IN+ of the inverter 162 is connected to the other end of the parallel circuit 130. A negative-electrode-side input terminal IN- of the inverter 162 is connected to the drain terminal of the switch Q4. The LDO 162a supplies a voltage obtained by adjusting a voltage input to the positive-electrode-side input terminal IN+ to the gate driver 162b and the processor 162c. The processor 162c is configured to communicate with the control unit 118 through serial communication, and is controlled by the control unit 118.

The source terminal of the switch Q5 is connected to the positive-electrode-side input terminal IN+, and the drain terminal of the switch Q5 is connected to a drain terminal of the switch Q6. A source terminal of the switch Q6 is connected to the negative-electrode-side input terminal IN-. A node connecting the switch Q5 and the switch Q6 is connected to an output terminal OUT+.

A source terminal of the switch Q7 is connected to the positive-electrode-side input terminal IN+, and a drain terminal of the switch Q7 is connected to a drain terminal of the switch Q8. A source terminal of the switch Q8 is connected to the negative-electrode-side input terminal IN-. A node connecting the switch Q7 and the switch Q8 is connected to an output terminal OUT-.

The resistor R3 has one end connected to the one end of the capacitor $C_2$ and the other end connected to the output terminal OUT+. The resistor R4 has one end connected to the coil connector CC- and the other end connected to the output terminal OUT-.

The current detection IC 155 is implemented by, for example, a unidirectional current sense amplifier. The current detection IC 155 includes, as a detector that detects a voltage applied to both ends of the resistor R3, an operational amplifier that amplifies the voltage between both ends of the resistor R3, and a current value of a current flowing through the resistor R3 is output as a measured value based on an output of the operational amplifier. A non-inverting input terminal IN+ of the operational amplifier included in the current detection IC 155 is connected to a terminal of the resistor R3 on a capacitor $C_2$ side. An inverting input terminal IN- of the operational amplifier included in the current detection IC 155 is connected to a terminal of the resistor R3 on an output terminal OUT+ side.

The current detection IC 154 is implemented by, for example, a unidirectional current sense amplifier. The current detection IC 154 includes, as a detector that detects a voltage applied to both ends of the resistor R4, an operational amplifier that amplifies the voltage between both ends of the resistor R4, and a current value of a current flowing through the resistor R4 is output as a measured value based on an output of the operational amplifier. A non-inverting input terminal IN+ of the operational amplifier included in the current detection IC 154 is connected to a terminal on the coil connector CC- side of the resistor R4. An inverting input terminal IN- of the operational amplifier included in the current detection IC 154 is connected to a terminal of the resistor R4 on an output terminal OUT- side.

During the heating control, the control unit 118 alternately executes a first switch control and a second switch control. In the first switch control, the switches Q1 and Q4 are set to the ON state and the switch Q2 is set to the OFF state, the ON states of the switches Q5 and Q8 are controlled by a pulse width modulation (PWM) control, and the switches Q6 and Q7 are set to the OFF state, and in the second switch control, the switches Q5 and Q8 are set to the OFF state and the ON states of the switches Q6 and Q7 are controlled by the PWM control. Accordingly, a direct current supplied from the power supply 102 is converted into an alternating current and the alternating current is supplied to the coil 106.

During the monitor control, the control unit 118 sets the switches Q2 and Q4 to the ON state and sets the switch Q1 to the OFF state, and alternately executes the above-mentioned first switch control and second switch control. Accordingly, a direct current supplied from the power supply 102 is converted into an alternating current and the alternating current is supplied to the coil 106.

In the circuit 104 illustrated in Fig. 10, the control unit 118 creates an induced current detection state by setting the switches Q1 and Q2 to the OFF state, setting the switch Q4 to the ON state, and setting the switches Q6 and Q8 to the ON state. In the induced current detection state, in the case where the induced current IDCa is generated in the coil 106, a current value of a predetermined magnitude based on the induced current IDCa is output from the current detection IC 154, and in a case where the induced current IDCb is generated in the coil 106, a current value of a predetermined magnitude based on the induced current IDCb is output from the current detection IC 155.

Therefore, in the induced current detection state, the control unit 118 can determine which of the states ST1 to ST4 illustrated in Fig. 5 the state is based on outputs of the current detection ICs 154 and 155 as to be described below.

(Determination of State ST1)

In the induced current detection state, in a case where a current value whose absolute value is equal to or greater than a predetermined value is output from the current detection IC 155, and the absolute value is equal to or greater than a current threshold value, the control unit 118 determines that the aerosol forming substrate 108 (susceptor 110) approaches the opening 101A (coil 106) in the forward direction, and thus the induced current IDC1 is generated in the coil 106, that is, the state is the state ST1.

(Determination of State ST2)

In the induced current detection state, in a case where a current value whose absolute value is equal to or greater than a predetermined value is output from the current detection IC 154, and the absolute value is equal to or greater than the current threshold value, the control unit 118 determines that the aerosol forming substrate 108 (susceptor 110) inserted in the forward direction moves away from the opening 101A (coil 106), and thus the induced current IDC2 is generated in the coil 106, that is, the state is the state ST2.

(Determination of State ST3)

In the induced current detection state, in a case where a current value whose absolute value is equal to or greater than the predetermined value is output from the current detection IC 154, and the absolute value is less than the current threshold value, the control unit 118 determines that the aerosol forming substrate 108 (susceptor 110) approaches the opening 101A (coil 106) in the backward direction, and thus the induced current IDC3 is generated in the coil 106, that is, the state is the state ST3.

(Determination of State ST4)

In the induced current detection state, in a case where a current value whose absolute value is equal to or greater than the predetermined value is output from the current detection IC 155, and the current value is less than the current threshold value, the control unit 118 determines that the aerosol forming substrate 108 (susceptor 110) inserted in the backward direction moves away from the opening 101A (coil 106), and thus the induced current IDC4 is generated in the coil 106, that is, the state is the state ST4.

In the circuit 104 illustrated in Fig. 10, when the heating control is executed, a current different from the induced current and larger than the induced current flows through the resistors R3 and R4. Therefore, it is preferable that the large current is not detected by the current detection ICs 154 and 155. Specifically, similarly to the example illustrated in Fig. 7, it is preferable to add at least one of a load switch that controls supply of power to each of the current detection ICs 154 and 155 and a varistor (or Zener diode) connected to an output terminal OUT of each of the current detection ICs 154 and 155.

In the circuit 104 illustrated in Fig. 10, it is preferable that the induced current generated in the coil 106 is not input to the inverter 162 in the induced current detection state. For example, a node connecting an output terminal OUT+ of the inverter 162 and the resistor R3 is connected to the ground by a first switch, and a node connecting an output terminal OUT- of the inverter 162 and the resistor R4 is connected to the ground by a second switch. The control unit 118 sets the first switch and the second switch to an ON state in the induced current detection state, and sets the first switch and the second switch to an OFF state during the heating control and the monitor control. As a result, a limiting circuit including the first switch and the second switch can prevent the induced current from being input to the inverter 162.

In the circuits 104 illustrated in Figs. 2, 8, 9, and 10 described above, by the current detection IC 151, the current detection IC 152, the current detection IC 153, the current detection IC 154, the current detection IC 155, the operational amplifier 161, and the like, a direction of the induced current flowing through the coil 106, that is, the induced current IDCa and the induced current IDCb can be distinguished and detected. However, even when the induced current IDCa and the induced current IDCb cannot be distinguished and detected, it is possible to determine the state of the aerosol forming substrate 108. Hereinafter, a fourth modification and a fifth modification of the circuit 104 will be described.

<Fourth Modification of Circuit 104>

Fig. 11 is a diagram illustrating a fourth modification of the circuit 104 illustrated in Fig. 2. The circuit 104 illustrated in Fig. 11 is the same as that illustrated in Fig. 2 except that the resistor R1, the current detection IC 152, and the current detection IC 151 are omitted, the position of the resistor R2 is changed, and a current detection IC 156 is added.

In the circuit 104 illustrated in Fig. 11, the drain terminal of the switch Q5 is connected to a coil connector CC+, and the source terminal of the switch Q5 is connected to the coil connector CC-. In addition, the resistor R2 has one end connected to the source terminal of the switch Q5 and the other end connected to the drain terminal of the switch Q4. In the circuit 104 illustrated in Fig. 11, the control unit 118 creates the induced current detection state by setting the switches Q1 and Q2 to the OFF state and setting the switches Q4 and Q5 to the ON state.

The current detection IC 156 is implemented by, for example, a unidirectional current sense amplifier. The current detection IC 156 includes, as a detector that detects a voltage applied to both ends of the resistor R2, an operational amplifier that amplifies the voltage between both ends of the resistor R2, and a current value of a current flowing through the resistor R2 is output as a measured value based on an output of the operational amplifier. A non-inverting input terminal IN+ of the operational amplifier included in the current detection IC 156 is connected to the terminal on a switch Q5 side of the resistor R2. An inverting input terminal IN- of the operational amplifier included in the current detection IC 156 is connected to a terminal on a switch Q4 side of the resistor R2.

Accordingly, when the induced current IDCa or the induced current IDCb is generated in the coil 106 in the induced current detection state, a current value of a predetermined magnitude is output from an output terminal OUT of the current detection IC 156. In the circuit 104 illustrated in Fig. 11, the induced current is detected only by a single current detection IC 156 implemented by a unidirectional sense amplifier. An output of the current detection IC 156 is a current value of the same sign except for the magnitude, whether it is the induced current IDCa or the induced current IDCb. As described above, the current detection IC 156 cannot output information that distinguishes the direction of the induced current generated in the coil 106.

In the circuit 104 illustrated in Fig. 11, when the heating control is executed, a current different from the induced current and larger than the induced current flows through the resistor R2. Therefore, it is preferable that the large current is not detected by the current detection IC 156. Specifically, similarly to the example illustrated in Fig. 7, it is preferable to add at least one of the load switch that controls the power supply to the current detection IC 156 and the varistor (or Zener diode) connected to the output terminal OUT of the current detection IC 156.

The control unit 118 determines which of the states ST1 to ST4 the state is based on the output of the current detection IC 156 as to be described below.

(Determination of State ST1)

In the ACTIVE mode and the induced current detection state, in a case where a current value equal to or greater than a predetermined value is output from the current detection IC 156, and the current value is equal to or greater than a current threshold value, the control unit 118 determines that the aerosol forming substrate 108 (susceptor 110) approaches the opening 101A (coil 106) in the forward direction, and thus the induced current IDC1 is generated in the coil 106, that is, the state is the state ST1.

(Determination of State ST2)

Immediately after completion of the HEAT mode and in the induced current detection state, in a case where a current value equal to or greater than the predetermined value is output from the current detection IC 156, and the current value is equal to or greater than the current threshold value, the control unit 118 determines that the aerosol forming substrate 108 (susceptor 110) inserted in the forward direction moves away from the opening 101A (coil 106), and thus the induced current IDC2 is generated in the coil 106, that is, the state is the state ST2.

(Determination of State ST3)

In the ACTIVE mode and the induced current detection state, in a case where a current value equal to or greater than the predetermined value is output from the current detection IC 156, and the current value is less than the current threshold value, the control unit 118 determines that the aerosol forming substrate 108 (susceptor 110) approaches the opening 101A (coil 106) in the backward direction, and thus the induced current IDC3 is generated in the coil 106, that is, the state is the state ST3.

(Determination of State ST4)

Immediately after the completion of the HEAT mode and in the induced current detection state, in a case where a current value equal to or greater than the predetermined value is output from the current detection IC 156, and the current value is less than the current threshold value, the control unit 118 determines that the aerosol forming substrate 108 (susceptor 110) inserted in the backward direction moves away from the opening 101A (coil 106), and thus the induced current IDC4 is generated in the coil 106, that is, the state is the state ST4.

In the present embodiment, the control unit 118 determines the state from the state ST1 to the state ST4. Alternatively, the control unit 118 may not distinguish the state ST1 from the state ST3. That is, in the ACTIVE mode and the induced current detection state, when a current value equal to or greater than the predetermined value is output from the current detection IC 156, the control unit 118 may determine that the state is the state ST1 or the state ST3. In a case where it is determined that the state is the state ST1 or the state ST3, the control unit 118 may switch the operation mode to the PRE-HEAT mode. Similarly, immediately after the completion of the HEAT mode and in the induced current detection state, when a current value equal to or greater than the predetermined value is output from the current detection IC 156, the control unit 118 may determine that the state is the state ST2 or the state ST4.

<Fifth Modification of Circuit 104>

Fig. 12 is a diagram illustrating a fifth modification of the circuit 104 illustrated in Fig. 2. The circuit 104 illustrated in Fig. 12 is the same as that illustrated in Fig. 9 except that the rail splitter circuit 160 is omitted and the operational amplifier 161 is changed to an operational amplifier 162.

The operational amplifier 162 in the circuit 104 illustrated in Fig. 12 has a configuration in which the system voltage $V_{sys}$ is supplied to the positive power supply terminal and the negative power supply terminal is connected to the ground in the operational amplifier 161 illustrated in Fig. 9.

In the circuit 104 illustrated in Fig. 12, the control unit 118 creates the induced current detection state by controlling the switches Q1, Q2, and Q4 to be in the OFF state and the switch Q5 to be in the ON state. When the induced current IDCb is generated in the induced current detection state, a voltage value equal to or greater than a predetermined value corresponding to the induced current IDCb is output from the operational amplifier 161. On the other hand, when the induced current IDCa is generated in the induced current detection state, a voltage value equal to or greater than the predetermined value is not output from the operational amplifier 161. As described above, an output of the operational amplifier 162 has a voltage value equal to or greater than the predetermined value only when the induced current IDCb is generated. That is, the operational amplifier 162 cannot output information that distinguishes the direction of the induced current generated in the coil 106.

In the circuit 104 illustrated in Fig. 12, the control unit 118 creates the induced current detection state in the ACTIVE mode, and in this induced current detection state, in a case where a voltage equal to or greater than a predetermined value and equal to or greater than a voltage threshold value is output from the operational amplifier 161, the control unit 118 determines that the aerosol forming substrate 108 (susceptor 110) approaches the opening 101A (coil 106) in the forward direction, and thus the induced current IDC1 is generated in the coil 106, that is, the state is the state ST1, and switches the operation mode to the PRE-HEAT mode.

In the circuit 104 illustrated in Fig. 12, the control unit 118 cannot determine, based on the induced current, that the aerosol forming substrate 108 is inserted into the opening 101A in the backward direction or that the aerosol forming substrate 108 inserted into the opening 101A in the forward direction is removed. However, the control unit 118 can determine that the aerosol forming substrate 108 is inserted into the opening 101A in the forward direction.

As described above, with the configurations of the circuits 104 illustrated in Figs. 2 and 8 to 11, the control unit 118 can execute insertion detection of the aerosol forming substrate 108, removal detection of the aerosol forming substrate 108, and identification of the insertion direction of the aerosol forming substrate 108. For example, when the aerosol generating device 100 is configured to heat the aerosol forming substrate 108 to inhale the aerosol regardless of whether the aerosol forming substrate 108 is inserted in the forward direction or the aerosol forming substrate 108 is inserted in the backward direction, it is not necessary to identify the insertion direction. Therefore, in such a configuration, it is sufficient for the control unit 118 to execute only the insertion detection and the removal detection of the aerosol forming substrate 108. That is, configurations of the control unit 118, the power supply unit 100U, and the circuit 104 can be simplified.

<Operation of Control Unit 118>

Hereinafter, operations of the control unit 118 in the circuits 104 illustrated in each of Fig. 2 and Figs. 8 to 12 will be described. The current detection ICs 151, 152, 153, 154, 155, and 156 and the operational amplifiers 161 and 162, which can detect the induced current or the voltage value corresponding to the induced current, are collectively referred to as an induced current detection IC hereinafter.

Fig. 13 is a flowchart for illustrating an exemplary process 10 executed by the control unit 118 in the SLEEP mode. First, the control unit 118 determines whether the charging power supply is connected to the charging power supply connector 116 (step S11). The determination is executed based on, for example, the VBUS detection signal described above. When the charging power supply is connected to the charging power supply connector 116 (YES in step S11), the control unit 118 switches the operation mode to the CHARGE mode. When the charging power supply is not connected to the charging power supply connector 116 (NO in step S11), the control unit 118 determines whether a predetermined operation has been performed on the button 128 (step S12). An example of the predetermined operation is long pressing, short pressing, or continuous depressing of the button 128. When the predetermined operation has been performed on the button 128 (YES in step S12), the control unit 118 switches the operation mode to the ACTIVE mode. When the predetermined operation has not been performed on the button 128 (NO in step S12), the control unit 118 returns the process to step S11.

Fig. 14 is a flowchart for illustrating an exemplary process 20 executed by the control unit 118 in the CHARGE mode. First, the control unit 118 causes the charging circuit 122 to start the charging of the power supply 102 (step S21). This process is executed by, for example, the control unit 118 inputting a charging enable signal having a predetermined level to the charging enable terminal CE of the charging circuit 122. Next, the control unit 118 determines whether the charging power supply has been removed from the charging power supply connector 116 (step S22). The determination is executed based on, for example, the VBUS detection signal described above. When the charging power supply has not been removed from the charging power supply connector 116 (NO in step S22), the control unit 118 returns the process to step S22. When the charging power supply has been removed from the charging power supply connector 116 (YES in step S22), the control unit 118 causes the charging circuit 122 to complete the charging of the power supply 102 (step S23). The charging circuit 122 may complete the charging of the power supply 102 based on a charging current or a charging voltage of the power supply 102 acquired from serial communication with the residual amount measurement IC 124 or an input to the charging terminal BAT without waiting for a command from the control unit 118. After step S23, the control unit 118 sets the usable number of aerosol forming substrates 108 based on a charge level of the power supply 102 (an amount of power remaining in the power supply 102) (step S24). Here, it is assumed that the aerosol forming substrate 108 has a stick shape, but the shape of the aerosol forming substrate 108 is not limited thereto. Accordingly, it should be noted that the "usable number" can be generalized to the "number of available components". Hereinafter, the usable number will be described with reference to Fig. 15.

Fig. 15 is a schematic diagram for illustrating the usable number. A capacity 610 corresponds to the power supply 102 when not yet used (hereinafter, referred to as "at the time of non-use"), and an area thereof indicates a full charge capacity at the time of non-use. The power supply 102 being not yet used means that the number of discharges after the power supply 102 is manufactured is zero or equal to or less than a predetermined number of discharges. An example of the full charge capacity of the power supply 102 at the time of non-use is about 220 mAh. A capacity 620 corresponds to the power supply 102 when discharging and charging are repeated and deterioration progresses to a certain extent (hereinafter, referred to as "at the time of deterioration"), and an area thereof indicates a full charge capacity at the time of deterioration. As is clear from Fig. 15, the full charge capacity of the power supply 102 at the time of non-use is larger than the full charge capacity of the power supply 102 at the time of deterioration.

An amount of power 630 corresponds to an amount of power (energy) required to consume one aerosol forming substrate 108, and an area thereof indicates a corresponding amount of power. The four amounts of power 630 illustrated in Fig. 15 all have the same area, and the corresponding amounts of power thereof are also substantially the same. An example of the power 630 required to consume one aerosol forming substrate 108 is about 70 mAh. As an example, when the heating completion condition is satisfied after the operation mode is shifted to the HEAT mode, it can be considered that one aerosol forming substrate 108 is consumed.

Each of an amount of power 640 and an amount of power 650 corresponds to a charge level of the power supply 102 after two aerosol forming substrates 108 are consumed (hereinafter, referred to as a "surplus amount of power"), and an area thereof indicates a corresponding amount of power. As is clear from Fig. 15, the surplus amount of power at the time of non-use is larger than the surplus amount of power at the time of deterioration.

A voltage 660 indicates an output voltage of the power supply 102 at full charge, and an example thereof is about 3.64 V. A voltage 670 indicates a discharge termination voltage of the power supply 102, and an example thereof is about 2.40 V. The output voltage at full charge and the discharge termination voltage of the power supply 102 are basically constant regardless of deterioration of the power supply 102, that is, regardless of a state of health (SOH).

It is preferable that the power supply 102 is not used until the voltage reaches the discharge termination voltage, in other words, until the charge level of the power supply 102 becomes zero. This is because in a case where the voltage of the power supply 102 becomes equal to or lower than the discharge termination voltage or in a case where the charge level of the power supply 102 becomes zero, the deterioration of the power supply 102 rapidly progresses. In addition, as the voltage of the power supply 102 comes close to the discharge termination voltage, the deterioration of the power supply 102 progresses.

In addition, as described above, when the discharging and the charging are repeated, the full charge capacity of the power supply 102 decreases, and the surplus amount of power after a predetermined number ("2" in Fig. 15) of aerosol forming substrates 108 are consumed is smaller at the time of deterioration than at the time of non-use.

Therefore, it is preferable that the control unit 118 set the usable number such that the power supply 102 is not used until the voltage reaches the discharge termination voltage or the vicinity thereof, in other words, until the charge level of the power supply 102 becomes zero or the vicinity thereof, in consideration of the deterioration of the power supply 102. That is, the usable number can be set as follows, for example.

$$n = \mathrm{int}((e-S)/C)$$

Here, "n" represents the usable number, "e" represents the charge level (the unit is, for example, mAh) of the power supply 102, "S" represents a parameter (the unit is, for example, mAh) for giving a margin to the surplus amount of power at the time of deterioration of the power supply 102, "C" represents the amount of power (the unit is, for example, mAh) required for consuming one aerosol forming substrate 108, and "int()" represents a function that rounds down numbers after a decimal point in the (). "e" is a variable and can be acquired by the control unit 118 communicating with the residual amount measurement IC 124. In addition, "S" and "C" are constants, and can be experimentally obtained in advance and stored in advance in the memory (not illustrated) of the control unit 118.

Returning to Fig. 14, the control unit 118 switches the operation mode to the ACTIVE mode after step S24. Step S22 in Fig. 14 may be replaced with a process in which the control unit 118 determines whether the charging of the power supply 102 by the charging circuit 122 is completed.

Fig. 16 is a flowchart for illustrating an exemplary process (main process 30) mainly executed by the control unit 118 in the ACTIVE mode. First, the control unit 118 controls the switches of the circuit 104 to create the induced current detection state (step S30). The creation of the induced current detection state in each of the circuits 104 in Fig. 2 and the modifications thereof is as described above. In a case where the load switch 170 illustrated in Fig. 7 is added to each of the circuits 104 illustrated in Figs. 2, 10, and 11, the control unit 118 sets the load switch 170 to the ON state in step S30 to supply power to the current detection IC constituting the induced current detection IC.

In addition, the control unit 118 activates a first timer (step S31). When the first timer is activated, a value of the first timer increases or decreases with an elapse of time from an initial value. In the following description, it is assumed that the value of the first timer increases with the elapse of time. The first timer is stopped and initialized when the operation mode is switched to another operation mode. The same applies to a second timer and a third timer to be described later.

Next, the control unit 118 notifies the user of the charge level of the power supply 102 (step S32). The notification of the charge level can be realized by the control unit 118 communicating with the light emitting element drive circuit 126 and causing the light emitting element 138 to emit light in a predetermined mode based on information of the power supply 102 acquired through communication with the residual amount measurement IC 124. The same applies to other notifications to be described later. The notification of the charge level is preferably executed temporarily. In a case where the notification unit includes a speaker or a vibrator, the control unit 118 controls the speaker or the vibrator to notify the charge level by sound or vibration.

Next, the control unit 118 starts execution of another process (hereinafter, referred to as a "sub process") so as to be executed in parallel with the main process 30 (step S33). The sub process started in step S33 will be described later. The execution of the sub process is stopped when the operation mode is switched to another operation mode. The same applies to other sub processes to be described later.

Next, the control unit 118 determines whether a predetermined time has elapsed based on the value of the first timer (step S34). When it is determined that the predetermined time has elapsed (YES in step S34), the control unit 118 executes the process of step S40 to be described later. When it is determined that the predetermined time has not elapsed (NO in step S34), the control unit 118 determines whether the aerosol forming substrate 108 has been inserted into the opening 101A based on the output value of the induced current detection IC (step S35).

When it is determined that the aerosol forming substrate 108 has not been inserted into the opening 101A (NO in step S35), the control unit 118 returns the process to step S34. When it is determined that the aerosol forming substrate 108 has been inserted into the opening 101A (YES in step S35), the control unit 118 shifts the process to step S36.

In step S36, the control unit 118 determines whether the insertion direction of the aerosol forming substrate 108 inserted into the opening 101A is the forward direction based on the output value of the induced current detection IC. In the circuit 104 illustrated in Fig. 12, since no induced current is detected in a case where the aerosol forming substrate 108 is inserted in the backward direction, a case where the determination in step S35 is YES is equivalent to a case where the aerosol forming substrate 108 is inserted in the forward direction. Therefore, in the circuit 104 illustrated in Fig. 12, the process of step S36 is omitted, and the process of step S38 is performed.

When it is determined that the insertion direction is the backward direction (NO in step S36), the control unit 118 causes the notification unit to execute an error notification indicating that the insertion direction is backward, and further resets the value of the first timer to the initial value (step S37). After step S37, the control unit 118 returns the process to step S34. Step S37 can be referred to as a process of delaying transition from the ACTIVE mode to the SLEEP mode. Due to the presence of this process, the operation mode can be prevented from transitioning to the SLEEP mode during a period from when the user removes the aerosol forming substrate 108 inserted in the backward direction to when the user reinserts the aerosol forming substrate 108 into the opening 101A in the forward direction, and the convenience can be improved. In step S37, the value of the first timer may be brought close to the initial value by subtraction or the like without being reset to the initial value.

When it is determined that the insertion direction is the forward direction (YES in step S36), the control unit 118 determines whether the set usable number is one or more (step S38). When the usable number is one or more (YES in step S38), the control unit 118 switches the operation mode to the PRE-HEAT mode. When the usable number is less than one (NO in step S38), the control unit 118 causes the notification unit to execute a low residual amount notification indicating that the residual amount of the power supply 102 is insufficient (step S39). In step S40 after step S39, the control unit 118 controls the switches and the like of the circuit 104 to release the induced current detection state, and then switches the operation mode to the SLEEP mode.

In the circuit 104 of Fig. 2, the switch Q5 is set to the OFF state, and preferably, the power supply to the current detection IC 151 is further stopped, thereby releasing the induced current detection state. In each of the circuits 104 illustrated in Figs. 8, 9, and 12, the switch Q5 is set to the OFF state, thereby releasing the induced current detection state. In the circuit 104 of Fig. 10, the switches Q6 and Q8 are set to the OFF state, and preferably, the power supply to the current detection ICs 154 and 155 are further stopped, thereby releasing the induced current detection state. In the circuit 104 of Fig. 11, the switch Q5 is set to the OFF state, and preferably, the power supply to the current detection IC 156 is further stopped, thereby releasing the induced current detection state.

In step S34, when it is determined that the predetermined time has elapsed (YES in step S34), the process of step S40 is performed, and then the operation mode is switched to the SLEEP mode.

Fig. 17 is a flowchart for illustrating a sub process 40 and a sub process 50 which are started in step S33 in the main process 30 in the ACTIVE mode.

(Sub Process 40)

First, the control unit 118 determines whether a predetermined operation has been performed on the button 128 (step S44). An example of the predetermined operation is short pressing of the button 128. When the predetermined operation has been performed on the button 128 (YES in step S44), the control unit 118 resets the value of the first timer to the initial value (step S45). When the predetermined operation has not been performed on the button 128 (NO in step S44), the control unit 118 returns the process to step S44, and after step S45, the control unit 118 notifies the user of the charge level of the power supply 102 (step S46) similarly to step S32 of Fig. 16, and then returns the process to step S44. In step S45, the value of the first timer may be brought close to the initial value by subtraction or the like without being reset to the initial value.

(Sub Process 50)

First, the control unit 118 determines whether the charging power supply is connected to the charging power supply connector 116 (step S51). When the charging power supply is not connected to the charging power supply connector 116 (NO in step S51), the control unit 118 returns the process to step S51. The determination is executed based on, for example, the VBUS detection signal described above. When the charging power supply is connected to the charging power supply connector 116 (YES in step S51), the control unit 118 releases the induced current detection state (step S52) and switches the operation mode to the CHARGE mode. Step S52 is the same process as step S40 in Fig. 16. In a case where the operation mode is switched to the CHARGE mode, it is preferable that the control unit 118 sets all of the switches Q1, Q2, Q3, and Q4 to the OFF state.

Fig. 18 is a flowchart for illustrating an exemplary process (main process 60) mainly executed by the control unit 118 in the PRE-HEAT mode. First, the control unit 118 releases the induced current detection state (step S60). Step S60 is the same process as step S40 in Fig. 16.

Next, the control unit 118 starts the heating control and supplies heating power to the coil 106 (step S61). In each of the circuits 104 of Figs. 2, 8, 9, 11, and 12, the heating power is generated by switching the switch Q3 after the switch Q1 is set to the ON state and the switch Q2 is set to the OFF state. In the circuit 104 of Fig. 10, the heating power is generated by alternately executing the above-described first switch control and second switch control by the inverter 162 after the switch Q1 is set to the ON state and the switch Q2 is set to the OFF state. Next, the control unit 118 starts execution of a sub process so as to be executed in parallel with the main process 60 (step S62). The sub process will be described later.

Next, the control unit 118 executes the monitor control in a state in which the heating control is temporarily stopped, supplies the non-heating power to the coil 106, and measures the impedance Z of the monitoring RLC series circuit (step S63). Next, the control unit 118 determines whether the susceptor 110 (aerosol forming substrate 108) has been inserted into the opening 101A based on the measured impedance Z (step S64). When it is determined that the susceptor 110 has not been inserted into the opening 101A (NO in step S64), the control unit 118 completes the heating control (step S66), decreases the usable number by one (step S67), and switches the operation mode to the ACTIVE mode. A case where the determination in step S64 is NO corresponds to a case where the user inserted a new aerosol forming substrate 108 and then immediately removed the new aerosol forming substrate 108.

When it is determined that the susceptor 110 has been inserted into the opening 101A (YES in step S64), the control unit 118 acquires a temperature of the susceptor 110 based on the impedance Z measured in step S63 (step S65). Next, the control unit 118 determines whether the temperature of the susceptor 110 obtained in step S65 has reached the first target temperature (step S66).

When the temperature of the susceptor 110 has not reached the first target temperature (NO in step S68), the control unit 118 returns the process to step S63. When the process returns to step S63, the control unit 118 resumes the heating control and supplies the heating power to the coil 106. When the temperature of the susceptor 110 has reached the first target temperature (YES in step S68), the control unit 118 controls the notification unit to notify the user that preheating is completed (step S69). After step S69, the control unit 118 switches the operation mode to the INTERVAL mode. The control unit 118 may also determine that the preheating is completed in a case where a predetermined time has elapsed from the start of the PRE-HEAT mode and switch the operation mode to the INTERVAL mode.

Fig. 19 is a flowchart for illustrating an exemplary process 70 executed by the control unit 118 in the INTERVAL mode. First, the control unit 118 completes the heating control and stops the supply of the heating power to the coil 106 (step S71). Next, the control unit 118 starts execution of a sub process so as to be executed in parallel with the main process 70 (step S72). The sub process will be described later.

Next, the control unit 118 executes the monitor control, supplies the non-heating power to the coil 106, and measures the impedance Z of the monitoring RLC series circuit (step S73). Next, the control unit 118 acquires a temperature of the susceptor 110 based on the measured impedance Z (step S74). Next, the control unit 118 determines whether the temperature of the susceptor 110 obtained in step S74 reaches the second target temperature (step S75).

When the temperature of the susceptor 110 does not reach the second target temperature (NO in step S75), the control unit 118 returns the process to step S73. When the temperature of the susceptor 110 reaches the second target temperature (YES in step S75), the control unit 118 switches the operation mode to the HEAT mode. The control unit 118 may also determine that cooling is completed in a case where a predetermined time has elapsed from the start of the INTERVAL mode and switch the operation mode to the HEAT mode.

In the PRE-HEAT mode, the susceptor 110 is rapidly heated such that the aerosol can be rapidly supplied. On the other hand, such rapid heating may cause an excessive amount of aerosol to be generated. Therefore, by shifting the operation mode to the INTERVAL mode before to the HEAT mode, the amount of aerosol to be generated can be stabilized from a completion point of the PRE-HEAT mode to a completion point of the HEAT mode. According to the main process 70 of Fig. 19, it is possible to cool the preheated aerosol forming substrate 108 before the HEAT mode in order to stabilize aerosol generation.

Fig. 20 is a flowchart for illustrating a main process 80 executed by the control unit 118 in the HEAT mode. First, the control unit 118 activates the second timer (step S81). Next, the control unit 118 starts execution of another process (sub process) so as to be executed in parallel with the main process 80 (step S82). The sub process will be described later. Next, the control unit 118 starts the heating control (step S83).

After the heating control is started, the control unit 118 executes the monitor control in a state in which the heating control is temporarily stopped, supplies the non-heating power to the coil 106, and measures the impedance Z of the monitoring RLC series circuit (step S84). Next, the control unit 118 determines whether the susceptor 110 (aerosol forming substrate 108) has been inserted into the opening 101A based on the measured impedance Z (step S85). When it is determined that the susceptor 110 has not been inserted into the opening 101A (NO in step S85), the control unit 118 completes the heating control (step S86), and further decreases the usable number by one (step S87), and switches the operation mode to the ACTIVE mode. A case where the determination in step S85 is NO corresponds to a case where the user removed the aerosol forming substrate 108 during the aerosol generation.

When it is determined that the susceptor 110 has been inserted into the opening 101A (YES in step S85), the control unit 118 acquires a temperature of the susceptor 110 based on the impedance Z measured in step S84 (step S88). Next, the control unit 118 determines whether the temperature of the susceptor 110 obtained in step S88 reaches a predetermined heating target temperature (step S89). The heating target temperature may be a constant value, or may be increased as the number of times of inhaling or a value of the second timer increases such that an amount of flavor component added to the aerosol becomes constant.

When the temperature of the susceptor 110 reaches the heating target temperature (YES in step S89), the control unit 118 stops the heating control and waits for a predetermined time (step S90), and then returns the process to step S83. When the temperature of the susceptor 110 does not reach the heating target temperature (NO in step S89), the control unit 118 determines whether the heating completion condition is satisfied based on the value of the second timer or the number of times of inhaling by the user after the start of the HEAT mode (step S91).

When the heating completion condition is not satisfied (NO in step S91), the control unit 118 returns the process to step S84. When the heating completion condition is satisfied (YES in step S91), the control unit 118 completes the heating control (step S92), decreases the usable number by one (step S87), and switches the operation mode to the ACTIVE mode. When the operation mode is switched from the HEAT mode to the ACTIVE mode, a continuous use determination process is executed by the control unit 118. Details of the continuous use determination process will be described later. In the present embodiment, step S91 is executed when it is determined as NO in step S89, but step S91 may be executed in parallel with steps S84, S85, S88, and S89, or may be executed between any two of steps S84, S85, S88, and S89.

Fig. 21 is a flowchart for illustrating sub processes (sub process 90 and sub process 100S) executed in the main process 60 in the PRE-HEAT mode, the exemplary process 70 in the INTERVAL mode, and the main process 80 in the HEAT mode.

(Sub Process 90)

First, the control unit 118 determines whether a predetermined operation has been performed on the button 128 (step S95). An example of the predetermined operation is long pressing or continuous depressing of the button 128. When the predetermined operation has been performed on the button 128 (YES in step S95), the control unit 118 completes the heating control or the monitor control (step S96), decreases the usable number by one (step S97), and switches the operation mode to the ACTIVE mode. When the predetermined operation has not been performed on the button 128 (NO in step S95), the control unit 118 returns the process to step S95.

(Sub Process 100S)

First, the control unit 118 measures a discharge current (step S101). The discharge current can be measured by the current detection circuit 136. Next, the control unit 118 determines whether the measured discharge current is excessive (step S102). When the discharge current is not excessive (NO in step S102), the control unit 118 returns the process to step S101, and when the discharge current is excessive (YES in step S102), the control unit 118 executes a predetermined fail-safe action (step S103). The predetermined fail-safe action is, for example, to set all of the switches Q1, Q2, Q3, and Q4 to the OFF state. After step S103, the control unit 118 controls the notification unit to execute an error notification to the user (step S104), and switches the operation mode to the ERROR mode.

Fig. 22 is a flowchart for illustrating a main process 200 in the continuous use determination process in the ACTIVE mode. The continuous use determination process illustrated in Fig. 22 can be executed in each of the circuits 104 in Fig. 2 and Figs. 8 to 11.

First, the control unit 118 activates the third timer and sets a continuous heating Flag to FALSE (step S201). Next, the control unit 118 notifies the user of the charge level of the power supply 102 (step S202). Step S202 is the same as the process of step S32.

Next, the control unit 118 controls the switches and the like of the circuit 104 to create the induced current detection state (step S203). Next, the control unit 118 starts execution of another process (sub process 300 illustrated in Fig. 23 to be described later) so as to be executed in parallel with the main process 200 (step S204).

Next, the control unit 118 determines whether a predetermined time has elapsed based on a value of the third timer (step S205). When it is determined that the predetermined time has elapsed (YES in step S205), the control unit 118 executes the process of step S210 to be described later. When it is determined that the predetermined time has not elapsed (NO in step S205), the control unit 118 determines whether the aerosol forming substrate 108 has been removed from the opening 101A based on the output value of the induced current detection IC (step S206).

When it is determined that the aerosol forming substrate 108 has not been removed from the opening 101A (NO in step S206), the control unit 118 returns the process to step S205. When it is determined that the aerosol forming substrate 108 has been removed from the opening 101A (YES in step S206), the control unit 118 resets the third timer (step S207). In step S207, the value of the third timer may be brought close to the initial value by subtraction or the like without being reset to the initial value.

The control unit 118 may execute the same process as step S202 after step S207. Alternatively, the process of step S202 may be executed between step S207 and step S208 instead of between step S201 and step S203. At a timing when the determination in step S206 is YES, the attention of the user is directed to the power supply unit 100U. By notifying the user of the residual amount of the power supply 102 at such timing, the user can easily grasp the residual amount of the power supply 102.

After step S207, the control unit 118 sets the continuous heating Flag to TRUE (step S208). Next, the control unit 118 determines whether a predetermined time has elapsed based on the value of the third timer (step S209). When it is determined that the predetermined time has not elapsed (NO in step S209), the control unit 118 returns the process to step S209. When it is determined that the predetermined time has elapsed (YES in step S209), the control unit 118 controls the switches and the like of the circuit 104 to release the induced current detection state (step S210), and switches the operation mode from the ACTIVE mode to the SLEEP mode.

The third timer is used to count a time until the operation mode is transitioned from the ACTIVE mode to the SLEEP mode. As illustrated in Fig. 22, in a case where the user immediately removes the aerosol forming substrate 108 for continuous use after completion of the HEAT mode, the determination in step S206 becomes YES and the third timer is reset. Therefore, after the completion of the HEAT mode, compared to a case where the user does not remove the aerosol forming substrate 108 (that is, there is no intention of continuous use), the time until the operation mode is transitioned from the ACTIVE mode to the SLEEP mode becomes longer. That is, step S207 can be referred to as the process of delaying the transition from the ACTIVE mode to the SLEEP mode. Due to the presence of this process, the operation mode can be prevented from transitioning to the SLEEP mode during a period from when the user removes the aerosol forming substrate 108 to when the user inserts a new aerosol forming substrate 108 into the opening 101A, and the convenience can be improved.

Fig. 23 is a flowchart for illustrating the sub process 300 executed in the main process 200 of the continuous use determination process illustrated in Fig. 22.

First, the control unit 118 determines whether the continuous heating Flag is set to TRUE (step S301). When the continuous heating Flag is set to FALSE (NO in step S301), the control unit 118 returns the process to step S301. When the continuous heating Flag is set to TRUE (YES in step S301), the control unit 118 determines whether the aerosol forming substrate 108 has been inserted into the opening 101A based on the output value of the induced current detection IC (step S302).

When it is determined that the aerosol forming substrate 108 has not been inserted into the opening 101A (NO in step S302), the control unit 118 returns the process to step S302. When it is determined that the aerosol forming substrate 108 has been inserted into the opening 101A (YES in step S302), the control unit 118 shifts the process to step S303.

In step S303, the control unit 118 determines whether the insertion direction of the aerosol forming substrate 108 inserted into the opening 101A is the forward direction based on the output value of the induced current detection IC. When it is determined that the insertion direction is the backward direction (NO in step S303), the control unit 118 causes the notification unit to execute an error notification indicating that the insertion direction is backward (step S304), and further resets the value of the third timer to the initial value (step S305). In step S305, the value of the third timer may be brought close to the initial value by subtraction or the like without being reset to the initial value. After step S305, the control unit 118 returns the process to step S302.

Step S305 can be referred to as the process of delaying the transition from the ACTIVE mode to the SLEEP mode. Due to the presence of this process, the operation mode can be prevented from transitioning to the SLEEP mode from when the user erroneously removes the aerosol forming substrate 108 inserted in the backward direction to when the user reinserts the aerosol forming substrate 108 in the forward direction, and the convenience can be improved.

When it is determined that the insertion direction is the forward direction (YES in step S303), the control unit 118 determines whether the set usable number is one or more (step S306). When the usable number is one or more (YES in step S306), the control unit 118 switches the operation mode to the PRE-HEAT mode. When the usable number is less than one (NO in step S306), the control unit 118 causes the notification unit to execute a low residual amount notification indicating that the residual amount of the power supply 102 is insufficient (step S307). After step S307, the control unit 118 controls the switches and the like of the circuit 104 to release the induced current detection state (step S308), and then switches the operation mode to the SLEEP mode.

<Main Effects of Aerosol Generating Device 100>

As described above, according to the aerosol generating device 100, it is possible to automatically start heating of the aerosol forming substrate 108 by detecting insertion of the aerosol forming substrate 108 based on the induced current generated in the coil 106. Therefore, after operating the button 128 to set the power supply unit 100U to the ACTIVE mode, the user can start inhaling of an aerosol to which a flavor is added only by performing a simple work of inserting the aerosol forming substrate 108 into the opening 101A in the forward direction and gripping the filter 114 to inhale.

In addition, according to the aerosol generating device 100, the insertion direction of the aerosol forming substrate 108 can be identified based on the induced current. Therefore, the aerosol forming substrate 108 inserted in the backward direction can be prevented from being heated, and an aerosol having an unintended flavor can be prevented from being generated.

Further, according to the aerosol generating device 100, it is possible to detect removal of the aerosol forming substrate 108 based on the induced current. Accordingly, for example, as described in the continuous use determination process of Figs. 22 and 23, it is possible to prevent the operation mode from shifting to the PRE-HEAT mode unless the removal of the aerosol forming substrate 108 is detected after the completion of the HEAT mode. That is, it is possible to prevent a consumed aerosol forming substrate 108 from being heated again, and it is possible to prevent an inhaling experience of the user from being impaired.

<Modification of Continuous Use Determination Process>

In the above description, the control unit 118 detects the insertion of the aerosol forming substrate 108, detects the removal of the aerosol forming substrate 108, or determines the insertion direction of the aerosol forming substrate 108 based on the induced current generated in the coil 106. However, in principle, it is also possible to detect the insertion of the aerosol forming substrate 108 or detect the removal of the aerosol forming substrate 108 by using the above-described impedance Z whose value changes between the inserted state and the removed state.

However, in order to shift the operation mode to the PRE-HEAT mode by detecting the insertion of the aerosol forming substrate 108 in the ACTIVE mode, it is required to supply power from the power supply 102 to the monitoring RLC series circuit at a high frequency in the ACTIVE mode. In addition, in order to detect the induced current with high accuracy, the susceptor 110 is required to have strong magnetism, but in a period during which the susceptor 110 is heated, the magnetism may be weakened. That is, in the ACTIVE mode, the induced current can be detected with high accuracy with low power consumption. Therefore, it is preferable that the detection of the insertion of the aerosol forming substrate 108 in the ACTIVE mode is executed based on the induced current, and the detection of the removal of the aerosol forming substrate 108 in the PRE-HEAT mode, the INTERVAL mode, and the HEAT mode or immediately after the completion of the HEAT mode is executed based on the impedance Z of the monitoring RLC series circuit. As a result, it is possible to detect the insertion of the aerosol forming substrate 108 with low power consumption without overlooking, and it is also possible to detect the removal of the aerosol forming substrate 108 without overlooking. Hereinafter, the operation will be described with reference to a flowchart.

Fig. 24 is a flowchart for illustrating a main process 400 in the continuous use determination process in the ACTIVE mode. The continuous use determination process illustrated in Fig. 24 can be executed in each of the circuits 104 in Fig. 2 and Figs. 8 to 12.

First, the control unit 118 activates the third timer and sets the continuous heating Flag to FALSE (step S401). Next, the control unit 118 notifies the user of the charge level of the power supply 102 (step S402). Step S402 is the same as the process of step S202.

Next, the control unit 118 starts execution of the sub process 300 illustrated in Fig. 23 so as to be executed in parallel with the main process 400 (step S403). Next, the control unit 118 executes the monitor control, supplies the non-heating power to the coil 106, and measures the impedance Z of the monitoring RLC series circuit (step S404).

Next, the control unit 118 determines whether a predetermined time has elapsed based on the value of the third timer (step S405). When it is determined that the predetermined time has elapsed (YES in step S405), the control unit 118 switches the operation mode to the SLEEP mode. When it is determined that the predetermined time has not elapsed (NO in step S405), the control unit 118 determines whether the susceptor 110 (aerosol forming substrate 108) has been inserted into the opening 101A based on the measured impedance Z (step S406). When it is determined that the susceptor 110 has been inserted into the opening 101A (YES in step S406), the control unit 118 returns the process to step S404.

When it is determined that the susceptor 110 has not been inserted into the opening 101A, that is, the aerosol forming substrate 108 is removed (NO in step S406), the control unit 118 resets the third timer (step S407). In step S407, the value of the third timer may be brought close to the initial value by subtraction or the like without being reset to the initial value.

After step S407, the control unit 118 sets the continuous heating Flag to TRUE (step S408). Next, the control unit 118 controls the switches and the like of the circuit 104 to release the induced current detection state (step S409). After step S409, the control unit 118 determines whether a predetermined time has elapsed based on the value of the third timer (step S410). When it is determined that the predetermined time has elapsed (YES in step S410), the control unit 118 switches the operation mode to the SLEEP mode. When it is determined that the predetermined time has not elapsed (NO in step S410), the control unit 118 returns the process to step S410.

As described above, by using the induced current for the insertion detection of the aerosol forming substrate 108, and using the impedance Z for the removal detection of the aerosol forming substrate 108, the insertion detection and the removal detection can be executed with high accuracy without increasing the power consumption.

An orientation of magnetic poles of the susceptor 110 in the aerosol forming substrate 108 is not limited to that illustrated in Fig. 1. For example, the S pole and the N pole in Fig. 1 may be reversed. That is, a configuration may be adopted in which in the aerosol forming substrate 108, the S pole of the susceptor 110, the N pole of the susceptor 110, and the filter 114 are arranged in this order in the longitudinal direction.

In such a case, the detection of the insertion and removal of the aerosol forming substrate 108 and the determination of the insertion direction may be executed in consideration of the following: a matter that the induced current IDC3 illustrated in Fig. 5 is generated in the case where the aerosol forming substrate 108 is inserted into the opening 101A in the forward direction, the induced current IDC4 illustrated in Fig. 5 is generated in the case where the aerosol forming substrate 108 inserted in the forward direction is removed from the opening 101A, the induced current IDC1 illustrated in Fig. 5 is generated in the case where the aerosol forming substrate 108 is inserted into the opening 101A in the backward direction, and the induced current IDC2 illustrated in Fig. 5 is generated in the case where the aerosol forming substrate 108 inserted in the backward direction is removed from the opening 101A; and a matter that the induced current IDC3 is larger than the induced current IDC1 and the induced current IDC4 is larger than the induced current IDC2.

In this configuration, in the circuit 104 illustrated in Fig. 12, the terminal on the coil connector CC- side of the resistor R2 is connected to the non-inverting input terminal of the operational amplifier 162, and the terminal on the switch Q5 side of the resistor R2 is connected to the inverting input terminal of the operational amplifier 162, so that a voltage corresponding to the induced current IDC3 generated at the time when the aerosol forming substrate 108 is inserted into the opening 101A can be detected by the operational amplifier 162.

In the present description, at least the following matters are described. In parentheses, corresponding constituent components and the like in the embodiment described above are indicated, but the present invention is not limited thereto.

(1) A power supply unit (power supply unit 100U) of an aerosol generating device (aerosol generating device 100), including:

a power supply (power supply 102),
a coil (coil 106) that generates an eddy current to a susceptor (susceptor 110) that heats an aerosol source (aerosol source 112) using power supplied from the power supply,
a current conversion circuit (conversion circuit 132 or inverter 162) that is connected between the coil and the power supply and converts a direct current supplied from the power supply into a pulsating current or an alternating current,
an induction heating circuit to which the pulsating current or the alternating current converted by the current conversion circuit is supplied and which includes the coil,
a first detection circuit configured to detect information corresponding to an induced current generated in the coil,
a second detection circuit configured to detect an impedance of the induction heating circuit, and

a controller (control unit 118) configured to control supply of power from the power supply to the coil based on an output of the first detection circuit and an output of the second detection circuit.

In a process of inserting an aerosol generating article including a susceptor in an inner side of the coil, an induced current may be generated in the coil. In addition, the impedance of the induction heating circuit is different between a state in which the susceptor is inserted in the inner side of the coil and a state in which the susceptor is not inserted in the inner side of the coil. According to (1), the supply of power from the power supply to the coil can be controlled based on both the induced current and the impedance, and thus an accurate process corresponding to the state of the aerosol generating article can be executed.

(2) The power supply unit of the aerosol generating device according to (1), in which

the controller is configured to
start heating control of supplying power for heating the aerosol source from the power supply to the coil based on the output of the first detection circuit, and
control the power supplied from the power supply to the coil in the heating control based on the output of the second detection circuit.

To detect the impedance by the second detection circuit, the induction heating circuit needs to be energized. In addition, since the aerosol generating article is not inserted and removed during the heating control in principle, no induced current is generated. That is, the first detection circuit does not easily function during the heating control. According to (2), since the output of the first detection circuit is used for the start of the heating control, and the output of the second detection circuit is used for the power control of the heating control, it is possible to detect a request of the user of starting heating with low power consumption without overlooking, and to highly control the heating control.

(3) The power supply unit of the aerosol generating device according to (1), further including:

an opening (opening 101A) into which an aerosol generating article (aerosol forming substrate 108) including the aerosol source and the susceptor can be inserted and which is at least partially surrounded by the coil, in which the controller is configured to
execute heating control of supplying power for heating the aerosol source from the power supply to the coil,
control the power supplied from the power supply to the coil in the heating control based on an output of the second detection circuit, and
detect removal of the aerosol generating article from the opening after completion of the heating control (after completion of HEAT mode) based on an output of the first detection circuit.

To detect the impedance by the second detection circuit, the induction heating circuit needs to be energized. In addition, since the aerosol generating article is not inserted and removed during the heating control in principle, no induced current is generated. That is, the first detection circuit does not easily function during the heating control. According to (3), since the output of the first detection circuit is used for the detection of the removal of the aerosol generating article, and the output of the second detection circuit is used for the power control in the heating control, it is possible to detect the removal of the aerosol generating article with low power consumption without overlooking, and to highly control the heating control.

(4) The power supply unit of the aerosol generating device according to (2) or (3), in which
the controller is configured to stop detection of information by the first detection circuit during the execution of the heating control.

According to (4), since the detection of information by the first detection circuit is stopped during the heating control, power saving can be realized without deteriorating a function of the aerosol generating device.

(5) The power supply unit of the aerosol generating device according to (1), further including:

an opening (opening 101A) into which an aerosol generating article (aerosol forming substrate 108) including the aerosol source and the susceptor can be inserted and which is at least partially surrounded by the coil, in which the controller is configured to
detect insertion of the aerosol generating article into the opening based on the output of the first detection circuit, and
detect removal of the aerosol generating article from the opening based on the output of the second detection circuit.

To detect the impedance by the second detection circuit, the induction heating circuit needs to be energized. In addition, in order to detect the induced current by the first detection circuit with high accuracy, the susceptor is required to have strong magnetism, but the magnetism may be weakened immediately after the heating control is completed. That is, in the first detection circuit, it may be difficult to detect information corresponding to the induced current immediately after the completion of the heating control. According to (5), since the output of the first detection circuit is used for the detection of the insertion of the aerosol generating article, and the output of the second detection circuit is used for the detection of the removal of the aerosol generating article, it is possible to detect the insertion of the aerosol generating article with low power consumption without overlooking, and also detect the removal without overlooking.

(6) The power supply unit of the aerosol generating device according to (5), in which

the controller is configured to start heating control of supplying power for heating the aerosol generating article from the power supply to the coil when the insertion of the aerosol generating article into the opening is detected.

According to (6), since the generation of the aerosol can be automatically started by considering the intention of the user, the convenience of the aerosol generating device is improved.

(7) The power supply unit of the aerosol generating device according to (6), in which

the controller is configured to stop the heating control when the removal of the aerosol generating article from the opening is detected during execution of the heating control.

According to (7), since energization of the coil in a state in which the aerosol generating article is removed is prevented, it is possible to prevent generation of a leakage magnetic field and avoid waste of power stored in the power supply.

(8) The power supply unit of the aerosol generating device according to (6) or (7), in which

the controller does not execute the heating control again unless the removal of the aerosol generating article from the opening is detected after completion of the heating control.

According to (8), since the aerosol generating article is not heated unless the removal of the aerosol generating article is detected, heating of a used aerosol generating article is prevented. As a result, an inhaling experience of the user is prevented from being impaired.

(9) The power supply unit of the aerosol generating device according to any one of (1) to (8), in which

the second detection circuit includes a voltage detection circuit (voltage detection circuit 134) that detects an output voltage of the power supply and a current detection circuit (current detection circuit 136) that detects a current flowing between the power supply and the current conversion circuit.

According to (9), since the second detection circuit can have a simple circuit configuration, the cost of the aerosol generating device or the power supply unit of the aerosol generating device can be reduced.

(10) The power supply unit of the aerosol generating device according to any one of (1) to (9), further including:

a positive-side connector (coil connector CC+) to which one end of the coil is connected, and
a negative-side connector (coil connector CC-) to which the other end of the coil is connected, in which
the first detection circuit includes
a first resistor (resistor R1 in Fig. 2) having one end connected to the positive-side connector,
a second resistor (resistor R2 in Fig. 2) having one end connected to the negative-side connector and the other end connected to the ground,
a switch device (switch Q5 in Fig. 2) having one end connected to the other end of the first resistor and the other end connected to the other end of the second resistor,
a first detector (current detection IC 152 in Fig. 2) that detects a voltage applied to both ends of the first resistor, and
a second detector (current detection IC 151 in Fig. 2) that detects a voltage applied to both ends of the second resistor.

According to (10), since the first detection circuit can be realized with a simple configuration, the cost of the aerosol generating device or the power supply unit of the aerosol generating device can be reduced.

(11) A power supply unit of the aerosol generating device according to any one of (1) to (9), including:

a positive-side connector (coil connector CC+) to which one end of the coil is connected, and
a negative-side connector (coil connector CC-) to which the other end of the coil is connected, in which
the first detection circuit includes
a switch device (switch Q5 in Fig. 8) having one end connected to the positive-side connector,

a resistor (resistor R2 in Fig. 8) having one end connected to the negative-side connector and the other end connected to the other end of the switch device, and
a bidirectional current sense amplifier (current detection IC 153 in Fig. 8) that is connected to both ends of the resistor and detects a current flowing through the resistor and a direction thereof.

According to (11), since the first detection circuit can be realized with a simple configuration, the cost of the aerosol generating device or the power supply unit of the aerosol generating device can be reduced.
(12) The power supply unit of the aerosol generating device according to any one of (1) to (9), further including:

a negative power supply generating circuit (rail splitter circuit 160 in Fig. 9) that generates a negative voltage (-0.5 $V_{SYS}$ in Fig. 9) based on the power supplied from the power supply,
a positive-side connector (coil connector CC+) to which one end of the coil is connected, and
a negative-side connector (coil connector CC-) to which the other end of the coil is connected, wherein
the first detection circuit includes
a switch device (switch Q5 in Fig. 9) having one end connected to the positive-side connector,
a resistor (resistor R2 in Fig. 9) having one end connected to the negative-side connector and the other end connected to the other end of the switch device, and
an operational amplifier (operational amplifier 161 in Fig. 9) having one of an inverting input terminal and a non-inverting input terminal connected to one end of the resistor, the other of the inverting input terminal and the non-inverting input terminal connected to the other end of the resistor, and the negative voltage supplied to a negative power supply terminal.

According to (12), since the first detection circuit can be realized with a simple configuration, the cost of the aerosol generating device or the power supply unit of the aerosol generating device can be reduced.
(13) The power supply unit of the aerosol generating device according to any one of (1) to (9), further including:

a positive-side connector (coil connector CC+) to which one end of the coil is connected,
a negative-side connector (coil connector CC-) to which the other end of the coil is connected, and
an inverter (inverter 162 in Fig. 10) that converts a direct current supplied from the power supply into an alternating current and includes a positive-side output terminal (output terminal OUT+) and a negative-side output terminal (output terminal OUT-), in which
the first detection circuit includes
a first resistor (resistor R3 in Fig. 10) that connects the positive-side connector and the positive-side output terminal,
a second resistor (resistor R4 in Fig. 10) that connects the negative-side connector and the negative-side output terminal,
a first detector (current detection IC 155 in Fig. 10) that detects a voltage applied to both ends of the first resistor, and
a second detector (current detection IC 154 in Fig. 10) that detects a voltage applied to both ends of the second resistor.

According to (13), since the first detection circuit can be realized with a simple configuration, the cost of the aerosol generating device or the power supply unit of the aerosol generating device can be reduced.
(14) A power supply unit (power supply unit 100U) of an aerosol generating device (aerosol generating device 100), including:

a power supply (power supply 102),
a coil (coil 106) that generates an eddy current to a susceptor (susceptor 110) that heats an aerosol source (aerosol source 112) using power supplied from the power supply,
a current conversion circuit (conversion circuit 132 or inverter 162) that is connected between the coil and the power supply and converts a direct current supplied from the power supply into a pulsating current or an alternating current,
a first detection circuit configured to detect information related to an aerosol generating article including the aerosol source and the susceptor,
a second detection circuit configured to detect information related to the aerosol generating article and different from the first detection circuit, and
a controller (control unit 118), in which
the controller is configured to
start heating control of supplying power for heating the aerosol source from the power supply to the coil based on an output of the first detection circuit, and
control the power supplied from the power supply to the coil in the heating control based on an output of the second detection circuit.

According to (14), different types of information related to the aerosol generating article can be detected, and the start of the heating control and the power control in the heating control are executed based on the different types of information. Therefore, it is possible to execute a more accurate process corresponding to the state of the aerosol generating article than in a case where the start of the heating control and the power control are executed based on only one of the different types of information.
(15) A power supply unit (power supply unit 100U) of an aerosol generating device (aerosol generating device 100), including:

a power supply (power supply 102),
a coil (coil 106) that generates an eddy current to a susceptor (susceptor 110) that heats an aerosol source (aerosol source 112) using power supplied from the power supply,
an opening (opening 101A) into which an aerosol generating article (aerosol forming substrate 108) including the aerosol source and the susceptor can be inserted and which is at least partially surrounded by the coil,
a current conversion circuit (conversion circuit 132 or inverter 162) that is connected between the coil and the power supply and converts a direct current supplied from the power supply into a pulsating current or an alternating current,
a first detection circuit configured to detect information related to the aerosol generating article,
a second detection circuit configured to detect information related to the aerosol generating article and different from the first detection circuit, and
a controller (control unit 118), in which
the controller is configured to
execute heating control of supplying power for heating the aerosol source from the power supply to the coil,
control the power supplied from the power supply to the coil in the heating control based on an output of the second detection circuit, and
detect removal of the aerosol generating article from the opening after completion of the heating control based on an output of the first detection circuit.

According to (15), it is possible to detect different types of information related to the aerosol generating article, and the power control in the heating control and the detection of the removal of the aerosol generating article are executed based on the different types of information. Therefore, it is possible to execute a more accurate process corresponding to the state of the aerosol generating article than in a case where the power control and the detection of the removal of the aerosol generating article are executed based on only one of the different types of information.
(16) A power supply unit (power supply unit 100U) of an aerosol generating device (aerosol generating device 100), including:

a power supply (power supply 102),
a coil (coil 106) that generates an eddy current to a susceptor (susceptor 110) that heats an aerosol source (aerosol source 112) using power supplied from the power supply,
an opening (opening 101A) into which an aerosol generating article (aerosol forming substrate 108) including the aerosol source and the susceptor can be inserted and which is at least partially surrounded by the coil,
a current conversion circuit (conversion circuit 132 or inverter 162) that is connected between the coil and the power supply and converts a direct current supplied from the power supply into a pulsating current or an alternating current,
a first detection circuit configured to detect information related to the aerosol generating article,
a second detection circuit configured to detect information related to the aerosol generating article and different from the first detection circuit, and
a controller (control unit 118), in which
the controller is configured to

detect insertion of the aerosol generating article into the opening based on an output of the first detection circuit, and
detect removal of the aerosol generating article from the opening based on an output of the second detection circuit.

According to (16), it is possible to detect different types of information related to the aerosol generating article, and the detection of the insertion and removal of the aerosol generating article is executed based on the different types of information. Therefore, it is possible to execute a more accurate process corresponding to the state of the aerosol generating article than in a case where the detection of the insertion and removal of the aerosol generating article is executed based on only one of the different types of information.

REFERENCE SIGNS LIST

100: aerosol generating device
100U: power supply unit
101: housing
101A: opening
102: power supply
104: circuit
106: coil
108: aerosol forming substrate
110: susceptor
112: aerosol source
114: filter
116: charging power supply connector
118: control unit

## Claims

**1.** A power supply unit of an aerosol generating device, comprising:

a power supply;
a coil configured to generate an eddy current to a susceptor configured to heat an aerosol source using power supplied from the power supply;
a current conversion circuit connected between the coil and the power supply and configured to convert a direct current supplied from the power supply into a pulsating current or an alternating current;
an induction heating circuit to which the pulsating current or the alternating current converted by the current conversion circuit is supplied and which includes the coil;
a first detection circuit configured to detect information corresponding to an induced current generated in the coil;
a second detection circuit configured to detect an impedance of the induction heating circuit; and
a controller configured to control supply of power from the power supply to the coil based on an output of the first detection circuit and an output of the second detection circuit.

**2.** The power supply unit of the aerosol generating device according to claim 1, wherein
the controller is configured to:

start heating control of supplying power for heating the aerosol source from the power supply to the coil based on the output of the first detection circuit; and
control the power supplied from the power supply to the coil in the heating control based on the output of the second detection circuit.

**3.** The power supply unit of the aerosol generating device according to claim 1, further comprising:

an opening into which an aerosol generating article including the aerosol source and the susceptor can be inserted and which is at least partially surrounded by the coil, wherein

the controller is configured to:

execute heating control of supplying power for heating the aerosol source from the power supply to the coil;
control the power supplied from the power supply to the coil in the heating control based on an output of the second detection circuit; and
detect removal of the aerosol generating article from the opening after completion of the heating control based on an output of the first detection circuit.

**4.** The power supply unit of the aerosol generating device according to claim 2 or 3, wherein
the controller is configured to stop detection of information by the first detection circuit during the execution of the heating control.

**5.** The power supply unit of the aerosol generating device according to claim 1, further comprising:

an opening into which an aerosol generating article including the aerosol source and the susceptor is configured to be inserted and which is at least partially surrounded by the coil, wherein
the controller is configured to:

detect insertion of the aerosol generating article into the opening based on the output of the first detection circuit; and
detect removal of the aerosol generating article from the opening based on the output of the second detection circuit.

**6.** The power supply unit of the aerosol generating device according to claim 5, wherein
the controller is configured to start heating control of supplying power for heating the aerosol generating article from the power supply to the coil when the insertion of the aerosol generating article into the opening is detected.

**7.** The power supply unit of the aerosol generating device according to claim 6, wherein
the controller is configured to stop the heating control when the removal of the aerosol generating article from the opening is detected during execution of the heating control.

**8.** The power supply unit of the aerosol generating device according to claim 6 or 7, wherein
the controller does not execute the heating control again unless the removal of the aerosol generating article from the opening is detected after completion of the heating control.

**9.** The power supply unit of the aerosol generating device according to any one of claims 1 to 8, wherein
the second detection circuit includes a voltage detection circuit configured to detect an output voltage of the power supply and a current detection circuit configured to detect a current flowing between the power supply and the current conversion circuit.

**10.** The power supply unit of the aerosol generating device according to any one of claims 1 to 9, further comprising:

a positive-side connector to which one end of the coil is connected; and
a negative-side connector to which the other end of the coil is connected, wherein
the first detection circuit includes:

a first resistor having one end connected to the positive-side connector;
a second resistor having one end connected to the negative-side connector and the other end connected to the ground;
a switch device having one end connected to the other end of the first resistor and the other end connected to the other end of the second resistor;
a first detector configured to detect a voltage applied to both ends of the first resistor; and
a second detector configured to detect a voltage applied to both ends of the second resistor.

**11.** The power supply unit of the aerosol generating device according to any one of claims 1 to 9, further comprising:

a positive-side connector to which one end of the coil is connected; and
a negative-side connector to which the other end of the coil is connected, wherein

the first detection circuit includes:

a switch device having one end connected to the positive-side connector;
a resistor having one end connected to the negative-side connector and the other end connected to the other end of the switch device; and
a bidirectional current sense amplifier connected to both ends of the resistor and configured to detect a current flowing through the resistor and a direction thereof.

**12.** The power supply unit of the aerosol generating device according to any one of claims 1 to 9, further comprising:

a negative power supply generating circuit configured to generate a negative voltage based on the power supplied from the power supply;
a positive-side connector to which one end of the coil is connected; and
a negative-side connector to which the other end of the coil is connected, wherein
the first detection circuit includes:

a switch device having one end connected to the positive-side connector;
a resistor having one end connected to the negative-side connector and the other end connected to the other end of the switch device; and
an operational amplifier having one of an inverting input terminal and a non-inverting input terminal connected to one end of the resistor, the other of the inverting input terminal and the non-inverting input terminal connected to the other end of the resistor, and the negative voltage supplied to a negative power supply terminal.

**13.** The power supply unit of the aerosol generating device according to any one of claims 1 to 9, further comprising:

a positive-side connector to which one end of the coil is connected;
a negative-side connector to which the other end of the coil is connected; and
an inverter configured to convert a direct current supplied from the power supply into an alternating current and including a positive-side output terminal and a negative-side output terminal, wherein
the first detection circuit includes:

a first resistor configured to connect the positive-side connector and the positive-side output terminal;
a second resistor configured to connect the negative-side connector and the negative-side output terminal;
a first detector configured to detect a voltage applied to both ends of the first resistor; and
a second detector configured to detect a voltage applied to both ends of the second resistor.

**14.** A power supply unit of an aerosol generating device, comprising:

a power supply;
a coil configured to generate an eddy current to a susceptor configured to heat an aerosol source using power supplied from the power supply;
a current conversion circuit connected between the coil and the power supply and configured to convert a direct current supplied from the power supply into a pulsating current or an alternating current;
a first detection circuit configured to detect information related to an aerosol generating article including the aerosol source and the susceptor;
a second detection circuit configured to detect information related to the aerosol generating article and different from the first detection circuit; and
a controller, wherein
the controller is configured to:

start heating control of supplying power for heating the aerosol source from the power supply to the coil based on an output of the first detection circuit; and
control the power supplied from the power supply to the coil in the heating control based on an output of the second detection circuit.

**15.** A power supply unit of an aerosol generating device, comprising:

a power supply;
a coil configured to generate an eddy current to a susceptor configured to heat an aerosol source using power supplied from the power supply;
an opening into which an aerosol generating article including the aerosol source and the susceptor is configured to be inserted and which is at least partially surrounded by the coil;
a current conversion circuit connected between the coil and the power supply and configured to convert a direct current supplied from the power supply into a pulsating current or an alternating current;
a first detection circuit configured to detect information related to the aerosol generating article;
a second detection circuit configured to detect information related to the aerosol generating article and different from the first detection circuit; and
a controller, wherein
the controller is configured to:

execute heating control of supplying power for heating the aerosol source from the power supply to the coil;
control the power supplied from the power supply to the coil in the heating control based on an output of the second detection circuit; and
detect removal of the aerosol generating article from the opening after completion of the heating control based on an output of the first detection circuit.

**16.** A power supply unit of an aerosol generating device, comprising:

a power supply;
a coil configured to generate an eddy current to a susceptor configured to heat an aerosol source using power supplied from the power supply;
an opening into which an aerosol generating article including the aerosol source and the susceptor is configured to be inserted and which is at least partially surrounded by the coil;
a current conversion circuit connected between the coil and the power supply and configured to convert a direct current supplied from the power supply into a pulsating current or an alternating current;
a first detection circuit configured to detect information related to the aerosol generating article;
a second detection circuit configured to detect information related to the aerosol generating article and different from the first detection circuit; and
a controller, wherein
the controller is configured to:

detect insertion of the aerosol generating article into the opening based on an output of the first detection circuit; and
detect removal of the aerosol generating article from the opening based on an output of the second detection circuit.

FIG. 1

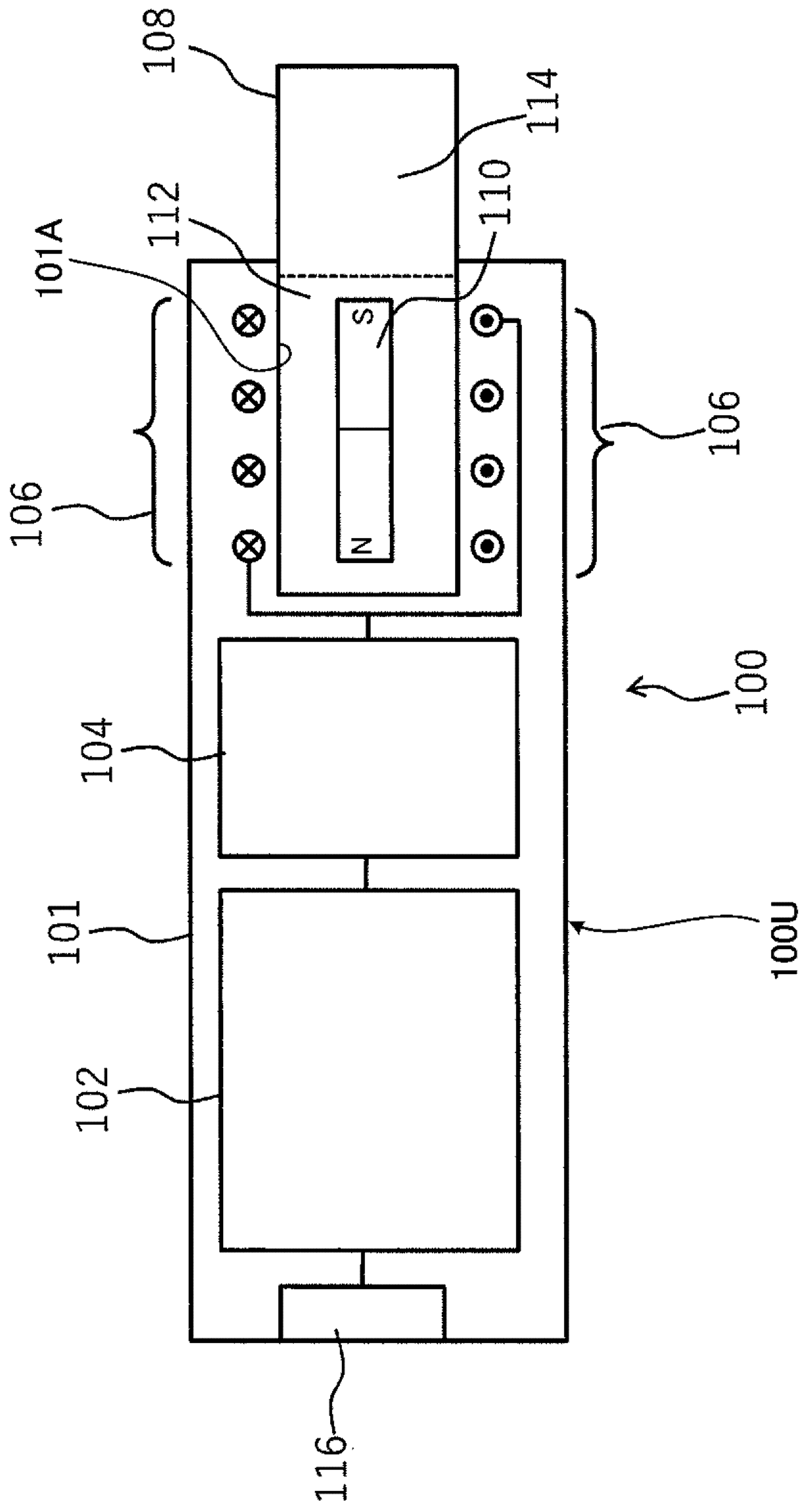

FIG. 2

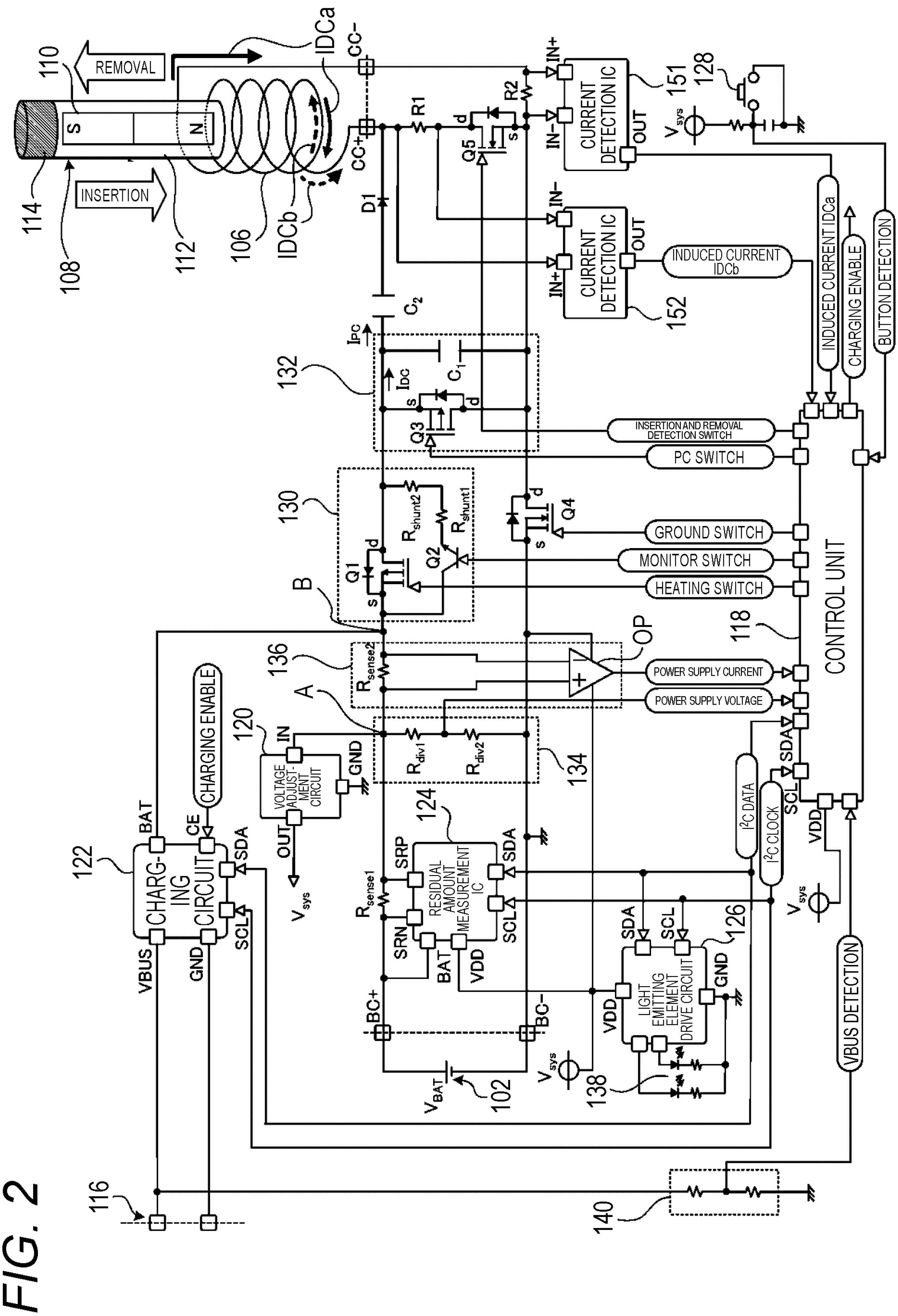
110
REMOVAL
S
N
114
INSERTION
108
112
106
IDCb
IDCa
CC−
CC+
D1
R1
R2
Q5
IN+
IN−
OUT
CURRENT DETECTION IC
151
128
V
sys
152
INDUCED CURRENT IDCb
INDUCED CURRENT IDCa
CHARGING ENABLE
BUTTON DETECTION
C2
IPC
IDC
C1
132
Q3
INSERTION AND REMOVAL DETECTION SWITCH
PC SWITCH
130
Q1
Q2
Rshunt2
Rshunt1
Q4
GROUND SWITCH
MONITOR SWITCH
HEATING SWITCH
CONTROL UNIT
118
B
136
Rsense2
OP
POWER SUPPLY CURRENT
POWER SUPPLY VOLTAGE
A
120
VOLTAGE ADJUSTMENT CIRCUIT
IN
OUT
GND
Rdiv1
Rdiv2
134
SDA
SCL
VDD
I2C DATA
I2C CLOCK
124
RESIDUAL AMOUNT MEASUREMENT IC
SRP
SRN
BAT
Rsense1
126
LIGHT EMITTING ELEMENT DRIVE CIRCUIT
138
BC+
BC−
VBAT
102
122
CHARGING CIRCUIT
VBUS
CE
CHARGING ENABLE
VBUS DETECTION
116
140

FIG. 3

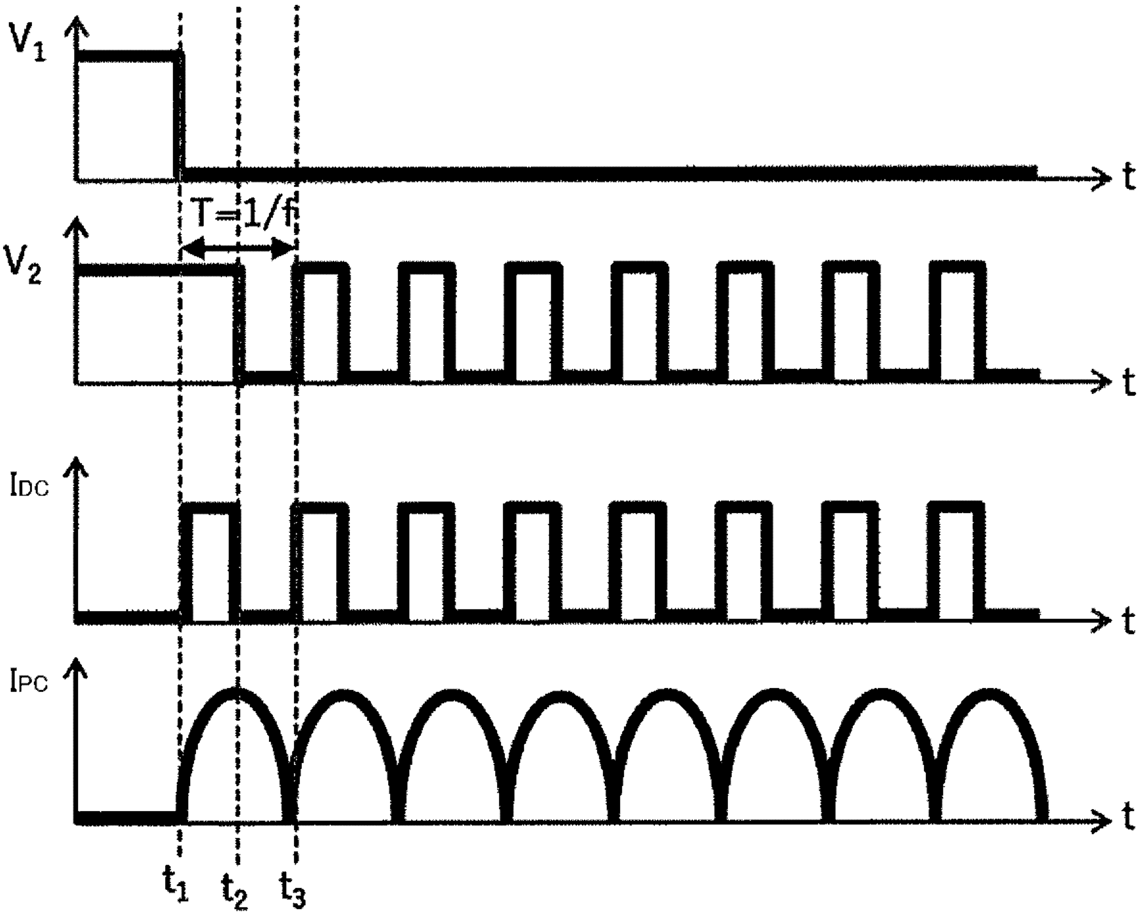

FIG. 4

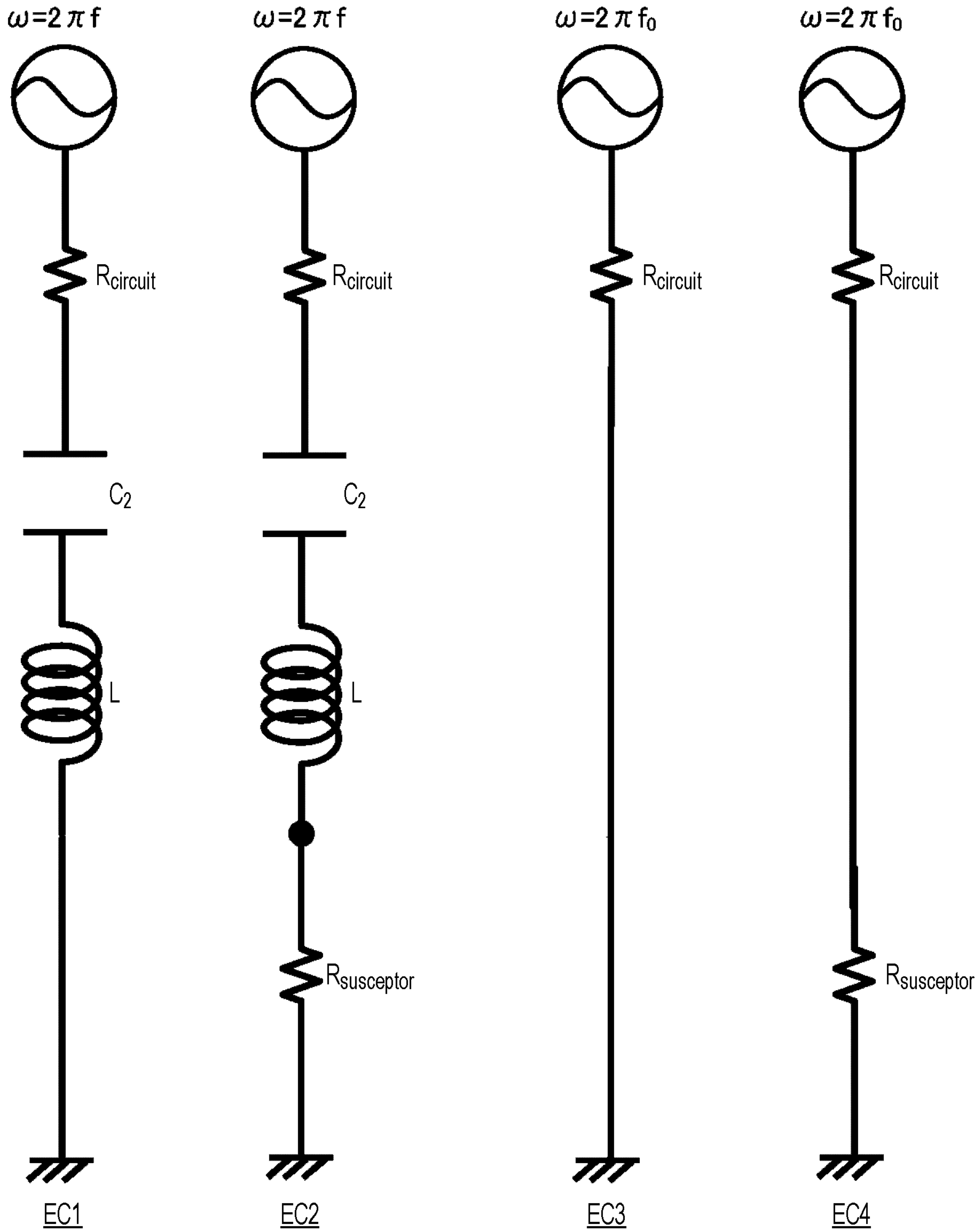
ω=2πf
Rcircuit
C2
L
EC1
ω=2πf
Rcircuit
C2
L
Rsusceptor
EC2
ω=2πf0
Rcircuit
EC3
ω=2πf0
Rcircuit
Rsusceptor
EC4

FIG. 5

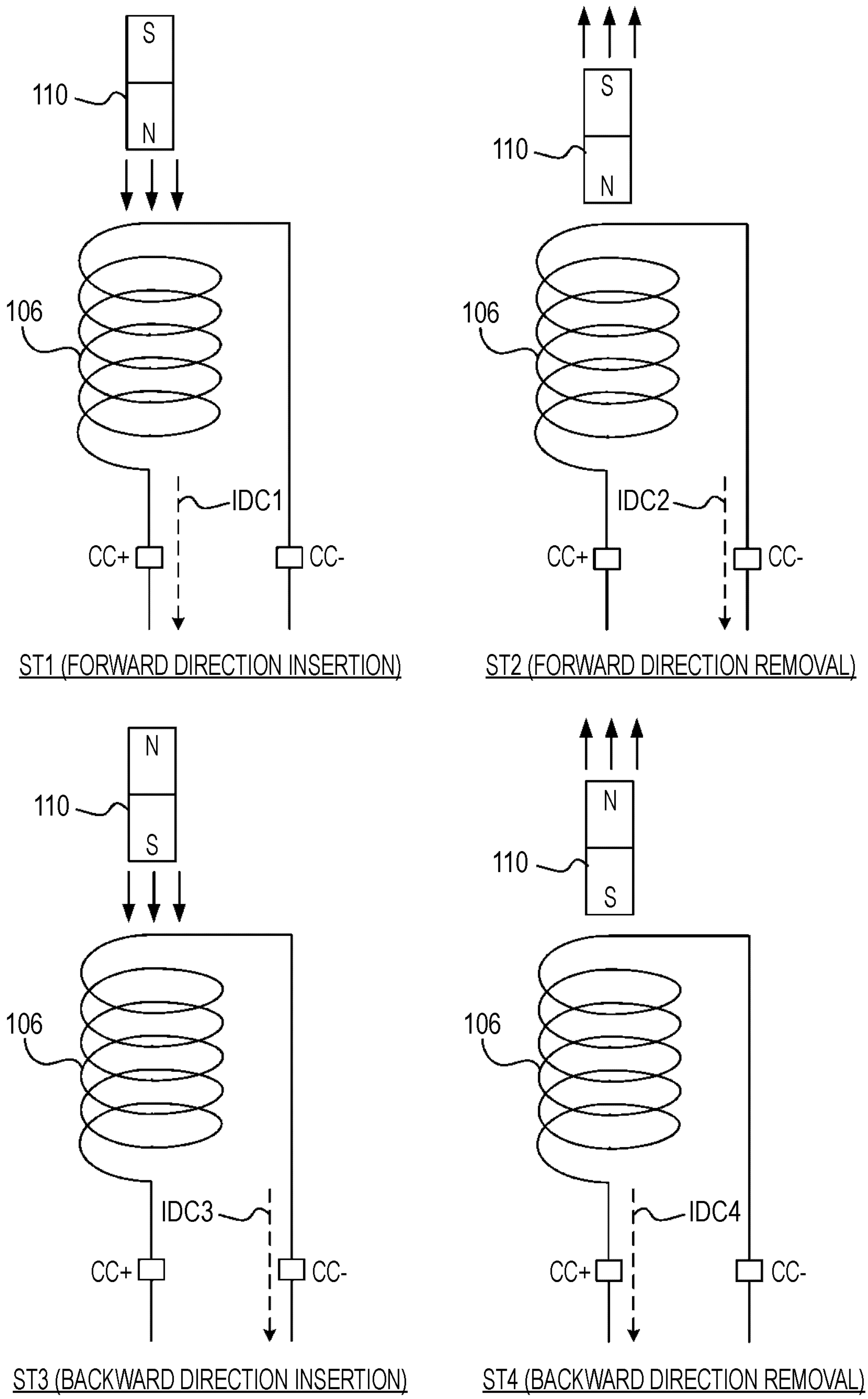
110
S
N
106
IDC1
CC+
CC-
ST1 (FORWARD DIRECTION INSERTION)
S
110
N
106
IDC2
CC+
CC-
ST2 (FORWARD DIRECTION REMOVAL)
N
110
S
106
IDC3
CC+
CC-
ST3 (BACKWARD DIRECTION INSERTION)
N
110
S
106
IDC4
CC+
CC-
ST4 (BACKWARD DIRECTION REMOVAL)

FIG. 6

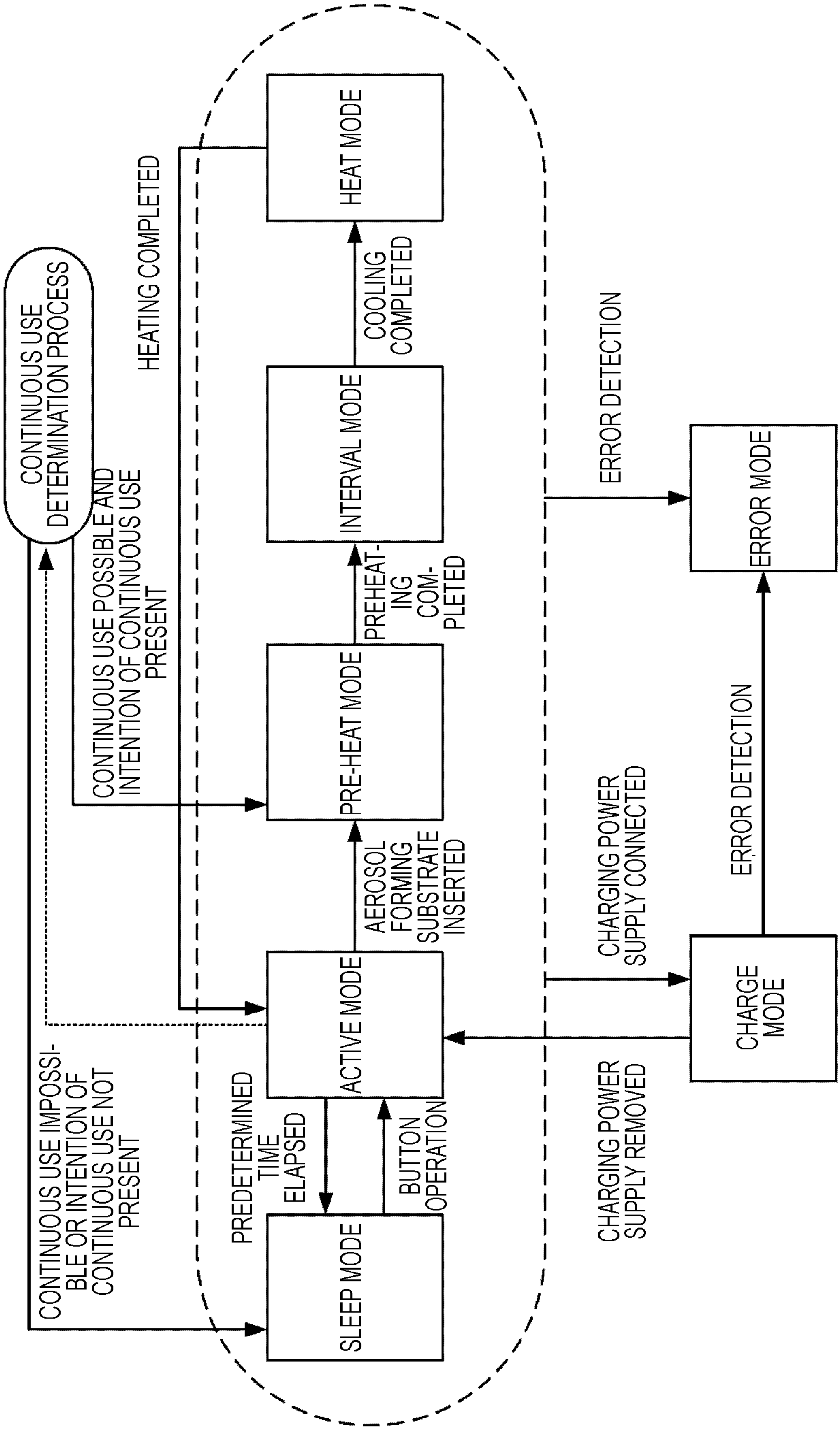
CONTINUOUS USE DETERMINATION PROCESS
HEATING COMPLETED
HEAT MODE
COOLING COMPLETED
INTERVAL MODE
PREHEAT-ING COM-PLETED
PRE-HEAT MODE
CONTINUOUS USE POSSIBLE AND INTENTION OF CONTINUOUS USE PRESENT
AEROSOL FORMING SUBSTRATE INSERTED
ACTIVE MODE
CONTINUOUS USE IMPOSSI-BLE OR INTENTION OF CONTINUOUS USE NOT PRESENT
PREDETERMINED TIME ELAPSED
BUTTON OPERATION
SLEEP MODE
ERROR DETECTION
ERROR MODE
ERROR DETECTION
CHARGING POWER SUPPLY CONNECTED
CHARGE MODE
CHARGING POWER SUPPLY REMOVED

FIG. 7

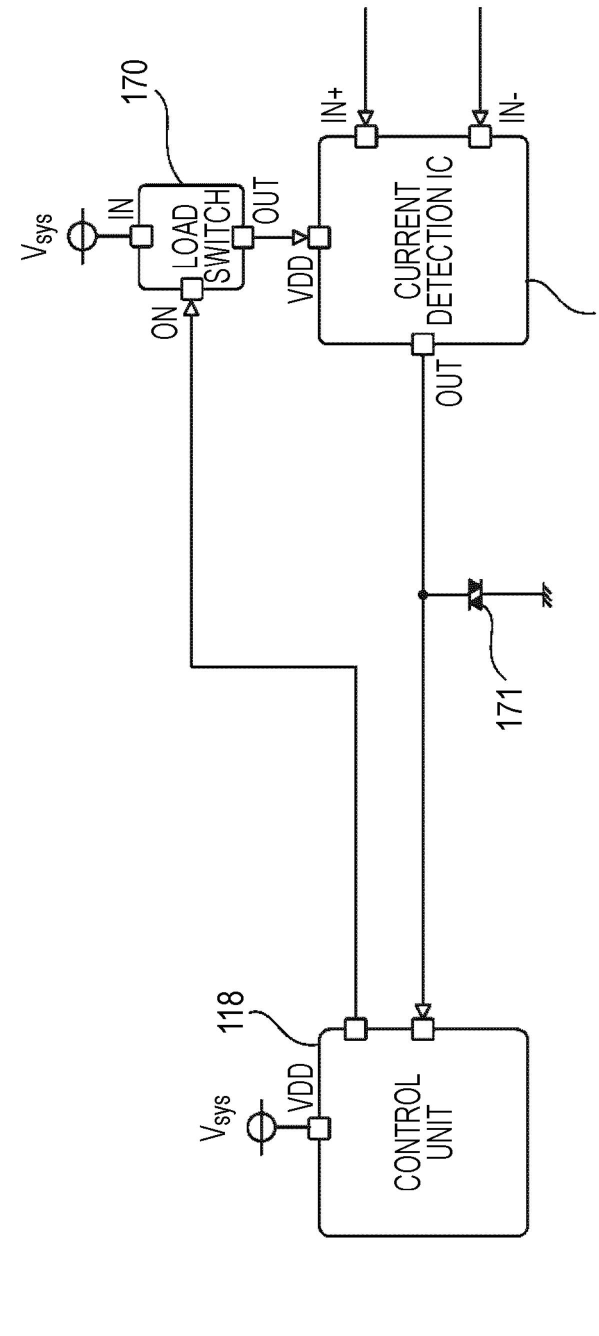
170
V_sys
IN
LOAD SWITCH
OUT
ON
VDD
IN+
IN-
CURRENT DETECTION IC
151
OUT
171
118
V_sys
VDD
CONTROL UNIT

FIG. 8

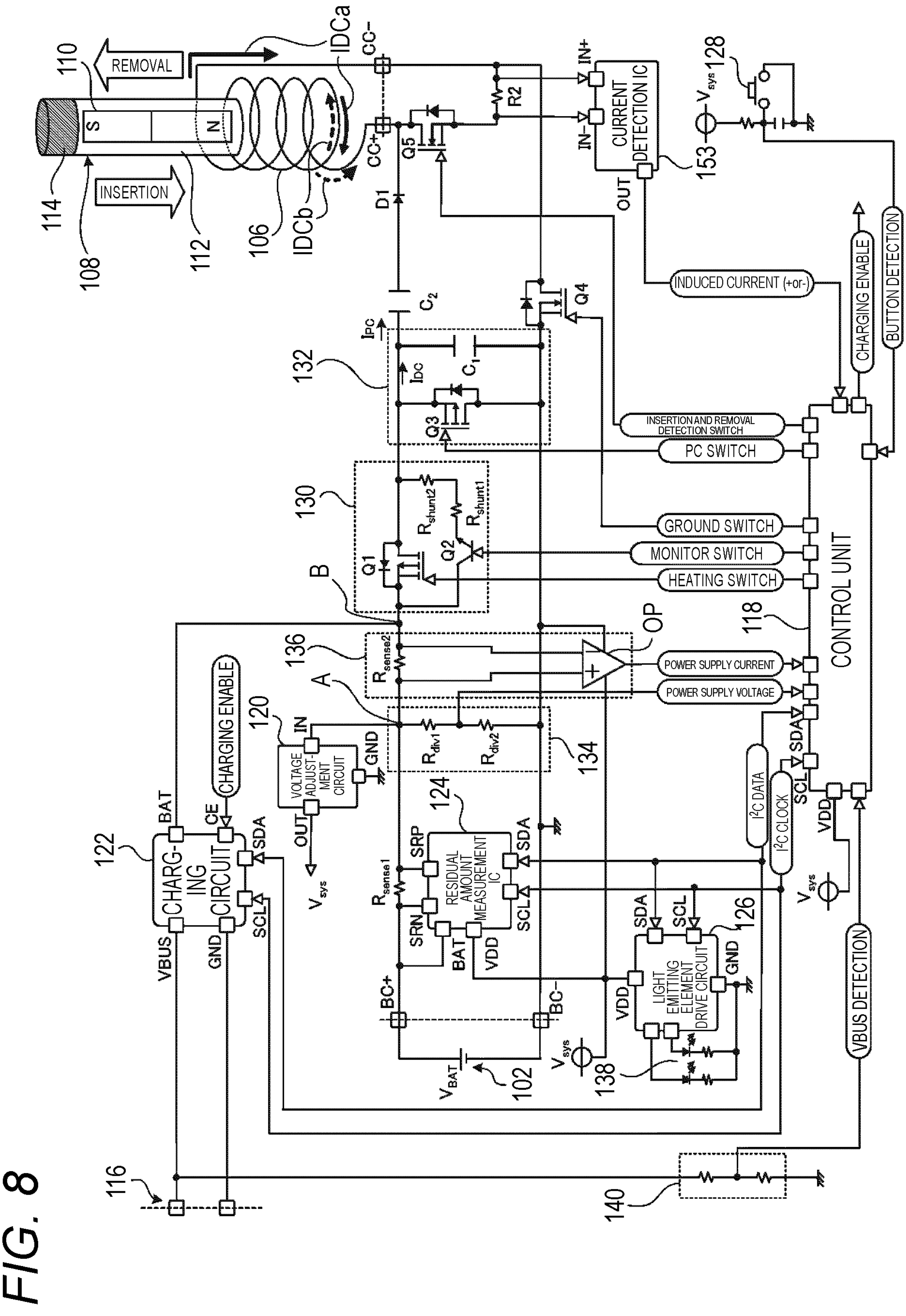
REMOVAL
INSERTION
110
114
108
112
106
IDCa
IDCb
S
N
CC-
CC+
Q5
D1
R2
IN+
IN-
CURRENT DETECTION IC
OUT
153
128
$V_{sys}$
$C_2$
$C_1$
$I_{PC}$
$I_{DC}$
Q3
Q4
132
130
Q1
Q2
$R_{shunt1}$
$R_{shunt2}$
B
A
136
$R_{sense2}$
OP
134
$R_{div1}$
$R_{div2}$
120
VOLTAGE ADJUST-MENT CIRCUIT
IN
GND
OUT
122
CHARG-ING CIRCUIT
BAT
CE
SDA
SCL
VBUS
GND
CHARGING ENABLE
124
RESIDUAL AMOUNT MEASUREMENT IC
SRP
SRN
VDD
$R_{sense1}$
BC+
BC-
$V_{BAT}$
102
126
LIGHT EMITTING ELEMENT DRIVE CIRCUIT
138
116
140
CONTROL UNIT
118
INDUCED CURRENT (+or-)
BUTTON DETECTION
INSERTION AND REMOVAL DETECTION SWITCH
PC SWITCH
GROUND SWITCH
MONITOR SWITCH
HEATING SWITCH
POWER SUPPLY CURRENT
POWER SUPPLY VOLTAGE
$I^2C$ DATA
$I^2C$ CLOCK
VBUS DETECTION

FIG. 9

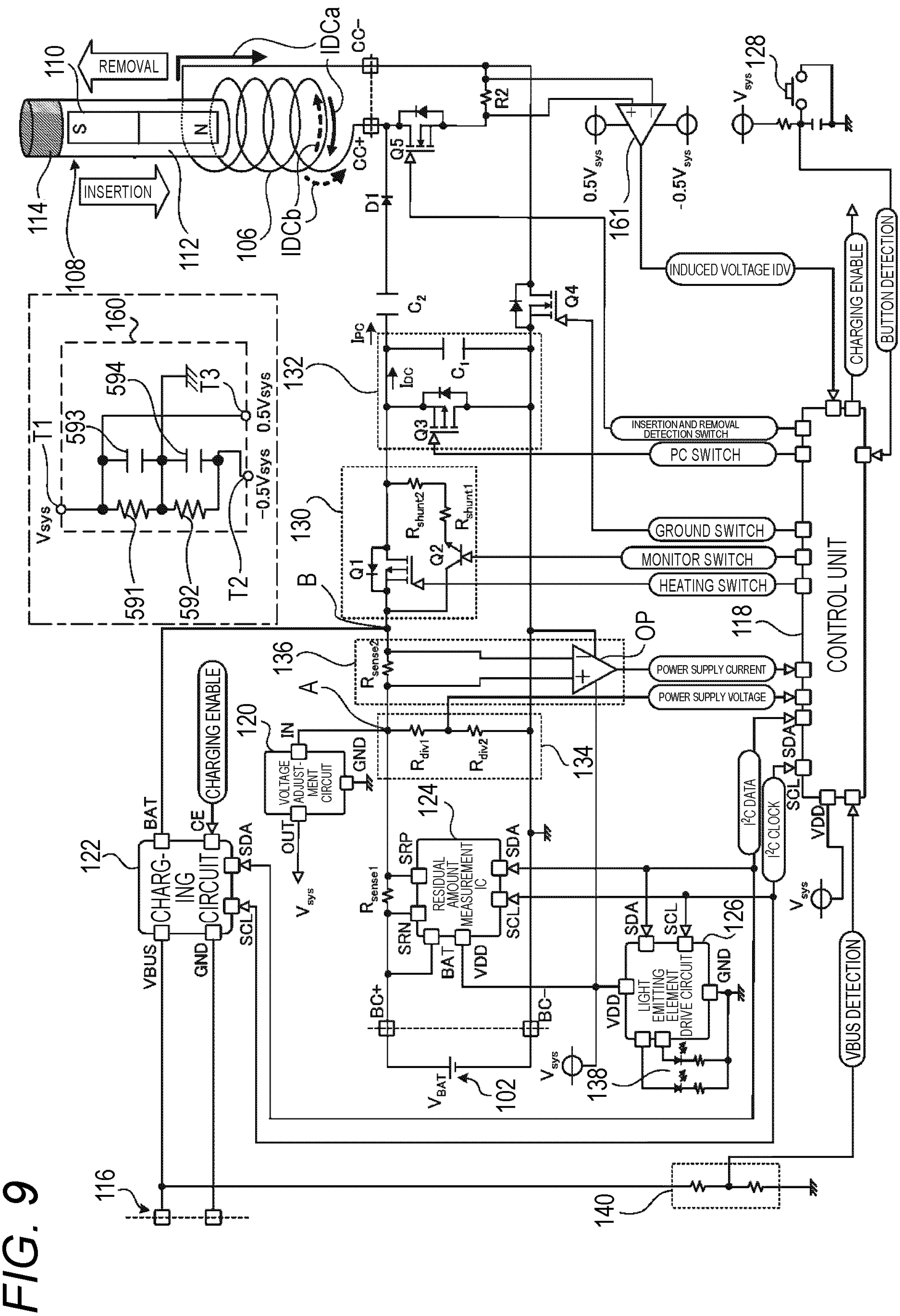
REMOVAL
INSERTION
110
114
108
112
106
S
N
IDCa
IDCb
CC-
CC+
Q5
D1
R2
0.5Vsys
-0.5Vsys
161
INDUCED VOLTAGE IDV
CHARGING ENABLE
BUTTON DETECTION
128
Vsys
160
T1
T2
T3
593
594
591
592
Vsys
-0.5Vsys
0.5Vsys
132
C2
C1
IPC
IDC
Q3
Q4
INSERTION AND REMOVAL DETECTION SWITCH
PC SWITCH
130
Rshunt2
Rshunt1
Q1
Q2
B
GROUND SWITCH
MONITOR SWITCH
HEATING SWITCH
CONTROL UNIT
118
136
Rsense2
OP
A
POWER SUPPLY CURRENT
POWER SUPPLY VOLTAGE
120
VOLTAGE ADJUSTMENT CIRCUIT
IN
OUT
GND
Rdiv1
Rdiv2
134
CHARGING ENABLE
122
CHARGING CIRCUIT
BAT
CE
SDA
SCL
VBUS
GND
124
RESIDUAL AMOUNT MEASUREMENT IC
SRP
SRN
Rsense1
VDD
I2C DATA
I2C CLOCK
126
LIGHT EMITTING ELEMENT DRIVE CIRCUIT
BC+
BC-
VBAT
102
138
VBUS DETECTION
116
140

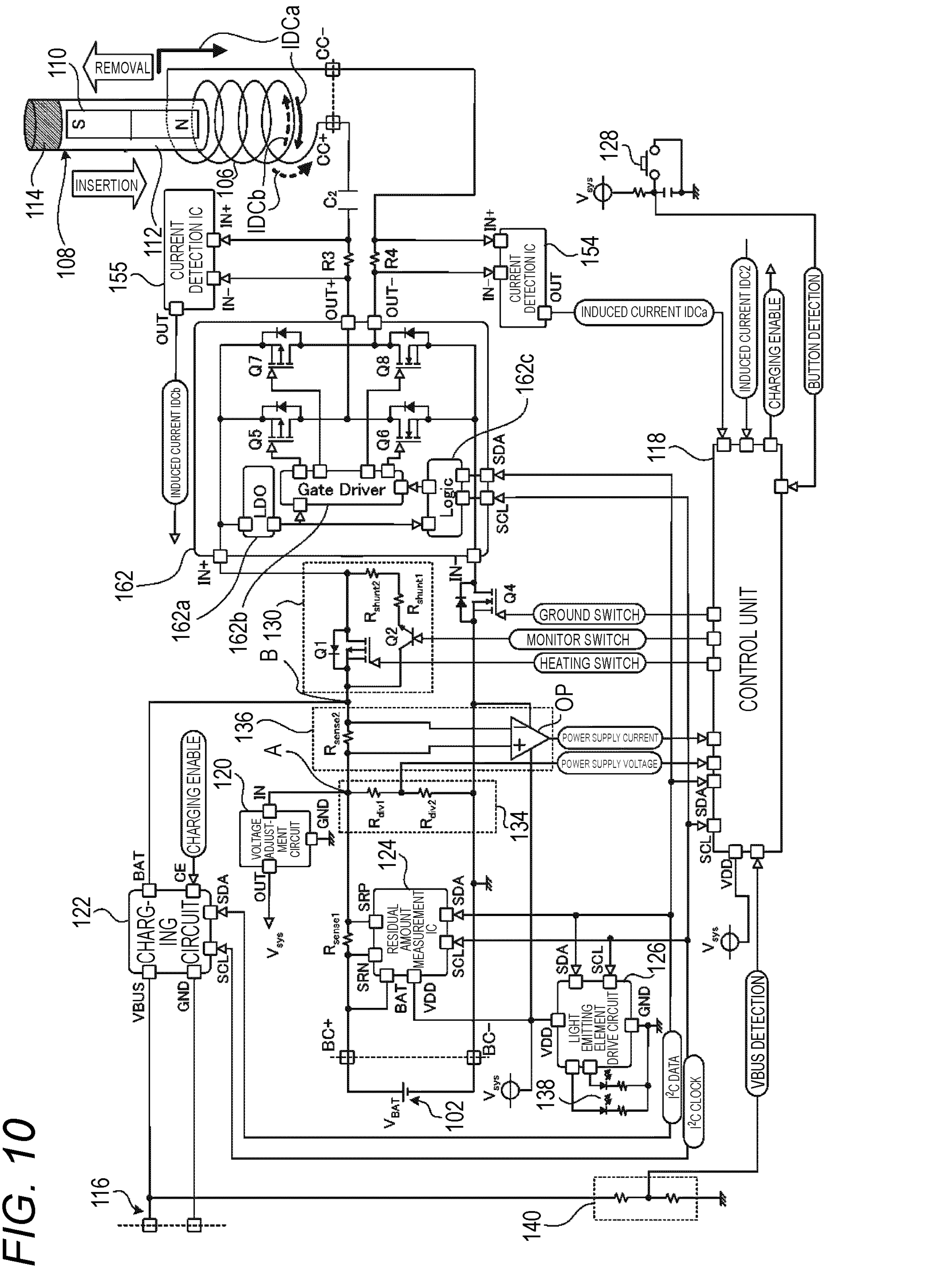
REMOVAL
INSERTION
S
N
110
114
108
112
106
IDCa
IDCb
CC−
CC+
C2
CURRENT DETECTION IC
IN+
IN−
OUT
155
154
R3
R4
OUT+
OUT−
INDUCED CURRENT IDCb
INDUCED CURRENT IDCa
INDUCED CURRENT IDC2
CHARGING ENABLE
BUTTON DETECTION
128
Vsys
Q5
Q6
Q7
Q8
LDO
Gate Driver
Logic
SDA
SCL
162
162a
162b
162c
IN+
IN−
Q4
Q1
Q2
Rshunt1
Rshunt2
130
B
GROUND SWITCH
MONITOR SWITCH
HEATING SWITCH
118
CONTROL UNIT
136
Rsense2
OP
A
POWER SUPPLY CURRENT
POWER SUPPLY VOLTAGE
120
VOLTAGE ADJUSTMENT CIRCUIT
IN
OUT
GND
Rdiv1
Rdiv2
134
124
RESIDUAL AMOUNT MEASUREMENT IC
SRP
SRN
BAT
VDD
122
CHARGING CIRCUIT
VBUS
CE
CHARGING ENABLE
126
LIGHT EMITTING ELEMENT DRIVE CIRCUIT
Rsense1
BC+
BC−
VBAT
102
138
I2C DATA
I2C CLOCK
VBUS DETECTION
116
140
FIG. 10

# FIG. 11

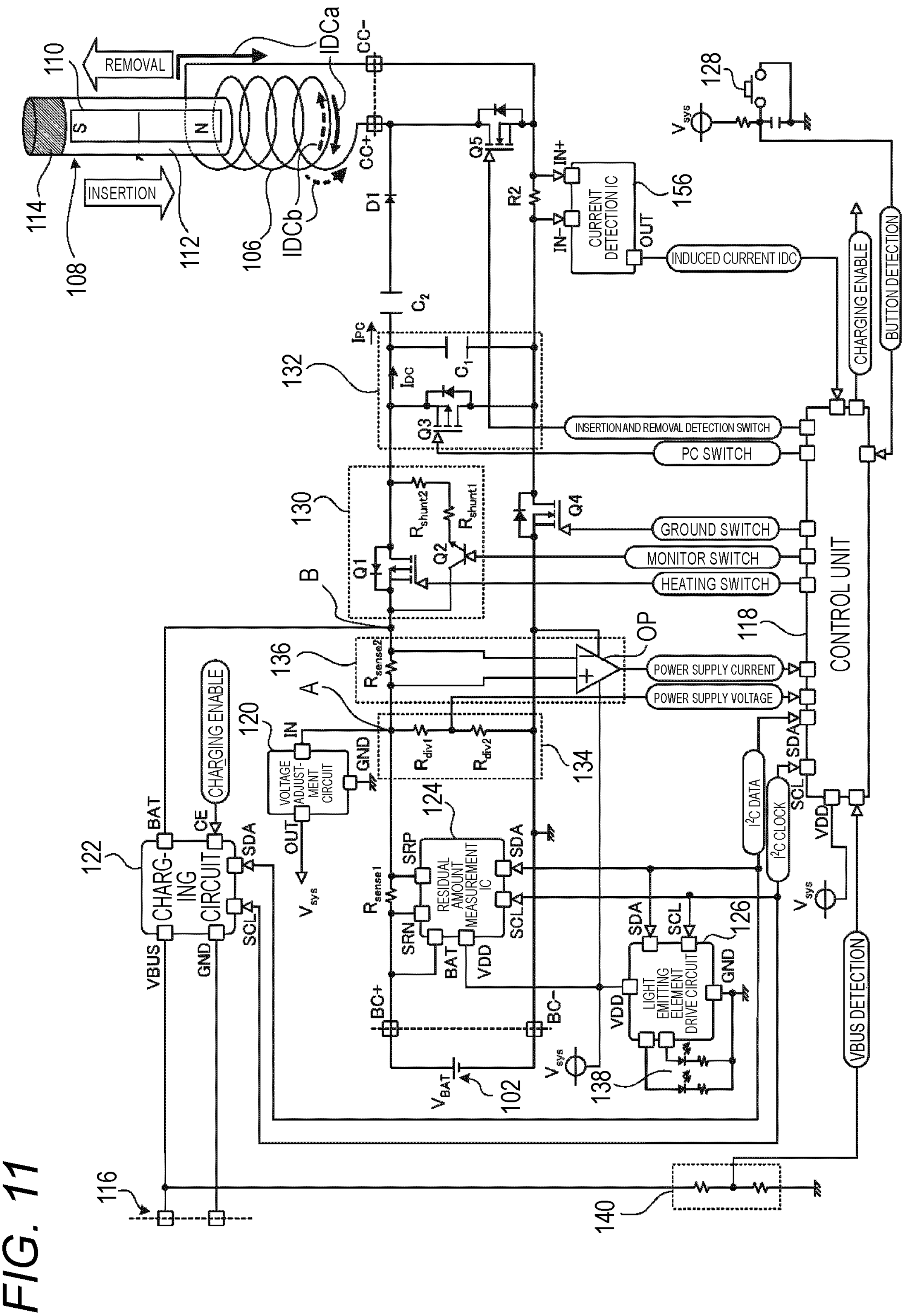

110
REMOVAL
IDCa
CC-
S
N
114
108
INSERTION
112
106
IDCb
CC+
D1
Q5
R2
IN+
IN-
CURRENT DETECTION IC
156
OUT
INDUCED CURRENT IDC
128
Vsys
C2
IPC
IDC
132
C1
Q3
INSERTION AND REMOVAL DETECTION SWITCH
PC SWITCH
CHARGING ENABLE
BUTTON DETECTION
130
Rshunt2
Rshunt1
Q1
Q2
Q4
B
GROUND SWITCH
MONITOR SWITCH
HEATING SWITCH
CONTROL UNIT
118
OP
136
Rsense2
POWER SUPPLY CURRENT
POWER SUPPLY VOLTAGE
A
120
IN
VOLTAGE ADJUST-MENT CIRCUIT
GND
OUT
Rdiv1
Rdiv2
134
SDA
SCL
VDD
I2C DATA
I2C CLOCK
CHARGING ENABLE
122
BAT
CE
CHARG-ING CIRCUIT
VBUS
GND
124
SRP
Rsense1
SRN
RESIDUAL AMOUNT MEASUREMENT IC
126
LIGHT EMITTING ELEMENT DRIVE CIRCUIT
BC+
BC-
VBAT
102
138
VBUS DETECTION
116
140

FIG. 12

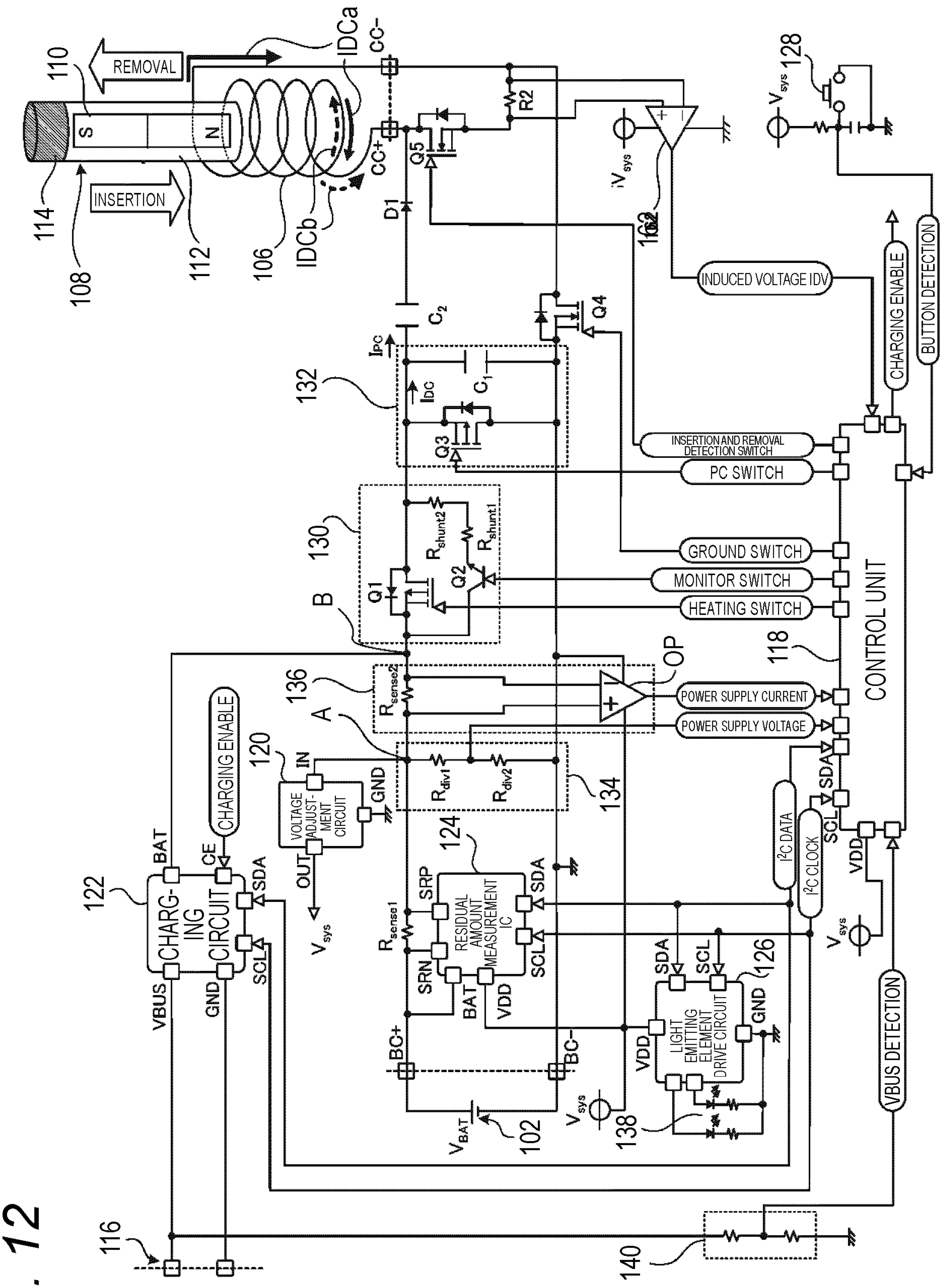
REMOVAL
INSERTION
110
114
108
112
106
IDCa
IDCb
CC-
CC+
Q5
D1
R2
162
128
C2
Q4
INDUCED VOLTAGE IDV
CHARGING ENABLE
BUTTON DETECTION
132
C1
Q3
INSERTION AND REMOVAL DETECTION SWITCH
PC SWITCH
130
Q1
Q2
GROUND SWITCH
MONITOR SWITCH
HEATING SWITCH
CONTROL UNIT
118
B
OP
136
POWER SUPPLY CURRENT
POWER SUPPLY VOLTAGE
A
120
VOLTAGE ADJUST-MENT CIRCUIT
IN
OUT
GND
134
SDA
SCL
VDD
I2C DATA
I2C CLOCK
CHARGING ENABLE
122
CHARG-ING CIRCUIT
BAT
CE
VBUS
124
RESIDUAL AMOUNT MEASUREMENT IC
SRP
SRN
126
LIGHT EMITTING ELEMENT DRIVE CIRCUIT
BC+
BC-
102
138
VBUS DETECTION
116
140

FIG. 13

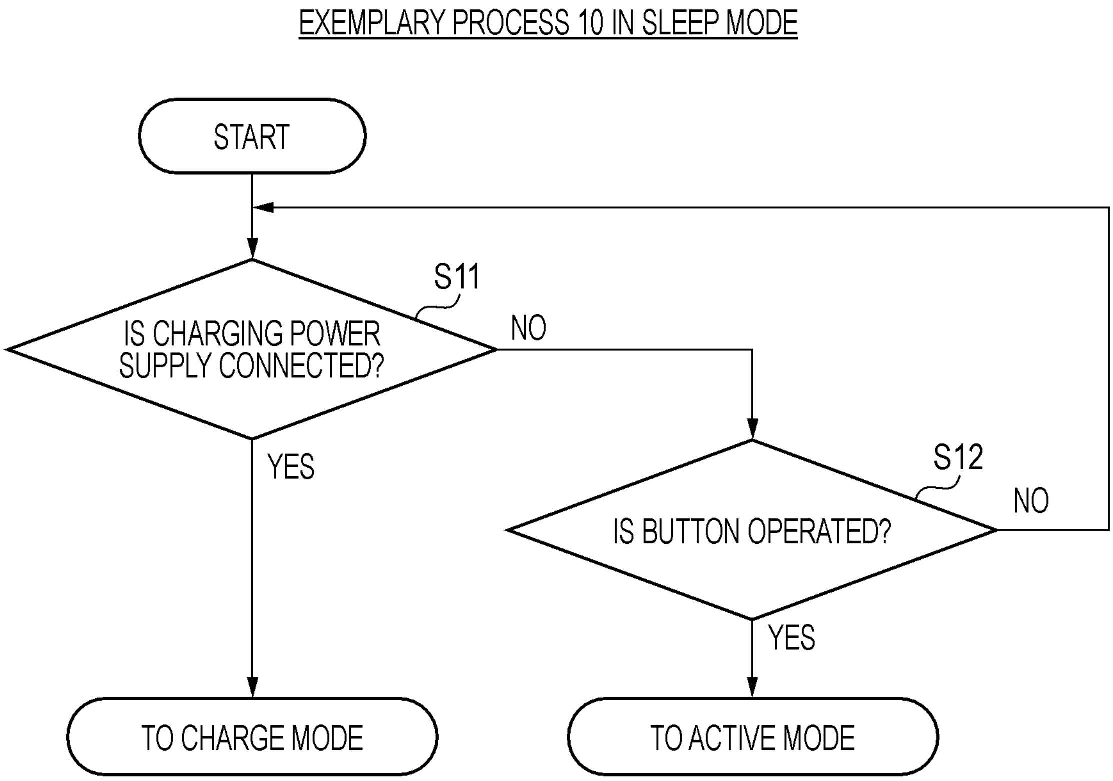
EXEMPLARY PROCESS 10 IN SLEEP MODE
START
S11
IS CHARGING POWER SUPPLY CONNECTED?
NO
YES
S12
IS BUTTON OPERATED?
NO
YES
TO CHARGE MODE
TO ACTIVE MODE

# FIG. 14

EXEMPLARY PROCESS 20 IN CHARGE MODE

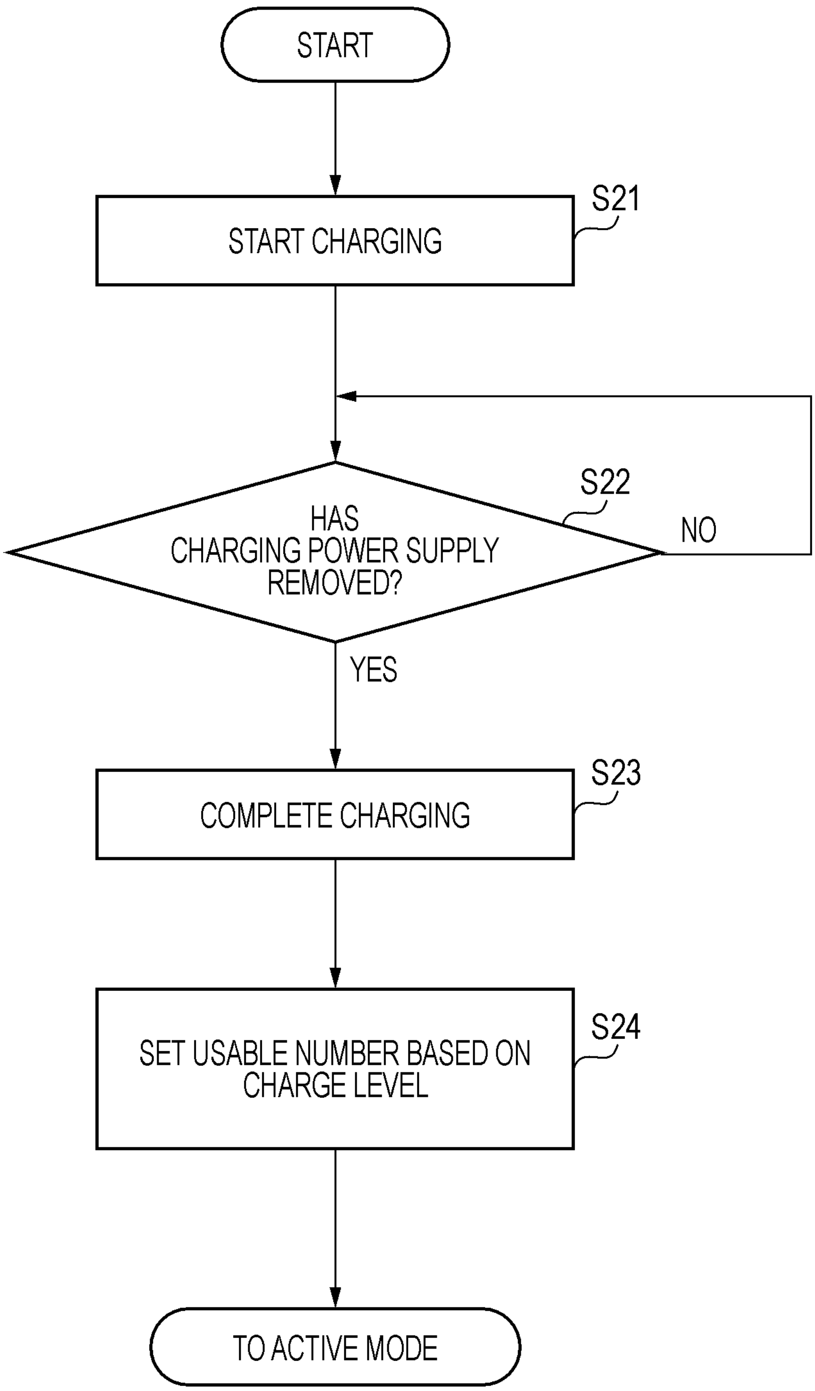

FIG. 15

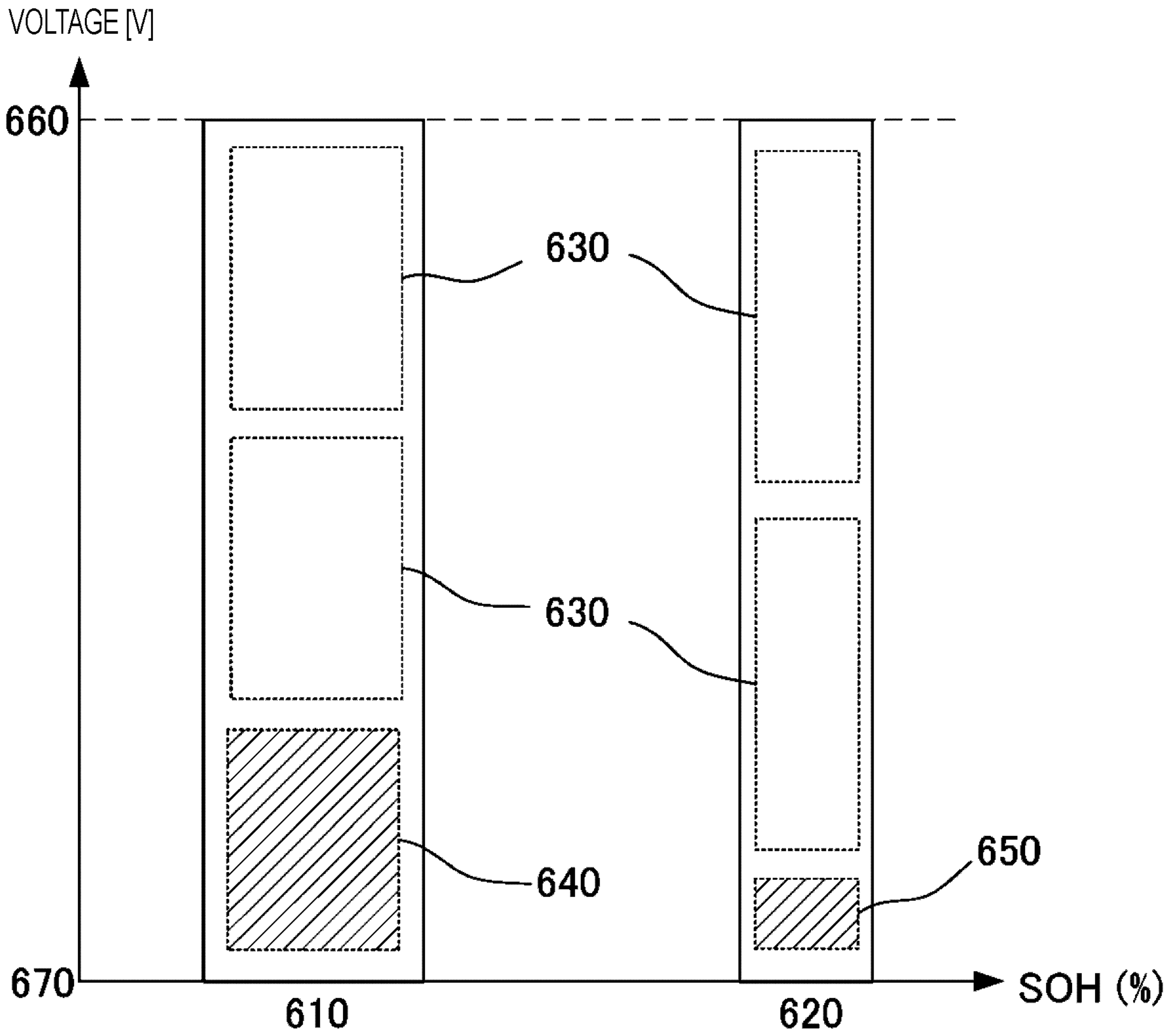

FIG. 16

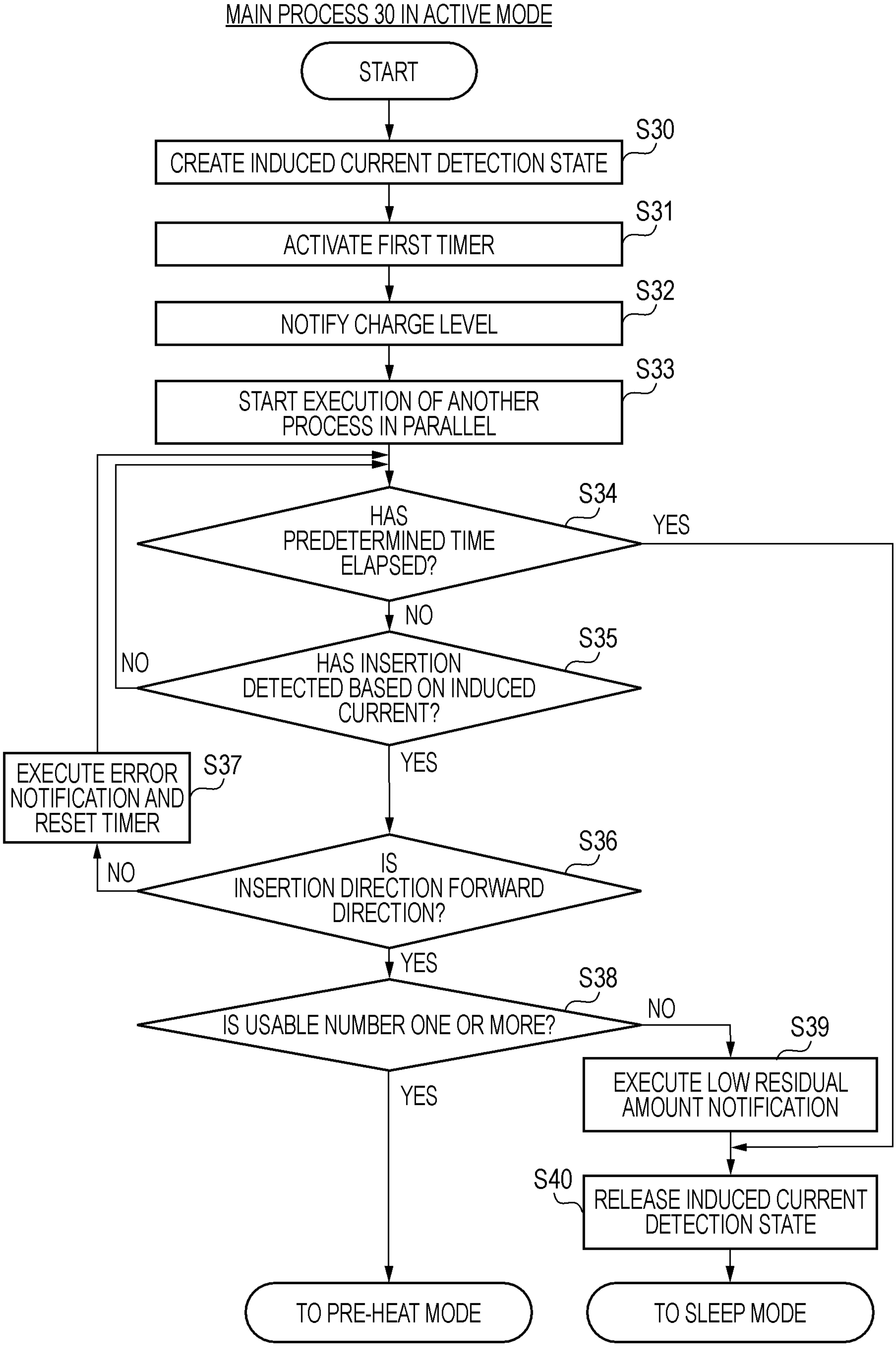
MAIN PROCESS 30 IN ACTIVE MODE
START
S30
CREATE INDUCED CURRENT DETECTION STATE
S31
ACTIVATE FIRST TIMER
S32
NOTIFY CHARGE LEVEL
S33
START EXECUTION OF ANOTHER PROCESS IN PARALLEL
S34
HAS PREDETERMINED TIME ELAPSED?
YES
NO
S35
HAS INSERTION DETECTED BASED ON INDUCED CURRENT?
NO
YES
S37
EXECUTE ERROR NOTIFICATION AND RESET TIMER
S36
IS INSERTION DIRECTION FORWARD DIRECTION?
NO
YES
S38
IS USABLE NUMBER ONE OR MORE?
NO
S39
EXECUTE LOW RESIDUAL AMOUNT NOTIFICATION
YES
S40
RELEASE INDUCED CURRENT DETECTION STATE
TO PRE-HEAT MODE
TO SLEEP MODE

FIG. 17

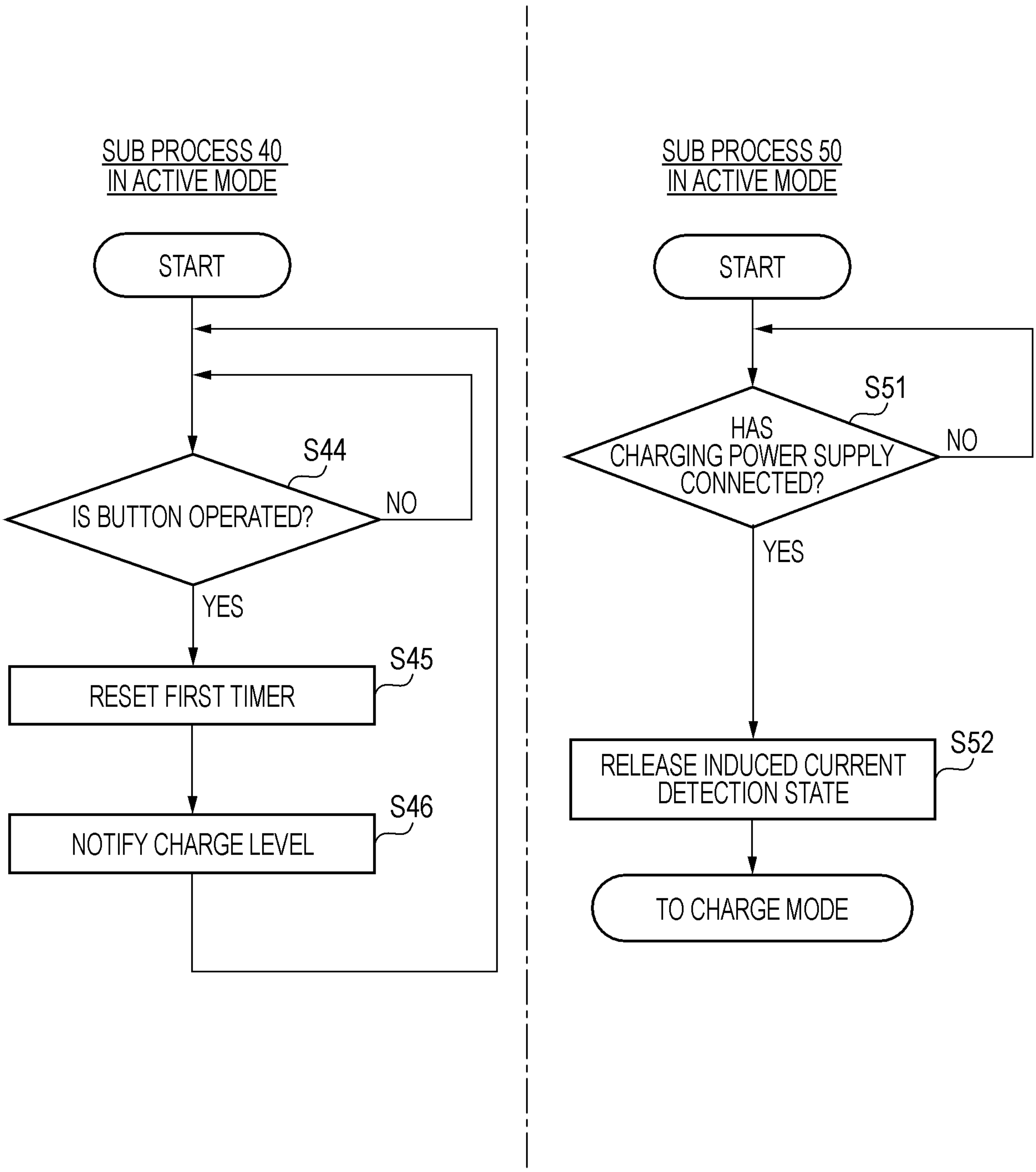
SUB PROCESS 40
IN ACTIVE MODE
START
S44
IS BUTTON OPERATED?
NO
YES
S45
RESET FIRST TIMER
S46
NOTIFY CHARGE LEVEL
SUB PROCESS 50
IN ACTIVE MODE
START
S51
HAS CHARGING POWER SUPPLY CONNECTED?
NO
YES
S52
RELEASE INDUCED CURRENT DETECTION STATE
TO CHARGE MODE

FIG. 18

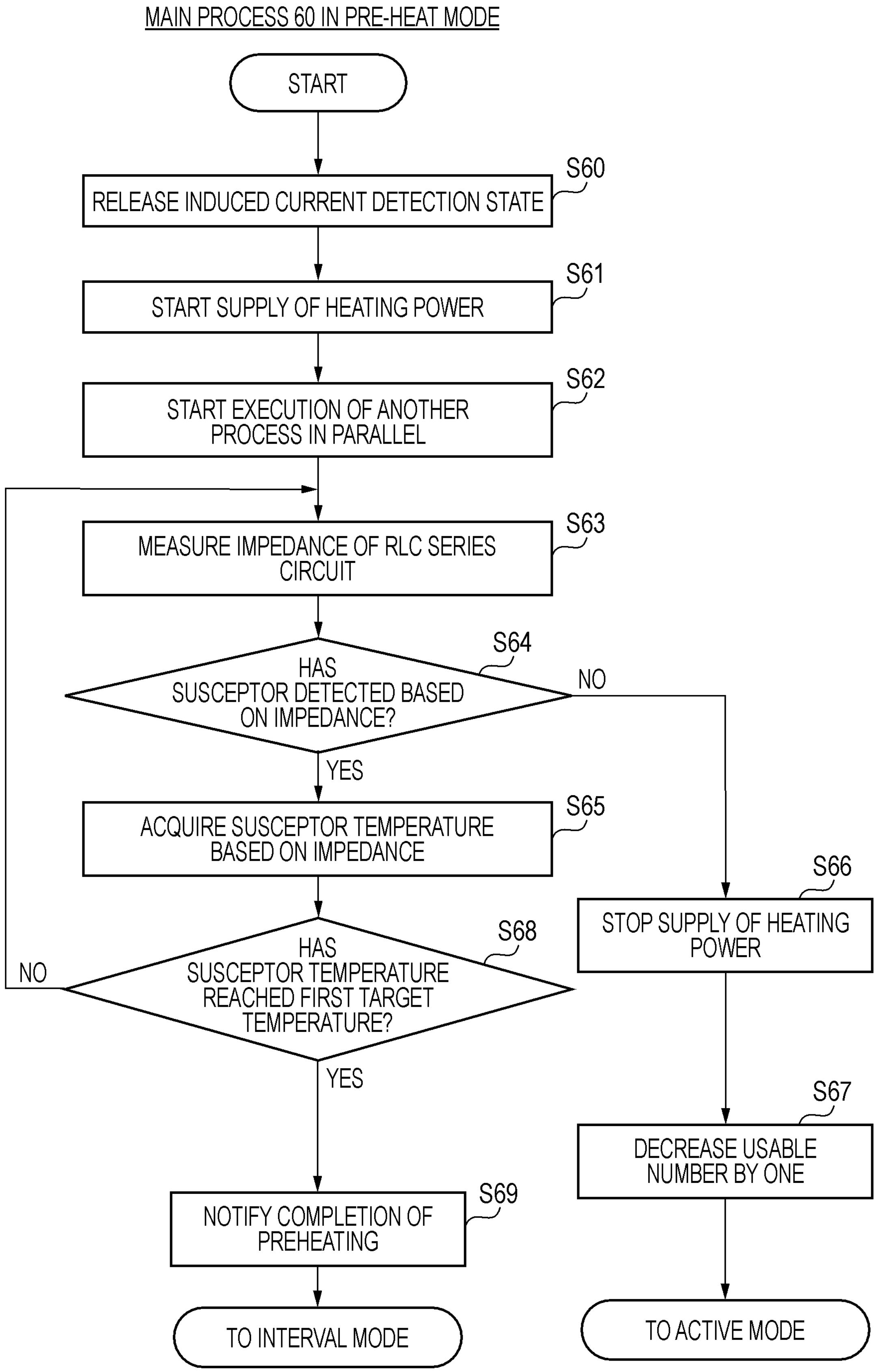
MAIN PROCESS 60 IN PRE-HEAT MODE
START
S60
RELEASE INDUCED CURRENT DETECTION STATE
S61
START SUPPLY OF HEATING POWER
S62
START EXECUTION OF ANOTHER PROCESS IN PARALLEL
S63
MEASURE IMPEDANCE OF RLC SERIES CIRCUIT
S64
HAS SUSCEPTOR DETECTED BASED ON IMPEDANCE?
NO
YES
S65
ACQUIRE SUSCEPTOR TEMPERATURE BASED ON IMPEDANCE
S66
STOP SUPPLY OF HEATING POWER
S68
HAS SUSCEPTOR TEMPERATURE REACHED FIRST TARGET TEMPERATURE?
NO
YES
S67
DECREASE USABLE NUMBER BY ONE
S69
NOTIFY COMPLETION OF PREHEATING
TO INTERVAL MODE
TO ACTIVE MODE

FIG. 19

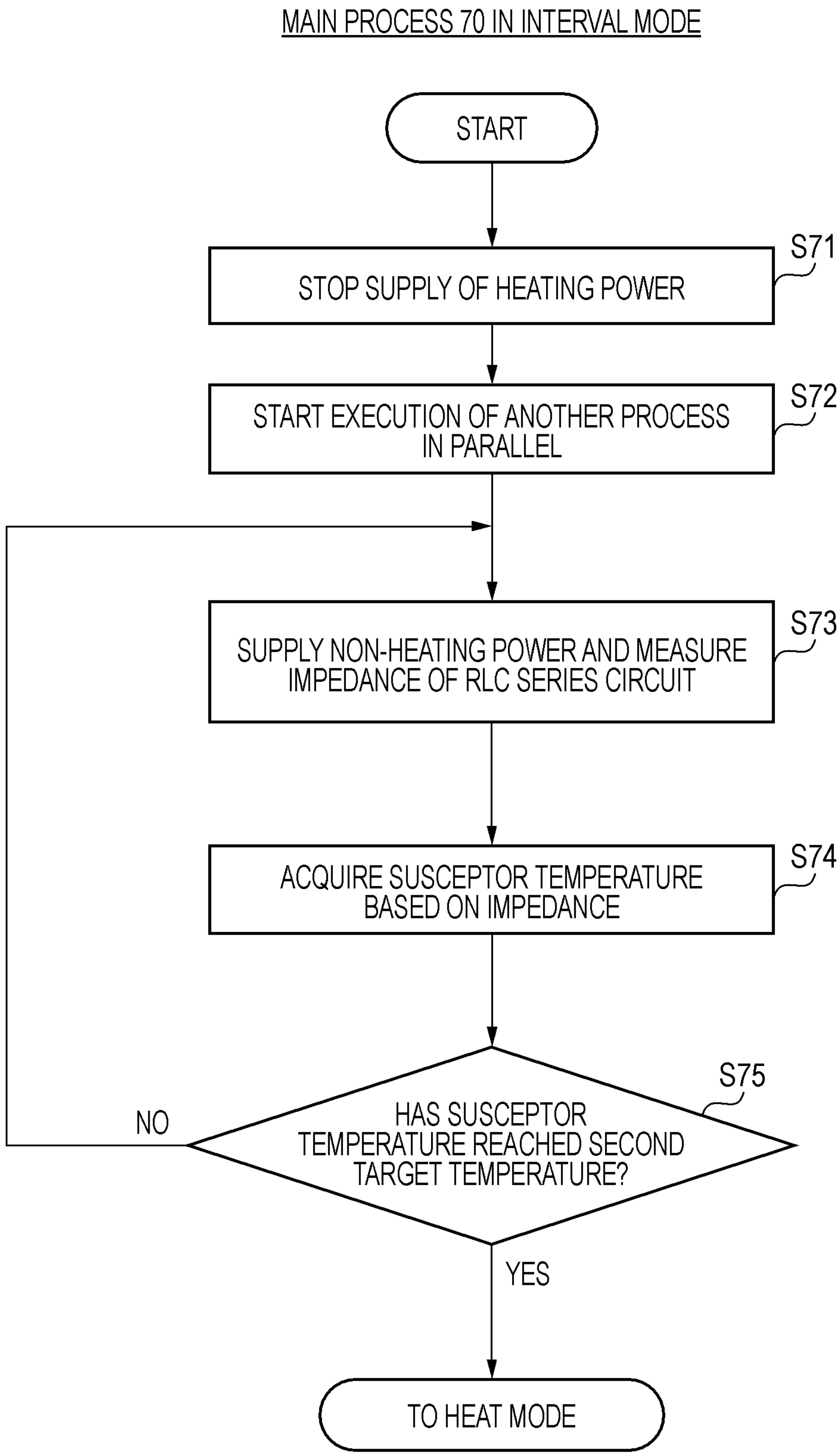
MAIN PROCESS 70 IN INTERVAL MODE
START
STOP SUPPLY OF HEATING POWER
S71
START EXECUTION OF ANOTHER PROCESS IN PARALLEL
S72
SUPPLY NON-HEATING POWER AND MEASURE IMPEDANCE OF RLC SERIES CIRCUIT
S73
ACQUIRE SUSCEPTOR TEMPERATURE BASED ON IMPEDANCE
S74
HAS SUSCEPTOR TEMPERATURE REACHED SECOND TARGET TEMPERATURE?
S75
NO
YES
TO HEAT MODE

FIG. 20

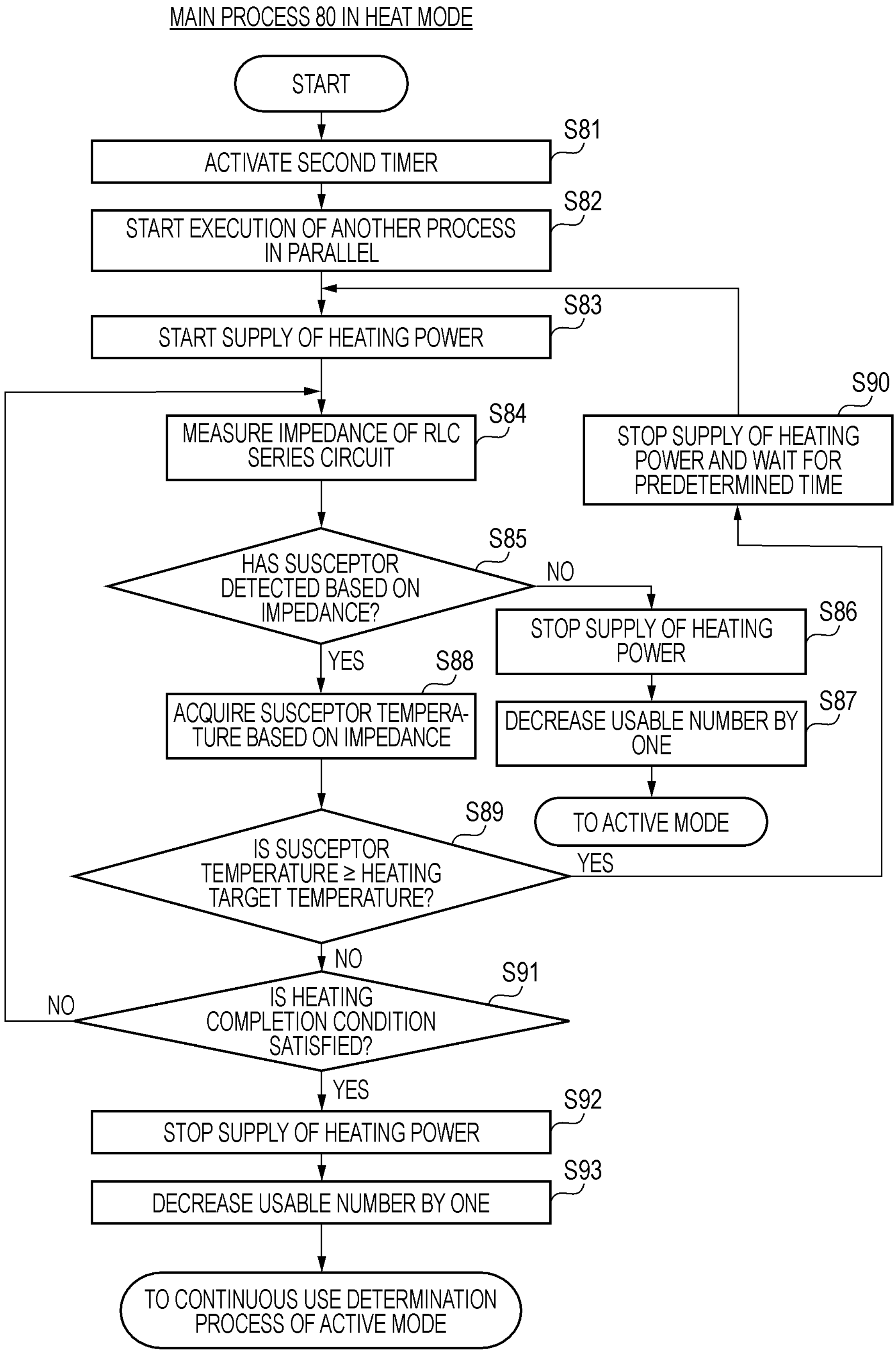
MAIN PROCESS 80 IN HEAT MODE
START
S81
ACTIVATE SECOND TIMER
S82
START EXECUTION OF ANOTHER PROCESS IN PARALLEL
S83
START SUPPLY OF HEATING POWER
S84
MEASURE IMPEDANCE OF RLC SERIES CIRCUIT
S85
HAS SUSCEPTOR DETECTED BASED ON IMPEDANCE?
NO
S86
STOP SUPPLY OF HEATING POWER
S87
DECREASE USABLE NUMBER BY ONE
TO ACTIVE MODE
YES
S88
ACQUIRE SUSCEPTOR TEMPERATURE BASED ON IMPEDANCE
S89
IS SUSCEPTOR TEMPERATURE ≥ HEATING TARGET TEMPERATURE?
YES
S90
STOP SUPPLY OF HEATING POWER AND WAIT FOR PREDETERMINED TIME
NO
S91
IS HEATING COMPLETION CONDITION SATISFIED?
NO
YES
S92
STOP SUPPLY OF HEATING POWER
S93
DECREASE USABLE NUMBER BY ONE
TO CONTINUOUS USE DETERMINATION PROCESS OF ACTIVE MODE

FIG. 21

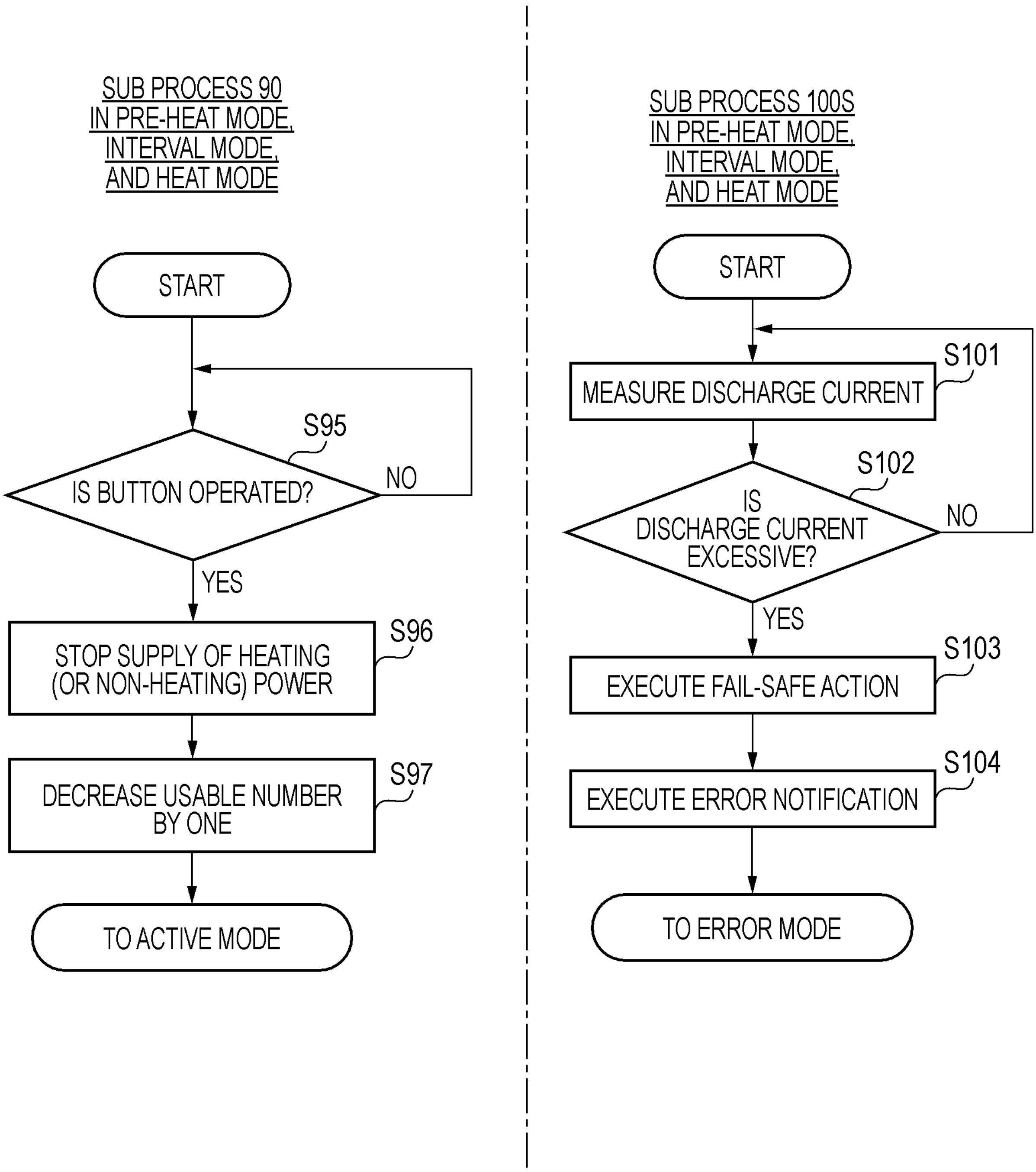
SUB PROCESS 90
IN PRE-HEAT MODE,
INTERVAL MODE,
AND HEAT MODE
START
S95
IS BUTTON OPERATED?
NO
YES
S96
STOP SUPPLY OF HEATING
(OR NON-HEATING) POWER
S97
DECREASE USABLE NUMBER
BY ONE
TO ACTIVE MODE
SUB PROCESS 100S
IN PRE-HEAT MODE,
INTERVAL MODE,
AND HEAT MODE
START
S101
MEASURE DISCHARGE CURRENT
S102
IS
DISCHARGE CURRENT
EXCESSIVE?
NO
YES
S103
EXECUTE FAIL-SAFE ACTION
S104
EXECUTE ERROR NOTIFICATION
TO ERROR MODE

FIG. 22

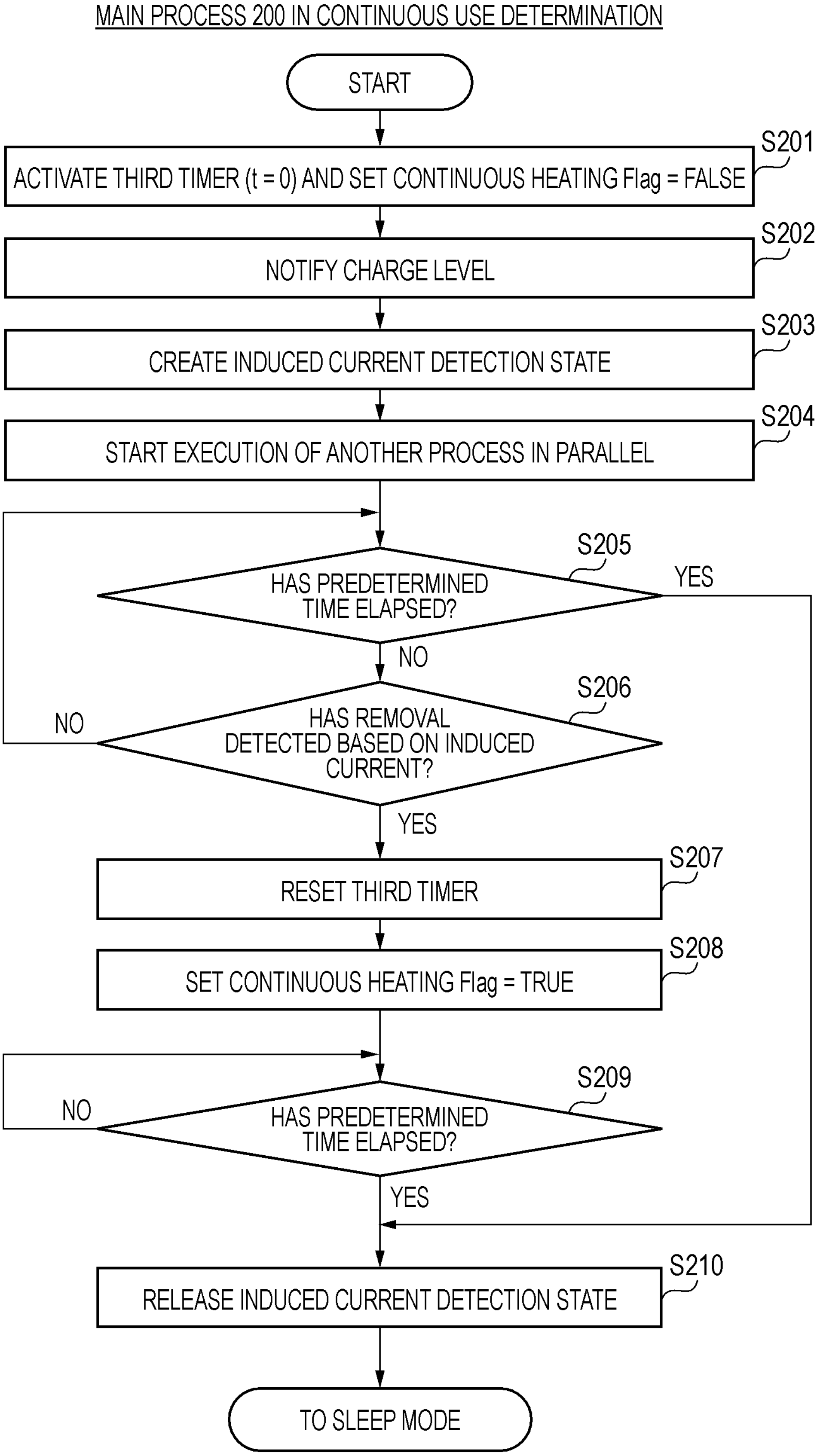
MAIN PROCESS 200 IN CONTINUOUS USE DETERMINATION
START
S201
ACTIVATE THIRD TIMER (t = 0) AND SET CONTINUOUS HEATING Flag = FALSE
S202
NOTIFY CHARGE LEVEL
S203
CREATE INDUCED CURRENT DETECTION STATE
S204
START EXECUTION OF ANOTHER PROCESS IN PARALLEL
S205
HAS PREDETERMINED TIME ELAPSED?
YES
NO
S206
HAS REMOVAL DETECTED BASED ON INDUCED CURRENT?
NO
YES
S207
RESET THIRD TIMER
S208
SET CONTINUOUS HEATING Flag = TRUE
S209
HAS PREDETERMINED TIME ELAPSED?
NO
YES
S210
RELEASE INDUCED CURRENT DETECTION STATE
TO SLEEP MODE

FIG. 23

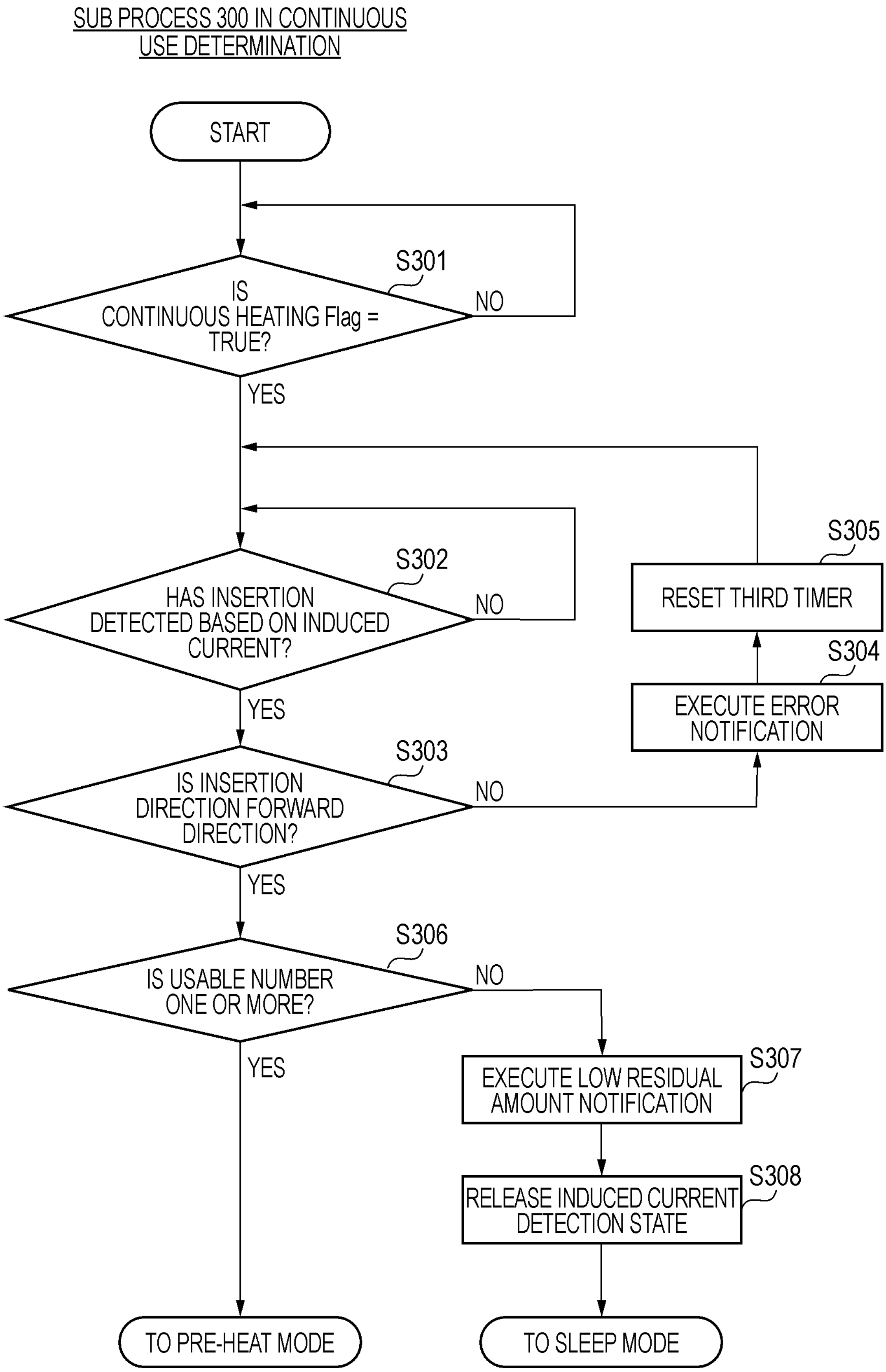
SUB PROCESS 300 IN CONTINUOUS USE DETERMINATION
START
S301
IS CONTINUOUS HEATING Flag = TRUE?
NO
YES
S302
HAS INSERTION DETECTED BASED ON INDUCED CURRENT?
NO
YES
S303
IS INSERTION DIRECTION FORWARD DIRECTION?
NO
YES
S304
EXECUTE ERROR NOTIFICATION
S305
RESET THIRD TIMER
S306
IS USABLE NUMBER ONE OR MORE?
NO
YES
S307
EXECUTE LOW RESIDUAL AMOUNT NOTIFICATION
S308
RELEASE INDUCED CURRENT DETECTION STATE
TO PRE-HEAT MODE
TO SLEEP MODE

FIG. 24

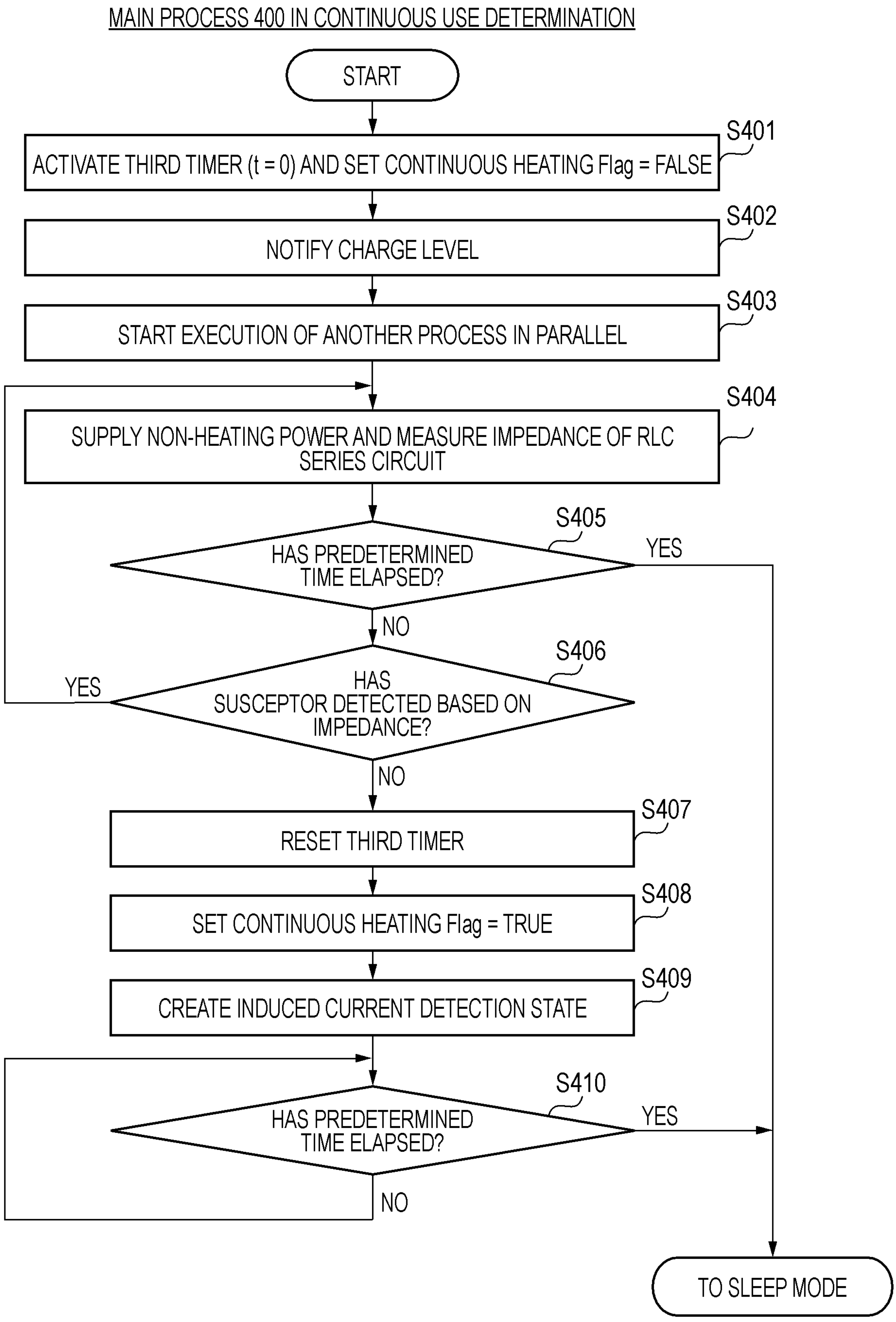
MAIN PROCESS 400 IN CONTINUOUS USE DETERMINATION
START
S401
ACTIVATE THIRD TIMER (t = 0) AND SET CONTINUOUS HEATING Flag = FALSE
S402
NOTIFY CHARGE LEVEL
S403
START EXECUTION OF ANOTHER PROCESS IN PARALLEL
S404
SUPPLY NON-HEATING POWER AND MEASURE IMPEDANCE OF RLC SERIES CIRCUIT
S405
HAS PREDETERMINED TIME ELAPSED?
YES
NO
S406
HAS SUSCEPTOR DETECTED BASED ON IMPEDANCE?
YES
NO
S407
RESET THIRD TIMER
S408
SET CONTINUOUS HEATING Flag = TRUE
S409
CREATE INDUCED CURRENT DETECTION STATE
S410
HAS PREDETERMINED TIME ELAPSED?
YES
NO
TO SLEEP MODE

## INTERNATIONAL SEARCH REPORT

International application No.
PCT/JP2021/026033

A. CLASSIFICATION OF SUBJECT MATTER
A24F 40/465(2020.01)i; A24F 40/53(2020.01)i
FI: A24F40/53; A24F40/465

According to International Patent Classification (IPC) or to both national classification and IPC

B. FIELDS SEARCHED

Minimum documentation searched (classification system followed by classification symbols)
A24F40/465; A24F40/53

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | JP 2021-509806 A (KT & G CORPORATION) 08 April 2021 (2021-04-08) paragraphs [0051], [0060]-[0068], fig. 1-4 | 1-3, 9, 14-15<br>4-8, 10-13, 16 |
| Y | KR 10-2012-0000164 A (CUCKOO ELECTRONICS CO., LTD.) 02 January 2012 (2012-01-02) paragraphs [0030]-[0031], [0040] | 1-3, 9, 14-15 |
| Y | JP 2017-73248 A (TOSHIBA MITSUBISHI-ELECTRIC IND SYSTEM CORP) 13 April 2017 (2017-04-13) paragraphs [0023], [0028], [0064], fig. 1 | 1-3, 9, 14-15 |

☐ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 30 August 2021 (30.08.2021) | 07 September 2021 (07.09.2021) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**
Information on patent family members

International application No.
PCT/JP2021/026033

| Patent Documents referred in the Report | Publication Date | Patent Family | Publication Date |
|---|---|---|---|
| JP 2021-509806 A | 08 Apr. 2021 | US 2021/0007393 A1 paragraphs [0078], [0087]-[0095], fig. 1-4<br>WO 2020/105896 A1<br>EP 3818881 A1<br>KR 10-2020-0061233 A<br>CN 111511233 A | |
| KR 10-2012-0000164 A | 02 Jan. 2012 | (Family: none) | |
| JP 2017-73248 A | 13 Apr. 2017 | CN 106561067 A<br>KR 10-2017-0041112 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 6623175 B
- JP 6077145 B
- JP 6653260 B